(19) Europäisches Patentamt
European Patent Office
Office européen des brevets

(11) **EP 4 725 694 A1**

(12) **EUROPEAN PATENT APPLICATION**
published in accordance with Art. 153(4) EPC

(43) Date of publication:
**15.04.2026 Bulletin 2026/16**

(21) Application number: **23940784.4**

(22) Date of filing: **29.09.2023**

(51) International Patent Classification (IPC):
*B32B 27/32* (2006.01)     *B32B 27/00* (2006.01)
*B65D 35/10* (2006.01)     *B65D 65/40* (2006.01)
*C08J 5/18* (2006.01)

(52) Cooperative Patent Classification (CPC):
**B32B 27/00; B32B 27/32; B65D 35/10;**
**B65D 65/40; C08J 5/18**

(86) International application number:
**PCT/JP2023/035760**

(87) International publication number:
**WO 2024/252688 (12.12.2024 Gazette 2024/50)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  07.06.2023  JP 2023094316
07.06.2023  JP 2023094321
07.06.2023  JP 2023094328
07.06.2023  JP 2023094339
01.08.2023  JP 2023125863
01.08.2023  JP 2023125853
01.08.2023  JP 2023125858

31.08.2023  JP 2023141778
31.08.2023  JP 2023141803
31.08.2023  JP 2023141788
31.08.2023  JP 2023141812

(71) Applicant: **Dai Nippon Printing Co., Ltd.**
**Tokyo 162-8001 (JP)**

(72) Inventor: **UEKI, Takayuki**
**Tokyo 162-8001 (JP)**

(74) Representative: **Müller-Boré & Partner**
**Patentanwälte PartG mbB**
**Friedenheimer Brücke 21**
**80639 München (DE)**

(54) **STRETCHED BASE MATERIAL, PRINTING BASE MATERIAL, BARRIER BASE MATERIAL, LAMINATE, AND PACKAGING CONTAINER**

(57)     A stretched base material includes at least a first surface resin layer containing at least one gas barrier resin as its main component, at least one polyolefin intermediate layer containing a polyolefin as its main component, and a second surface resin layer containing at least one gas barrier resin as its main component in this order.

Fig. 1A

**Description**

Cross-Reference to Related Applications

The present application claims priority based on Patent Application 2023-094316, Patent Application 2023-094328, Patent Application 2023-094321, and Patent Application 2023-094339, each filed June 7, 2023, Patent Application 2023-125863, Patent Application 2023-125853, and Patent Application 2023-125858, each filed August 1, 2023, and Patent Application 2023-141778, Patent Application 2023-141788, Patent Application 2023-141803, and Patent Application 2023-141812, each filed August 31, 2023 (all are Japanese patent applications), the disclosure of which is hereby incorporated as part of the present description by reference in their entirety.

Technical Field

The present disclosure relates to a stretched base material, a printing base material, a barrier base material, a laminate, and a packaging container.

Background Art

To keep liquids, powders, and other contents contained, packaging containers are used. Packaging containers are produced using laminates that include a base material and a heat-sealing layer (see, for example, PTL 1). For example, oriented polypropylene films are used as base materials because they are superior in strength and heat resistance.

Citation List

Patent Literature

PTL 1: Japanese Unexamined Patent Application Publication No. 2020-55156

Summary of Invention

Technical Problem

Depending on the type of contents, packaging containers are required to have gas barrier properties. Oriented polypropylene films typically lack high gas barrier properties. An object of the present disclosure is to provide a polyolefin-based stretched base material superior in gas barrier properties.

Solution to Problem

A form of a stretched base material according to the present disclosure includes at least a first surface resin layer containing at least one gas barrier resin as a main component thereof, at least one polyolefin intermediate layer containing a polyolefin as a main component thereof, and a second surface resin layer containing at least one gas barrier resin as a main component thereof in this order.

Advantageous Effects of Invention

According to the present disclosure, a polyolefin-based stretched base material superior in gas barrier properties can be provided. For example, a barrier base material including a vapor deposition film on this polyolefin-based stretched base material is even better in terms of gas barrier properties. The stretched base material and the barrier base material are useful as, for example, base materials in packaging materials for producing packaging containers superior in gas barrier properties.

Brief Description of Drawings

[Fig. 1A] Fig. 1A is a schematic cross-sectional view illustrating an embodiment of a barrier base material.

[Fig. 1B] Fig. 1B is a schematic cross-sectional view illustrating an embodiment of a barrier base material.

[Fig. 2A] Fig. 2A is a schematic cross-sectional view illustrating an embodiment of a barrier base material.

[Fig. 2B] Fig. 2B is a schematic cross-sectional view illustrating an embodiment of a barrier base material.

[Fig. 2C] Fig. 2C is a schematic cross-sectional view illustrating an embodiment of a barrier base material.

[Fig. 2D] Fig. 2D is a schematic cross-sectional view illustrating an embodiment of a barrier base material.

[Fig. 2E] Fig. 2E is a schematic cross-sectional view illustrating an embodiment of a barrier base material.

[Fig. 3A] Fig. 3A is a schematic cross-sectional view illustrating an embodiment of a barrier base material.

[Fig. 3B] Fig. 3B is a schematic cross-sectional view illustrating an embodiment of a barrier base material.

[Fig. 3C] Fig. 3C is a schematic cross-sectional view illustrating an embodiment of a barrier base material.

[Fig. 3D] Fig. 3D is a schematic cross-sectional view illustrating an embodiment of a barrier base material.

[Fig. 3E] Fig. 3E is a schematic cross-sectional view illustrating an embodiment of a barrier base material.

[Fig. 4A] Fig. 4A is a schematic cross-sectional view illustrating an embodiment of a laminate.

[Fig. 4B] Fig. 4B is a schematic cross-sectional view illustrating an embodiment of a laminate.

[Fig. 5A] Fig. 5A is a schematic cross-sectional view illustrating an embodiment of a laminate.

[Fig. 5B] Fig. 5B is a schematic cross-sectional view illustrating an embodiment of a laminate.

[Fig. 6A] Fig. 6A is a schematic cross-sectional view illustrating an embodiment of a laminate.

[Fig. 6B] Fig. 6B is a schematic cross-sectional view illustrating an embodiment of a laminate.

[Fig. 7] Fig. 7 is a perspective view illustrating an embodiment of a tube container that includes a tube container body and a cap, the tube container body including a laminate.

[Fig. 8] Fig. 8 is an A-A cross-sectional view of Fig. 7.

[Fig. 9] Fig. 9 is a schematic cross-sectional view illustrating an embodiment of a biaxially oriented film.

[Fig. 10] Fig. 10 is a schematic cross-sectional view illustrating an embodiment of a biaxially oriented film.

[Fig. 11] Fig. 11 is a schematic cross-sectional view illustrating an embodiment of a biaxially oriented film.

Description of Embodiments

Embodiments of the present disclosure will now be described in detail. The present disclosure can be implemented in numerous different forms and is not to be construed as limited to the descriptions in the embodiments illustrated below. The drawings may be presented schematically, for example in terms of the width, thickness, and shape of layers, compared to the embodiments to make the descriptions clearer, but they are merely examples and do not limit the interpretation of the present disclosure. In the present description and drawings, elements similar to those already described in relation to a previously mentioned drawing may be assigned the same reference sign, and their detailed descriptions may be omitted as appropriate.

When multiple candidate upper limits and multiple candidate lower limits are listed for a certain parameter herein, the numerical range of that parameter may be constituted by pairing any one candidate upper limit with any one candidate lower limit. Examples of such parameters include physical characteristics, the percentages of components, and the thicknesses of layers. As an example, the following statement is described: "Parameter B is preferably A1 or more, more preferably A2 or more, even more preferably A3 or more. Parameter B is preferably A4 or less, more preferably A5 or less, even more preferably A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

As used herein, polypropylene refers to a propylene homopolymer or a polymer in which the percentage of propylene-derived constituent units in all repeating constituent units is higher than the percentage of constituent units derived from any comonomer. In this polymer, the percentage of propylene-derived constituent units may be, for example, 50 mol% or more, may be 60 mol% or more, may be 70 mol% or more, may be 80 mol% or more, or may be 90 mol% or more, in all repeating constituent units. This percentage is measured by NMR.

Polypropylene may be any of a propylene homopolymer (homopolypropylene), a propylene random copolymer (random polypropylene), such as a propylene-$\alpha$-olefin random copolymer, or a propylene block copolymer (block polypropylene), such as a propylene-$\alpha$-olefin block copolymer, or may be a mixture of two or more types selected from these. Polypropylene may be biomass-derived polypropylene or mechanically recycled or chemically recycled polypropylene for reduced environmental impact. Examples of $\alpha$-olefins include $\alpha$-olefins containing 2 or more and 20 or fewer carbons excluding propylene. Specific examples include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene, with ethylene, 1-butene, 1-pentene, and 1-hexene being preferred.

Herein, the density of polypropylene is, for example, 0.88 g/cm$^3$ or more and 0.92 g/cm$^3$ or less. Herein, the density of polypropylene is measured according to method D (density gradient column method, 23°C) in JIS K7112: 1999.

As used herein, polyethylene refers to a polymer in which the percentage of ethylene-derived constituent units in all repeating constituent units is more than 50 mol%. In this polymer, the percentage of ethylene-derived constituent units is preferably 70 mol% or more, more preferably 80 mol% or more, even more preferably 90 mol% or more, particularly preferably 95 mol% or more. This percentage is measured by NMR.

Herein, polyethylene may be a homopolymer of ethylene or may be a copolymer of ethylene and an ethylenically unsaturated monomer other than ethylene. Examples of ethylenically unsaturated monomers other than ethylene include $\alpha$-olefins containing 3 or more and 20 or fewer carbons, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene, vinyl monomers, such as vinyl acetate and vinyl propionate, and (meth)acrylates, such as methyl (meth)acrylate and ethyl (meth)acrylate.

Herein, examples of polyethylene include high-density polyethylene, medium-density polyethylene, low-density polyethylene, and linear low-density polyethylene, as well as ethylene-vinyl acetate copolymers and ethylene-(meth) acrylate copolymers. Polyethylene may be biomass-derived polyethylene or mechanically recycled or chemically recycled polyethylene for reduced environmental impact.

Herein, the densities of types of polyethylene are as follows.

The density of high-density polyethylene preferably exceeds 0.945 g/cm$^3$. The upper limit to the density of high-density polyethylene is, for example, 0.965 g/cm$^3$, preferably 0.960 g/cm$^3$. The density of medium-density polyethylene is preferably more than 0.930 g/cm$^3$ and 0.945 g/cm$^3$ or less. The density of low-density polyethylene is preferably 0.860 g/cm$^3$ or more and 0.930 g/cm$^3$ or less, more preferably 0.900 g/cm$^3$ or more and 0.930 g/cm$^3$ or less. The density of linear low-density polyethylene is preferably 0.860 g/cm$^3$ or more and 0.930 g/cm$^3$ or less, more preferably 0.900 g/cm$^3$ or more and 0.930 g/cm$^3$ or less. Herein, the density of polyethylene is measured according to method D (density gradient column method, 23°C) in JIS K7112: 1999.

Low-density polyethylene is a type of polyethylene obtained by, for example, polymerizing ethylene by high-pressure polymerization (high-pressure low-density polyethylene). Linear low-density polyethylene is a type of polyethylene obtained by polymerizing ethylene and a small amount of $\alpha$-olefin using a polymerization process employing a multi-site catalyst, such as a Ziegler-Natta catalyst, or a single-site catalyst, such as a metallocene catalyst.

Types of polyethylene with varying density or branching can be obtained by selecting the polymerization method as appropriate. For example, it is preferred to perform the polymerization through a single-step process or a multistep process, including two or more steps, by any of the gas-phase polymerization, slurry polymerization, solution polymerization, and high-pressure ion polymerization methods using a multi-site catalyst, such as a Ziegler-Natta catalyst, or a single-site catalyst, such as a metallocene catalyst.

Herein, the melt flow rate (MFR) of a polyolefin, such as polypropylene or polyethylene, is preferably 0.1 g/10 minutes or more, more preferably 1 g/10 minutes or more, even more preferably 1.5 g/10 minutes or more, and preferably is 50 g/10 minutes or less, more preferably 30 g/10 minutes or less, even more preferably 10 g/10 minutes or less, particularly preferably 5 g/10 minutes or less, for film formation and workability reasons. For example, the melt flow rate is 0.1 g/10 minutes or more and 50 g/10 minutes or less. Herein, the MFR of a polyolefin is measured by method A under the condition of a load of 2.16 kg according to JIS K7210-1: 2014. The temperature for the measurement of the MFR is set according to, for example, the melting point of the polyolefin. In the case of polypropylene, the measurement temperature is 230°C, and in the case of polyethylene, the measurement temperature is 190°C.

In each category of components that appear in the following description herein (e.g., polypropylene, polyethylene, and other polyolefins, α-olefins, gas barrier resins and other resin materials, adhesive resins, and additives), one component in that category may be used, or two or more may be used.

A "film" and a "sheet" may be mentioned herein, but a "film" and a "sheet" are not differentiated from each other solely based on the difference in nominal designation.

As used herein, "multilayer" means that two or more layers are included.

As used herein, the "main component" in a given layer refers to the component whose percentage in that layer is more than 50% by mass, preferably 60% by mass or more, more preferably 70% by mass or more, even more preferably 80% by mass or more.

[Stretched Base Material]

A stretched base material according to a first aspect of the present disclosure includes at least:

a first surface resin layer containing a gas barrier resin as its main component;
a polyolefin intermediate layer containing a polyolefin as its main component; and
a second surface resin layer containing a gas barrier resin as its main component

in this order in the thickness direction.

Hereinafter, "include (layers) in this order in the thickness direction" will be simply written as "include (layers) in this order."

The stretched base material according to the first aspect is, in an embodiment, a polypropylene-based stretched base material and includes at least:

a first surface resin layer containing a gas barrier resin as its main component;

a polypropylene intermediate layer containing polypropylene as its main component; and

a second surface resin layer containing a gas barrier resin as its main component

in this order.

The stretched base material according to the first aspect is, in an embodiment, a polyethylene-based stretched base material and includes at least:

a first surface resin layer containing a gas barrier resin as its main component;
a polyethylene intermediate layer containing polyethylene as its main component; and
a second surface resin layer containing a gas barrier resin as its main component

in this order.

The stretched base material according to the first aspect includes, in an embodiment, at least:

a first surface resin layer containing a gas barrier resin as its main component;
one or two or more polyethylene intermediate layers each containing at least one type of polyethylene as its main component; and
a second surface resin layer containing a gas barrier resin as its main component

in this order, and the polyethylene in at least one of the polyethylene intermediate layers includes at least one type of polyethylene selected from high-density polyethylene and medium-density polyethylene or has a density of more than 0.930 $g/cm^3$ and 0.960 $g/cm^3$ or less.

A stretched base material according to a second aspect of the present disclosure includes at least:

a first surface resin layer containing a polyolefin and an adhesive resin;
a polyolefin intermediate layer containing a polyolefin as its main component; and
a second surface resin layer containing a gas barrier resin as its main component

in this order in the thickness direction.

The stretched base material according to the second aspect is, in an embodiment, a polypropylene-based stretched base material and includes at least:

a first surface resin layer containing polypropylene and an adhesive resin;

a polypropylene intermediate layer containing polypropylene as its main component; and

a second surface resin layer containing a gas barrier resin as its main component

in this order.

The stretched base material according to the second aspect is, in an embodiment, a polyethylene-based stretched base material and includes at least:

a first surface resin layer containing polyethylene and an adhesive resin;

a polyethylene intermediate layer containing polyethylene as its main component; and

a second surface resin layer containing a gas barrier resin as its main component

in this order.

The stretched base material according to the second aspect includes, in an embodiment, at least:

a first surface resin layer containing at least one type of polyethylene and an adhesive resin;

one or two or more polyethylene intermediate layers each containing at least one type of polyethylene as its main component; and

a second surface resin layer containing a gas barrier resin as its main component

in this order, and the polyethylene in at least one layer selected from the first surface resin layer and the polyethylene intermediate layers includes at least one type of polyethylene selected from high-density polyethylene and medium-density polyethylene or has a density of more than 0.930 $g/cm^3$ and 0.960 $g/cm^3$ or less.

According to the first and second aspects, a polyolefin-based stretched base material superior in gas barrier properties can be provided. For example, a barrier base material including a vapor deposition film on this polyolefin-based stretched base material is even better in terms of gas barrier properties. The stretched base material and the barrier base material are useful as, for example, base materials in packaging materials for producing packaging containers superior in gas barrier properties.

A stretched base material according to a third aspect of the present disclosure includes at least:

a first surface resin layer containing a polyolefin and an adhesive resin;
a polyolefin intermediate layer containing a polyolefin as its main component; and
a second surface resin layer containing a polyolefin and an adhesive resin

in this order in the thickness direction.

The stretched base material according to the third aspect is, in an embodiment, a polypropylene-based stretched base material and includes at least:

a first surface resin layer containing polypropylene and an adhesive resin;

a polypropylene intermediate layer containing polypropylene as its main component; and

a second surface resin layer containing polypropylene and an adhesive resin

in this order.

The stretched base material according to the third aspect is, in an embodiment, a polyethylene-based stretched base material and includes at least:

a first surface resin layer containing polyethylene and an adhesive resin;
a polyethylene intermediate layer containing polyethylene as its main component; and
a second surface resin layer containing polyethylene and an adhesive resin

in this order.

The stretched base material according to the third aspect includes, in an embodiment, at least:

a first surface resin layer containing at least one type of polyethylene and an adhesive resin;

one or two or more polyethylene intermediate layers each containing at least one type of polyethylene as its main component; and

a second surface resin layer containing at least one type of polyethylene and an adhesive resin

in this order, and the polyethylene in at least one layer selected from the first surface resin layer, the polyethylene intermediate layers, and the second surface resin layer includes at least one type of polyethylene selected from high-density polyethylene and medium-density polyethylene or has a density of more than $0.930 \, g/cm^3$ and $0.960 \, g/cm^3$ or less.

According to the third aspect, a polyolefin-based stretched base material suitable for use in producing a barrier base material superior in gas barrier properties can be provided. For example, a barrier base material including a vapor deposition film on this polyolefin-based stretched base material is superior in gas barrier properties. The stretched base material and the barrier base material are useful as, for example, base materials in packaging materials for producing packaging containers superior in gas barrier properties.

A stretched base material according to a fourth aspect of the present disclosure includes at least:

a first surface resin layer containing a polyolefin as its main component;

a polyolefin intermediate layer containing a polyolefin as its main component; and

a second surface resin layer containing a gas barrier resin as its main component or containing a polyolefin and an adhesive resin

in this order in the thickness direction.

The stretched base material according to the fourth aspect in which the second surface resin layer contains a gas barrier resin as its main component is also referred to as "the stretched base material according to the fourth-A aspect." The stretched base material according to the fourth aspect in which the second surface resin layer contains a polyolefin and an adhesive resin is also referred to as "the stretched base material according to the fourth-B aspect."

The stretched base material according to the fourth-A aspect is, in an embodiment, a polypropylene-based stretched base material and includes at least:

a first surface resin layer containing polypropylene as its main component;

a polypropylene intermediate layer containing polypropylene as its main component; and

a second surface resin layer containing a gas barrier resin as its main component

in this order.

The stretched base material according to the fourth-A aspect is, in an embodiment, a polyethylene-based stretched base material and includes at least:

a first surface resin layer containing polyethylene as its main component;

a polyethylene intermediate layer containing polyethylene as its main component; and

a second surface resin layer containing a gas barrier resin as its main component

in this order.

The stretched base material according to the fourth-B aspect is, in an embodiment, a polypropylene-based stretched base material and includes at least:

a first surface resin layer containing polypropylene as its main component;

a polypropylene intermediate layer containing polypropylene as its main component; and

a second surface resin layer containing polypropylene and an adhesive resin in this order.

The stretched base material according to the fourth-B aspect is, in an embodiment, a polyethylene-based stretched base material and includes at least:

a first surface resin layer containing polyethylene as its main component;

a polyethylene intermediate layer containing polyethylene as its main component; and

a second surface resin layer containing polyethylene and an adhesive resin

in this order.

The stretched base material according to the fourth aspect includes, in an embodiment, at least:

a first surface resin layer containing at least one type of polyethylene as its main component;

one or two or more polyethylene intermediate layers each containing at least one type of polyethylene as its main component; and

a second surface resin layer containing a gas barrier resin as its main component or containing at least one type of polyethylene and an adhesive resin

in this order, and the polyethylene in at least one layer selected from the first surface resin layer, the polyethylene intermediate layers, and the second surface resin layer includes at least one type of polyethylene selected from high-density polyethylene and medium-density polyethylene or has a density of more than $0.930 \, g/cm^3$ and $0.960 \, g/cm^3$ or less.

According to the fourth aspect, a polyolefin-based stretched base material suitable for use in producing a barrier base material superior in gas barrier properties can be provided. For example, a barrier base material including a vapor deposition film on the surface of the second surface resin layer of this polyolefin-based stretched base material is superior in gas barrier properties. The stretched base material and the barrier base material are useful as, for example, base materials in packaging materials for producing packaging containers superior in gas barrier properties.

A stretched base material according to a fifth aspect of the present disclosure is a biaxially oriented polyethylene film that includes a polyethylene layer containing at least one type of polyethylene selected from high-density polyethylene and medium-density polyethylene. The polyethylene layer in the fifth aspect is hereinafter also referred to as "polyethylene layer (1)."

A stretched base material according to a sixth aspect of the present disclosure is a biaxially oriented polyethylene film that includes a polyethylene layer containing polyethylene as its main component, and the polyethylene contained in the polyethylene layer has a density of more than $0.930 \, g/cm^3$ and $0.960 \, g/cm^3$ or less. The polyethylene layer in the sixth aspect is hereinafter also referred to as "polyethylene layer (2)."

Known biaxially oriented polyethylene films are produced using polyethylene with a low density for suitable biaxial orientation. The heat resistance of such biaxially oriented polyethylene films, however, tends to be insufficient. According to the fifth and sixth aspects, a biaxially oriented polyethylene film superior in heat resistance can be provided. This biaxially oriented polyethylene film is useful as, for example, a base material in packaging materials for producing packaging containers.

The percentage of the polyethylene in these biaxially oriented polyethylene films is preferably more than 50% by mass, more preferably 60% by mass or more, even more preferably 70% by mass or more, still more preferably 80% by mass or more, particularly preferably 85% by mass or more or 90% by mass or more. A laminate (or packaging container) that includes such a biaxially oriented polyethylene film is superior in, for example, recyclability.

When a matter common to the stretched base material according to each aspect is described or when the stretched base material according to each aspect is not specifically distinguished, the term "stretched base material" may simply be used.

The stretched base material has a first surface and a second surface opposite the first surface. In an embodiment, the first surface resin layer constitutes the first surface, and the second surface resin layer constitutes the second surface.

The stretched base material has a multilayer structure including three or more layers. The number layers in the stretched base material is three or more, preferably nine or fewer, more preferably seven or fewer. For example, the number of layers is three or more and nine or fewer. Specifically, the number of layers in the stretched base material is three, five, seven, or nine. A stretched base material having a multilayer structure is superior in, for example, the balance between gas barrier properties, strength, rigidity, heat resistance, transparency, and printing suitability.

The stretched base material according to each aspect may include two or more polyolefin intermediate layers.

The stretched base material according to the first aspect may further include a first adhesive resin layer between the first surface resin layer and the polyolefin intermediate layer. The stretched base material according to the first aspect may further include a second adhesive resin layer between the polyolefin intermediate layer and the second surface resin layer. The stretched base material according to the first aspect may include the first surface resin layer, a first adhesive resin layer, the polyolefin intermediate layer, a second adhesive resin layer, and the second surface resin layer in this order.

The polypropylene-based stretched base material according to the first aspect may include the first surface resin layer, a first adhesive resin layer, the polypropylene intermediate layer, a second adhesive resin layer, and the second surface resin layer in this order. The polyethylene-based stretched base material according to the first aspect may include the first surface resin layer, a first adhesive resin layer, the polyethylene intermediate layer, a second adhesive resin layer, and the second surface resin layer in this order.

The stretched base material according to the second aspect may further include an adhesive resin layer between the polyolefin intermediate layer and the second surface resin layer. The stretched base material according to the second aspect may include the first surface resin layer, the polyolefin intermediate layer, an adhesive resin layer, and the second surface resin layer in this order.

The stretched base material according to the second aspect may include the first surface resin layer, a first polyolefin layer, a second polyolefin layer, an adhesive resin layer, and the second surface resin layer in this order. The polypropylene-based stretched base material according to the second aspect may include the first surface resin layer, a first polypropylene layer, a second polypropylene layer, an adhesive resin layer, and the second surface resin layer in this order. The polyethylene-based stretched base material according to the second aspect may include the first surface resin layer, a first polyethylene layer, a second polyethylene layer, an adhesive resin layer, and the second surface resin layer in this order. The compositions of the first and second polyolefin layers may be identical to each other or may be different. The thicknesses of the first and second polyolefin layers may be equal to each other or may be different.

The stretched base material according to the third aspect may include the first surface resin layer, a first polyolefin layer, a second polyolefin layer, a third polyolefin layer, and the second surface resin layer in this order. The polypropylene-based stretched base material according to the third aspect may include the first surface resin layer, a first polypropylene layer, a second polypropylene layer, a third polypropylene layer, and the second surface resin layer in this order. The polyethylene-based stretched base material according to the third aspect may include the first surface resin layer, a first polyethylene layer, a second polyethylene layer, a third polyethylene layer, and the second surface resin layer in this order. The compositions of the first to third polyolefin layers may be identical to each other or may be different. The thicknesses of the first to third polyolefin layers may be equal to each other or may be different.

The stretched base material according to the fourth-A aspect may further include an adhesive resin layer between the polyolefin intermediate layer and the second surface resin layer. The stretched base material according to the fourth-A aspect may include the first surface resin layer, the polyolefin intermediate layer, an adhesive resin layer, and the second surface resin layer in this order.

The stretched base material according to the fourth-A aspect may include the first surface resin layer, a first polyolefin layer, a second polyolefin layer, an adhesive resin layer, and the second surface resin layer in this order. The polypropylene-based stretched base material according to the fourth-A aspect may include the first surface resin layer, a first polypropylene layer, a second polypropylene layer, an adhesive resin layer, and the second surface resin layer in this order. The polyethylene-based stretched base material according to the fourth-A aspect may include the first surface resin layer, a first polyethylene layer, a second polyethylene layer, an adhesive resin layer, and the second surface resin layer in this order. The compositions of the first and second polyolefin layers may be identical to each other or may be different. The thicknesses of the first and second polyolefin layers may be equal to each other or may be different.

The stretched base material according to the fourth-B aspect may include the first surface resin layer, a first polyolefin layer, a second polyolefin layer, a third polyolefin layer, and the second surface resin layer in this order. The polypropylene-based stretched base material according to the fourth-B aspect may include the first surface resin layer, a first polypropylene layer, a second polypropylene layer, a third polypropylene layer, and the second surface resin layer in this order. The polyethylene-based stretched base material according to the fourth-B aspect may include the first surface resin layer, a first polyethylene layer, a second polyethylene layer, a third polyethylene layer, and the second surface resin layer in this order. The compositions of the first to third polyolefin layers may be identical to each other or may be different. The thicknesses of the first to third polyolefin layers may be equal to each other or may be different.

In the stretched base materials according to the first to third aspects, the compositions of the first and second surface resin layers may be identical to each other or may be different. The thicknesses of the first and second surface resin layers may be equal to each other or may be different. The compositions of the first and second adhesive resin layers may be identical to each other or may be different. The thicknesses of the first and second adhesive resin layers may be equal to each other or may be different.

In the stretched base material according to each aspect, the ratio of the thickness of the second surface resin layer to the thickness of the first surface resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched base material and reduced occurrence of curling.

The percentage of the polyolefins (e.g., polypropylene or polyethylene) in the stretched base material is preferably more than 50% by mass, more preferably 60% by mass or more, even more preferably 70% by mass or more, still more preferably 80% by mass or more, particularly preferably 85% by mass or more or 90% by mass or more. A laminate (or packaging container) that includes such a stretched base material is superior in, for example, recyclability.

A stretched base material is a base material that has undergone stretching treatment. Through this, the strength, rigidity, heat resistance, transparency, and printing suitability of the base material, for example, can be improved. The stretching treatment may be uniaxial orientation or may be biaxial orientation. The biaxial orientation may be sequential biaxial orientation or may be simultaneous biaxial orientation. The biaxial orientation may be sequential biaxial orientation by, for example, the tenter frame method, or may be simultaneous biaxial orientation. A biaxially oriented polyethylene film is a polyethylene film that has undergone biaxial orientation treatment. Through this, the strength, rigidity, heat resistance, transparency, and printing suitability of the polyethylene film, for example, can be improved. The stretch ratio when stretching is performed in the machine direction (the direction of flow of the base material, or the MD direction) is preferably 2 or greater, more preferably 3 or greater, and preferably is 15 or less, more preferably 10 or less. For example, this stretch ratio is 2 or greater and 15 or less. The stretch ratio when stretching is performed in the transverse direction (the direction perpendicular to the MD direction, or the TD direction) is preferably 2 or greater, more preferably 3 or greater, and preferably is 15 or less, more preferably 10 or less. For example, this stretch ratio is 2 or greater and 15 or less.

The stretched base material is, for example, a biaxially oriented base material, specifically a base material biaxially oriented in the MD direction and the TD direction. The stretched base material is, for example, a uniaxially oriented base material, specifically a base material uniaxially oriented in the MD direction. The biaxially oriented polyethylene film is, specifically, a polyethylene film biaxially oriented in the MD direction and the TD direction.

The thickness of the stretched base material is preferably 5 $\mu$m or more, more preferably 10 $\mu$m or more, even more preferably 15 $\mu$m or more, and preferably is 200 $\mu$m or less, more preferably 100 $\mu$m or less, even more preferably 50 $\mu$m or less, particularly preferably 30 $\mu$m or less. For example, the thickness is 5 $\mu$m or more and 200 $\mu$m or less. A stretched base material having a thickness equal to or greater than the lower limits is superior in, for example, strength, rigidity, and heat resistance. A stretched base material having a thickness equal to or smaller than the upper limits is superior in, for example, workability. Herein, the thickness of a base material or each layer is the average of thicknesses at ten points measured based on a scanning electron microscope (SEM) image obtained through an SEM observation of a vertical cross-section with respect to the surface of the base material.

The stretched base material can be produced by, for example, preparing monolayer films or a laminate film by shaping the materials constituting the individual layers into films and then stretching the film(s). Examples of methods for film formation include T-die casting and inflation, with T-die casting being preferred from the viewpoint of productivity. For example, by feeding the materials for forming the individual layers to their respective extruders and performing coextrusion T-die casting molding, the film(s) can be obtained.

The stretched base material is, in an embodiment, a stretched coextruded resin film. The biaxially oriented polyethylene film is, in an embodiment, a biaxially oriented coextruded resin film.

The stretched base material is, in an embodiment, a resin film obtained by preparing a laminate film by subjecting materials constituting the first surface resin layer, materials constituting the polyolefin intermediate layer, materials constituting the adhesive resin layer(s) if the stretched base material includes adhesive resin layer(s), and materials constituting the second surface resin layer to coextrusion film formation, and then subjecting this laminate film to stretching treatment. The biaxially oriented polyethylene film is, in an embodiment, a resin film obtained by preparing a laminate film by subjecting materials constituting the first surface resin layer, materials constituting the polyethylene intermediate layer, and materials constituting the second surface resin layer to coextrusion film formation, and then subjecting this laminate film to biaxial orientation treatment.

An embodiment of coextrusion T-die casting will be described below. By feeding the materials for forming the individual layers to their respective extruders and performing coextrusion T-die casting molding, a laminate film can be obtained.

Production examples for stretched base materials according to the first aspect are described. For example, the extrusion temperature for surface resin layers containing an ethylene-vinyl alcohol copolymer is set to 220°C or above and 240°C or below, the extrusion temperature for adhesive resin layers is set to 250°C or above and 270°C or below, and the extrusion temperature for a polypropylene intermediate layer is set to 260°C or above and 280°C or below, at the respective extruders. For example, the extrusion temperature for surface resin layers containing a polyamide, the extrusion temperature for adhesive resin layers, and the extrusion temperature for a polypropylene intermediate layer are each set to 260°C or above and 280°C or below at the respective extruders.

Production examples for stretched base materials according to the first aspect are described. For example, the extrusion temperature for surface resin layers containing an ethylene-vinyl alcohol copolymer, the extrusion temperature for adhesive resin layers, and the extrusion temperature for a polyethylene intermediate layer are each set to 220°C or above and 240°C or below, at the respective extruders. For example, the extrusion temperature for surface resin layers containing a polyamide is set to 260°C or above and 280°C or below, the extrusion temperature for adhesive resin layers is set to 220°C or above and 270°C or below, and the extrusion temperature for a polyethylene intermediate layer is set to 220°C or above and 270°C or below, at the respective extruders.

Production examples for stretched base materials according to the second aspect are described. For example, the extrusion temperature for the first surface resin layer is set to 240°C or above and 260°C or below, the extrusion temperature for a polypropylene intermediate layer is set to 260°C or above and 280°C or below, the extrusion temperature for an adhesive resin layer is set to 250°C or above and 270°C or below, and the extrusion temperature for a second surface resin layer containing an ethylene-vinyl alcohol copolymer is set to 220°C or above and 240°C or below, at the respective extruders. For example, the extrusion temperature for the first surface resin layer is set to 240°C or above and 260°C or below, the extrusion temperature for a polypropylene intermediate layer is set to 260°C or above and 280°C or below, the extrusion temperature for an adhesive resin layer is set to 260°C or above and 280°C or below, and the extrusion temperature for a second surface resin layer containing a polyamide is set to 260°C or above and 280°C or below, at the respective extruders.

Production examples for stretched base materials according to the second aspect are described. For example, the extrusion temperature for the first surface resin layer, the extrusion temperature for a polyethylene intermediate layer, the extrusion temperature for an adhesive resin layer, and the extrusion temperature for a second surface resin layer containing an ethylene-vinyl alcohol copolymer are each set to 220°C or above and 240°C or below at the respective extruders. For example, the extrusion temperature for the first surface resin layer is set to 220°C or above and 240°C or below, the extrusion temperature for a polyethylene intermediate layer is set to 220°C or above and 260°C or below, the extrusion temperature for an adhesive resin layer is set to 220°C or above and 270°C or below, and the extrusion temperature for a second surface resin layer containing a polyamide is set to 260°C or above and 280°C or below, at the respective extruders.

Production examples for stretched base materials according to the third aspect are described. For example, the extrusion temperature for the surface resin layers is set to 240°C or above and 260°C or below, and the extrusion temperature for a polypropylene intermediate layer is set to 260°C or above and 280°C or below, at the respective extruders. For example, the extrusion temperature for the surface resin layers and the extrusion temperature for a polyethylene intermediate layer are each set to 220°C or above and 240°C or below at the respective extruders.

Production examples for stretched base materials according to the fourth-A aspect are described. In the case of a polypropylene-based stretched base material, the extrusion temperature for the first surface resin layer is set to, for example, 260°C or above and 280°C or below, the extrusion temperature for the polypropylene intermediate layer is set to 260°C or above and 280°C or below, the extrusion temperature for an adhesive resin layer is set to 250°C or above and 270°C or below, and the extrusion temperature for a second surface resin layer containing an ethylene-vinyl alcohol copolymer is set to 220°C or above and 240°C or below, at the respective extruders. In the case of a polypropylene-based stretched base material, the extrusion temperature for the first surface resin layer is set to, for example, 260°C or above and 280°C or below, the extrusion temperature for the polypropylene intermediate layer is set to 260°C or above and 280°C or below, the extrusion temperature for an adhesive resin layer is set to 260°C or above and 280°C or below, and the extrusion temperature for a second surface resin layer containing a polyamide is set to 260°C or above and 280°C or below, at the respective extruders.

Production examples for stretched base materials according to the fourth-A aspect are described. In the case of a polyethylene-based stretched base material, the extrusion temperature for the first surface resin layer, the extrusion temperature for the polyethylene intermediate layer, the extrusion temperature for an adhesive resin layer, and the extrusion temperature for a second surface resin layer containing an ethylene-vinyl alcohol copolymer are each set to, for example, 220°C or above and 240°C or below at the respective extruders. In the case of a polyethylene-based stretched base material, the extrusion temperature for the first surface resin layer is set to, for example, 220°C or above and 260°C or below, the extrusion temperature for the polyethylene intermediate layer is set to 220°C or above and 260°C or below, the extrusion temperature for an adhesive resin layer is set to 220°C or above and 270°C or below, and the extrusion temperature for a second surface resin layer containing a polyamide is set to 260°C or above and 280°C or below, at the respective extruders.

Production examples for stretched base materials according to the fourth-B aspect are described. In the case of a polypropylene-based stretched base material, the extrusion temperature for the first surface resin layer is set to, for example, 260°C or above and 280°C or below, the extrusion temperature for the polypropylene intermediate layer is set to 260°C or above and 280°C or below, and the extrusion temperature for the second surface resin layer, containing polypropylene and an adhesive resin, is set to 240°C or above and 260°C or below, at the respective extruders. In the case of a polyethylene-based stretched base material, the extrusion temperature for the first surface resin layer, the extrusion temperature for the polyethylene intermediate layer, and the extrusion temperature for the second surface resin layer, containing polyethylene and an adhesive resin, are each set to, for example, 220°C or above and 240°C or below, at the respective extruders.

It should be noted that these extrusion temperatures at the extruders are merely examples and can be changed as appropriate.

The stretched base material, as well as the printing base material and barrier base material described later, may have undergone surface treatment. Such a stretched base material, a printing base material, and a barrier base material are superior in, for example, adhesion to other layers. Examples of methods for surface treatment include physical treatments and chemical treatments. Examples of physical treatments include corona treatment, ozonation, low-temperature plasma treatment using, for example, an oxygen gas and/or a nitrogen gas, and glow discharge treatment. Examples of chemical treatments include oxidation treatment using chemicals.

On at least one surface of the stretched base material, at least one printed layer, which will be described later, may be provided. That is, a printing base material includes a stretched base material and at least one printed layer provided on at least one surface of the stretched base material. For example, a printing base material includes a stretched base material and at least one printed layer provided on the surface of at least one layer selected from the first surface resin layer and the second surface resin layer in the stretched base material.

<Polyolefin Intermediate Layer>

The polyolefin intermediate layer contains a polyolefin as its main component. Examples of polyolefins include polypropylene, polyethylene, polybutene, and polymethylpentene. Of these, polypropylene and polyethylene are particularly preferred. The polyolefin intermediate layer is preferably, for example, a polypropylene layer containing polypropylene as its main component or a polyethylene layer containing polyethylene as its main component.

The percentage of the polyolefin (e.g., polypropylene or polyethylene) in the polyolefin intermediate layer is preferably 80% by mass or more, more preferably 85% by mass or more, even more preferably 90% by mass or more, particularly preferably 95% by mass or more.

The polyolefin intermediate layer may contain resin materials other than polyolefins. Examples of such resin materials include polyesters, polyamides, (meth)acrylic resins, vinyl resins, cellulose resins, and ionomer resins.

The polyolefin intermediate layer may contain additives. Examples of additives include crosslinking agents, antioxidants, ultraviolet absorbers, photostabilizers, anti-blocking agents, slipping agents, fillers, reinforcing agents, antistatic agents, compatibilizers, pigments, and reforming resins.

The thickness of the polyolefin intermediate layer in the stretched base material according to the first aspect is preferably 4 $\mu$m or more, more preferably 6 $\mu$m or more, even more preferably 8 $\mu$m or more, and preferably is 60 $\mu$m or less, more preferably 40 $\mu$m or less, even more preferably 20 $\mu$m or less. For example, the thickness is 4 $\mu$m or more and 60 $\mu$m or less. When the stretched base material includes two or more polyolefin intermediate layers, this "thickness" refers to the sum of the thickness of each polyolefin intermediate layer.

The thickness of the polyolefin intermediate layer in the stretched base material according to the first aspect is preferably 40% or more, more preferably 50% or more, even more preferably 60% or more, and preferably is 90% or less, more preferably 85% or less, even more preferably 80% or less, relative to the thickness of the stretched base material. For example, the thickness is 40% or more and 90% or less. When the stretched base material includes two or more polyolefin intermediate layers, this "thickness" refers to the sum of the thickness of each polyolefin intermediate layer.

The thickness of the polyolefin intermediate layer in the stretched base materials according to the second aspect and the fourth-A aspect is preferably 5 $\mu$m or more, more preferably 8 $\mu$m or more, even more preferably 10 $\mu$m or more, and preferably is 100 $\mu$m or less, more preferably 80 $\mu$m or less, even more preferably 60 $\mu$m or less, still more preferably 40 $\mu$m or less, particularly preferably 30 $\mu$m or less. For example, the thickness is 5 $\mu$m or more and 100 $\mu$m or less. When the stretched base material includes two or more polyolefin intermediate layers, this "thickness" refers to the sum of the thickness of each polyolefin intermediate layer.

The thickness of the polyolefin intermediate layer in the stretched base materials according to the second aspect and the fourth-A aspect is preferably 45% or more, more preferably 55% or more, even more preferably 65% or more, and preferably is 95% or less, more preferably 90% or less, even more preferably 85% or less, relative to the thickness of the stretched base material. For example, the thickness is 45% or more and 95% or less. When the stretched base material includes two or more polyolefin intermediate layers, this "thickness" refers to the sum of the thickness of each polyolefin intermediate layer.

The thickness of the polyolefin intermediate layer in the stretched base materials according to the third aspect and the fourth-B aspect is preferably 6 $\mu$m or more, more preferably 10 $\mu$m or more, even more preferably 14 $\mu$m or more, and preferably is 100 $\mu$m or less, more preferably 80 $\mu$m or less, even more preferably 60 $\mu$m or less, still more preferably 40 $\mu$m or less, particularly preferably 30 $\mu$m or less. For example, the thickness is 6 $\mu$m or more and 100 $\mu$m or less. When the stretched base material includes two or more polyolefin intermediate layers, this "thickness" refers to the sum of the thickness of each polyolefin intermediate layer.

The thickness of the polyolefin intermediate layer in the stretched base materials according to the third aspect and the fourth-B aspect is preferably 60% or more, more preferably 70% or more, even more preferably 80% or more, particularly preferably 84% or more, and preferably is 98% or less, more preferably 96% or less, even more preferably 92% or less, relative to the thickness of the stretched base material. For example, the thickness is 60% or more and 98% or less. When the stretched base material includes two or more polyolefin intermediate layers, this "thickness" refers to the sum of the thickness of each polyolefin intermediate layer.

A stretched base material including a polyolefin intermediate layer having a thickness equal to or greater than the above lower limits is superior in, for example, strength, rigidity, heat resistance, and recyclability. A stretched base material including a polyolefin intermediate layer having a thickness equal to or smaller than the above upper limits is superior in, for example, workability.

The stretched base material may include one polyolefin intermediate layer or may include two or more.

The stretched base materials according to the second aspect and the fourth-A aspect may include the first surface resin layer, a first polyolefin layer, a second polyolefin layer, an adhesive resin layer, and the second surface resin layer in this order. The polyolefin layers may be, for example, polyethylene layers or may be polypropylene layers.

In the following, a stretched base material having this layer configuration will be described.

The thickness of the second polyolefin layer is preferably 4 μm or more, more preferably 6 μm or more, even more preferably 8 μm or more, and preferably is 60 μm or less, more preferably 40 μm or less, even more preferably 20 μm or less, because this makes the advantages described above more pronounced. For example, the thickness is 4 μm or more and 60 μm or less.

The thickness of the second polyolefin layer is preferably 40% or more, more preferably 50% or more, even more preferably 60% or more, and preferably is 90% or less, more preferably 85% or less, even more preferably 80% or less, relative to the thickness of the stretched base material. For example, the thickness is 40% or more and 90% or less.

The thickness of the first polyolefin layer is preferably 0.5 μm or more, more preferably 0.8 μm or more, even more preferably 1 μm or more, and preferably is 18 μm or less, more preferably 13 μm or less, even more preferably 8 μm or less, particularly preferably 5 μm or less. For example, the thickness is 0.5 μm or more and 18 μm or less.

The thickness of the first polyolefin layer is preferably 2% or more, more preferably 4% or more, even more preferably 6% or more, and preferably is 25% or less, more preferably 20% or less, even more preferably 15% or less, particularly preferably 10% or less, relative to the thickness of the stretched base material. For example, the thickness is 2% or more and 25% or less.

In a stretched base material including the first surface resin layer, a first polyolefin layer, a second polyolefin layer, an adhesive resin layer, and the second surface resin layer in this order, the ratio of the thickness of the first polyolefin layer to the thickness of the adhesive resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched base material and reduced occurrence of curling.

The stretched base materials according to the third aspect and the fourth-B aspect may include the first surface resin layer, a first polyolefin layer, a second polyolefin layer, a third polyolefin layer, and the second surface resin layer in this order. The polyolefin layers may be, for example, polyethylene layers or may be polypropylene layers.

In the following, a stretched base material having this layer configuration will be described.

The thickness of the second polyolefin layer is preferably 4 μm or more, more preferably 6 μm or more, even more preferably 8 μm or more, and preferably is 60 μm or less, more preferably 40 μm or less, even more preferably 20 μm or less, because this makes the advantages described above more pronounced. For example, the thickness is 4 μm or more and 60 μm or less.

The thickness of the second polyolefin layer is preferably 40% or more, more preferably 50% or more, even more preferably 60% or more, and preferably is 90% or less, more preferably 85% or less, even more preferably 80% or less, relative to the thickness of the stretched base material. For example, the thickness is 40% or more and 90% or less.

The thicknesses of the first and third polyolefin layers are preferably 0.5 μm or more, more preferably 0.8 μm or more, even more preferably 1 μm or more, and preferably are 18 μm or less, more preferably 13 μm or less, even more preferably 8 μm or less, particularly preferably 5 μm or less, independently for each layer. For example, each thickness is 0.5 μm or more and 18 μm or less.

The thicknesses of the first and third polyolefin layers are preferably 2% or more, more preferably 4% or more, even more preferably 6% or more, and preferably are 25% or less, more preferably 20% or less, even more preferably 15% or less, particularly preferably 10% or less, relative to the thickness of the stretched base material, independently for each layer. For example, each thickness is 2% or more and 25% or less.

In a stretched base material including the first surface resin layer, a first polyolefin layer, a second polyolefin layer, a third polyolefin layer, and the second surface resin layer in this order, the ratio of the thickness of the first polyolefin layer to the thickness of the third polyolefin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched base material and reduced occurrence of curling.

The polyolefin intermediate layer may further contain a compatibilizer. By incorporating a compatibilizer in the polyolefin intermediate layer, the mixing of the gas barrier resin(s) and the polyolefin can be improved when the stretched base material and the barrier base material are recycled by heating and melting them. As a result of this, the deterioration of the physical characteristics of the polyolefin after recycling can be effectively reduced, and, furthermore, the decrease in transparency of the polyolefin can be effectively reduced. When the stretched base material includes two or more polyolefin intermediate layers, at least one polyolefin intermediate layer may contain a compatibilizer.

In the case where the polyolefin intermediate layer contains a compatibilizer, the amount of the compatibilizer in the polyolefin intermediate layer is preferably 25 parts by mass or more and 200 parts by mass or less relative to an amount of 100 parts by mass of the gas barrier resins in the stretched base material. For example, when the gas barrier resin(s) is an ethylene-vinyl alcohol copolymer(s), the amount of the compatibilizer in the polyolefin intermediate layer is preferably 100 parts by mass or more and 200 parts by mass or less relative to an amount of 100 parts by mass of the ethylene-vinyl alcohol copolymer(s) in the stretched base material. When the gas barrier resin(s) is a polyamide(s), the amount of the compatibilizer in the polyolefin intermediate layer is preferably 25 parts by mass or more and 100 parts by mass or less relative to an amount of 100 parts by mass of the polyamide(s) in the stretched base material.

Examples of compatibilizers include acid-modified polyolefins, with acid-modified polyethylene and acid-modified polypropylene being preferred from the viewpoint of recyclability. Examples of acid-modified polyolefins include polyolefins modified with unsaturated carboxylic acids, such as maleic acid and fumaric acid, or their acid anhydrides, esters, or metal salts, polyolefins grafted with such compounds in particular. Specific types preferred for use as compatibilizers include polyethylene modified with an unsaturated carboxylic acid compound and polypropylene modified with an unsaturated carboxylic acid compound, with maleic anhydride-modified polyethylene and maleic anhydride-modified polypropylene being more preferred.

In an embodiment of the stretched base material according to the first aspect, the polyolefin intermediate layer may further contain a compatibilizer. The percentage of the polyolefin (e.g., polypropylene or polyethylene) in the polyolefin intermediate layer is preferably more than 50% by mass, more preferably 60% by mass or more, even more preferably 65% by mass or more, still more preferably 70% by mass or more, particularly preferably 75% by mass or more or 80% by mass or more. In the polyolefin intermediate layer, the percentage of the polyolefin (e.g., polypropylene or polyethylene) is 100% by mass or less, or may be 99% by mass or less, may be 97% by mass or less, may be 95% by mass or less, or may be 90% by mass or less. In the case where the polyolefin intermediate layer contains a compatibilizer, the percentage of the compatibilizer in the polyolefin intermediate layer is preferably 1% by mass or more, more preferably 3% by mass or more, even more preferably 5% by mass or more, still more preferably 10% by mass or more, and preferably is 40% by mass or less, more preferably 35% by mass or less, even more preferably 30% by mass or less, particularly preferably 25% by mass or less or 20% by mass or less.

In an embodiment of the stretched base materials according to the second aspect and the fourth-A aspect, a second polyolefin layer may further contain a compatibilizer. The percentage of the polyolefin (e.g., polypropylene or polyethylene) in the second polyolefin layer is preferably more than 50% by mass, more preferably 60% by mass or more, even more preferably 65% by mass or more, still more preferably 70% by mass or more, particularly preferably 75% by mass or more or 80% by mass or more. In the second polyolefin layer, the percentage of the polyolefin (e.g., polypropylene or polyethylene) is 100% by mass or less, or may be 99% by mass or less, may be 97% by mass or less, or may be 95% by mass or less. In the case where the second polyolefin layer contains a compatibilizer, the percentage of the compatibilizer in the second polyolefin layer is preferably 1% by mass or more, more preferably 3% by mass or more, even more preferably 5% by mass or more, and preferably is 40% by mass or less, more preferably 35% by mass or less, even more preferably 30% by mass or less, particularly preferably 25% by mass or less or 20% by mass or less.

(Polypropylene Intermediate Layer)

The polypropylene intermediate layer contains polypropylene as its main component.

Examples of polypropylene include homopolypropylene, random polypropylene, and block polypropylene. Of these, homopolypropylene is particularly preferred from the viewpoint of heat resistance of the stretched base material.

The polypropylene may be isotactic polypropylene, may be syndiotactic polypropylene, or may be atactic polypropylene. For the heat resistance of the stretched base material, the polypropylene is preferably isotactic polypropylene or syndiotactic polypropylene, more preferably isotactic polypropylene.

The melting point (Tm) of the polypropylene in the polypropylene intermediate layer is preferably 130°C or above, more preferably 140°C or above, even more preferably 150°C or above, still more preferably 160°C or above, particularly preferably 165°C or above, and preferably is 175°C or below, for reasons such as the strength and heat resistance of the stretched base material. For example, the melting point is 130°C or above and 175°C or below. Herein, the Tms of materials are melt peak temperatures obtained by differential scanning calorimetry (DSC) according to JIS K7121: 2012 (using a test specimen after conditioning as per 3. (2) (with the cooling rate being 10°C/minute)).

(Polyethylene Intermediate Layer)

The polyethylene intermediate layer contains polyethylene as its main component.

The polyethylene is preferably, for example, high-density polyethylene, medium-density polyethylene, low-density polyethylene, or linear low-density polyethylene. From the viewpoints of the strength and heat resistance of the stretched base material, high-density polyethylene and medium-density polyethylene are preferred. From the viewpoints of film formation and workability of the stretched base material, linear low-density polyethylene and medium-density polyethylene are preferred.

Examples of linear low-density polyethylene include ethylene-1-butene copolymers (C4-LLDPE), in which at least 1-butene serves as a comonomer, ethylene-1-hexene copolymers (C6-LLDPE), in which at least 1-hexene serves as a comonomer, and ethylene-1-octene copolymers (C8-LLDPE), in which at least 1-octene serves as a comonomer. In these copolymers, the specified comonomers are not the only ones; additional comonomers may also be used. For example, linear low-density polyethylene produced using a metallocene catalyst is preferred.

The melting point (Tm) of the polyethylene in the polyethylene intermediate layer is preferably 100°C or above, more preferably 105°C or above, even more preferably 110°C or above, particularly preferably 115°C or above, and preferably is 140°C or below, for reasons such as the strength and heat resistance of the stretched base material. For example, the melting point is 100°C or above and 140°C or below.

The polyethylene intermediate layer is, in an embodiment, polyethylene layer (1) as described later, which contains at least one type of polyethylene selected from high-density polyethylene and medium-density polyethylene, or polyethylene layer (2) as described later, which contains polyethylene as its main component and in which the polyethylene contained has a density of more than 0.930 g/cm$^3$ and 0.960 g/cm$^3$ or less. The details of polyethylene layers (1) and (2) will be described later, and their description in this section is omitted.

<Surface Resin Layer Containing a Gas Barrier Resin as Its Main Component (G)>

A surface resin layer containing a gas barrier resin as its main component (G) will now be described.

The first and second surface resin layers in the stretched base material according to the first aspect each independently contain a gas barrier resin as their main component. The second surface resin layer in the stretched base material according to the second aspect contains a gas barrier resin as its main component. The second surface resin layer in the stretched base material according to the fourth-A aspect contains a gas barrier resin as its main component. Such a surface resin layer (G) tends to be superior in surface smoothness, and a vapor deposition film provided on the surface of the surface resin layer (G) tends to be superior in adhesion to the surface resin layer (G) and capable of exhibiting good gas barrier properties.

A stretched base material that includes a surface resin layer containing a gas barrier resin as its main component (G) is superior in gas barrier properties (oxygen barrier properties in particular), heat resistance, and rigidity, for example compared to known stretched polyolefin films.

A gas barrier resin is a resin having the function of limiting the penetration of gases. Examples of gas barrier resins include ethylene-vinyl alcohol copolymers, polyvinyl alcohol, polyamides, polyvinylidene chloride, polyesters, polyether polyols, polyester polyols, polyurethanes, polyacrylonitrile, and (meth)acrylic resins. Of these, ethylene-vinyl alcohol copolymers, polyvinyl alcohol, and polyamides are particularly preferred from viewpoints such as gas barrier properties (oxygen barrier properties in particular), heat resistance, and rigidity. Ethylene-vinyl alcohol copolymers and polyamides are more preferred, and, from the viewpoint of gas barrier properties, ethylene-vinyl alcohol copolymers are even more preferred. A surface resin layer (G) contains, in an embodiment, at least a polyamide as a gas barrier resin.

An ethylene-vinyl alcohol copolymer (EVOH) is obtained by, for example, copolymerizing ethylene and a vinyl ester monomer and then saponifying the resulting copolymer. The copolymerization of ethylene and a vinyl ester monomer can be performed using any known polymerization process, such as solution polymerization, suspension polymerization, or emulsion polymerization. The EVOH may have been modified, for example through urethanization, acetalation, cyanoethylation, or oxyalkylenation, by known methods.

The vinyl ester monomer is generally vinyl acetate, but other vinyl ester monomers may also be used. Examples of such vinyl ester monomers include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters, such as vinyl benzoate.

In the EVOH, the percentage of ethylene-derived constituent units (ethylene content) is preferably 20 mol% or more in all repeating constituent units, more preferably 25 mol% or more, for the workability of the stretched base material, and even more preferably is 30 mol% or more, still more preferably 35 mol% or more, particularly preferably 40 mol% or more or 45 mol% or more, because this results in excellent surface smoothness and suitability for stretching, suitability for biaxial orientation in particular. The ethylene content of the EVOH is preferably 60 mol% or less in all repeating constituent units, more preferably 55 mol% or less, for the heat resistance, oxygen barrier properties, and water vapor barrier properties of the stretched base material. The ethylene content is, for example, 20 mol% or more and 60 mol% or less. The ethylene content is measured by NMR.

The average degree of saponification of the EVOH is preferably 90 mol% or more, more preferably 95 mol% or more, even more preferably 99 mol% or more. The average degree of saponification is measured according to JIS K6726: 1994 (using a solution in which the EVOH is uniformly dissolved in a water/methanol solvent).

The melting point (Tm) of the EVOH is preferably 130°C or above, more preferably 135°C or above, even more preferably 140°C or above, and preferably is 200°C or below, more preferably 190°C or below, even more preferably 180°C or below, still more preferably 170°C or below, particularly preferably 165°C or below. For example, the melting point is 130°C or above and 200°C or below.

The MFR of the EVOH is preferably 0.1 g/10 minutes or more, more preferably 1 g/10 minutes or more, even more preferably 1.5 g/10 minutes or more, and preferably is 50 g/10 minutes or less, more preferably 30 g/10 minutes or less, even more preferably 10 g/10 minutes or less, for film formation and workability reasons. For example, the MFR is 0.1 g/10 minutes or more and 50 g/10 minutes or less. The MFR of the EVOH is measured by method A under the conditions of a temperature of 190°C and a load of 2.16 kg according to JIS K7210-1: 2014. The measuring temperature may be 210°C, depending on the melting point of the EVOH.

The average degree of saponification of polyvinyl alcohol (PVA) is preferably 70 mol% or more, more preferably 75 mol% or more, even more preferably 80 mol% or more, particularly preferably 85 mol% or more. The average degree of saponification is measured according to JIS K6726: 1994.

Examples of polyamides include aliphatic polyamides and aromatic polyamides. A surface resin layer (G) contains, in an embodiment, at least an aromatic polyamide as a gas barrier resin. Such a stretched base material is superior in, for example, rigidity and gas barrier properties.

In the following list of examples, polyamides will also be referred to as "PA."

Examples of aliphatic polyamides include aliphatic homopolyamides and aliphatic copolyamides.

Specific examples of aliphatic homopolyamides include polycaprolactam or poly(6-aminocaproic acid) (PA6), polyenantholactam or poly(7-aminoenanthic acid) (PA7), polyundecanelactam or poly(11-aminoundecanoic acid) (PA11), polylauryl lactam or poly(12-aminolauric acid) (PA12), polyhexamethylene adipamide (PA66), polytetramethylene dodecamide (PA412), polypentamethylene azelamide (PA59), polypentamethylene sebacamide (PA510), polypentamethylene dodecamide (PA512), polyhexamethylene azelamide (PA69), polyhexamethylene sebacamide (PA610), polyhexamethylene dodecamide (PA612), polynonamethylene adipamide (PA96), polynonamethylene azelamide (PA99), polynonamethylene sebacamide (PA910), polynonamethylene dodecamide (PA912), polydecamethylene adipamide (PA106), polydecamethylene azelamide (PA109), polydecamethylene decamide (PA1010), polydecamethylene dodecamide (PA1012), polydodecamethylene adipamide (PA126), polydodecamethylene azelamide (PA129), polydodecamethylene sebacamide (PA1210), and polydodecamethylene dodecamide (PA1212).

Specific examples of aliphatic copolyamides include caprolactam/hexamethylenediaminoadipic acid copolymers (PA6/66), caprolactam/hexamethylenediaminoazelaic acid copolymers (PA6/69), caprolactam/hexamethylenediaminosebacic acid copolymers (PA6/610), caprolactam/hexamethylenediaminoundecanoic acid copolymers (PA6/611), caprolactam/hexamethylenediaminododecanoic acid copolymers (PA6/612), caprolactam/aminoundecanoic acid copolymers (PA6/11), caprolactam/lauryl lactam copolymers (PA6/12), caprolactam/hexamethylenediaminoadipic acid/lauryl lactam copolymers (PA6/66/12), caprolactam/hexamethylenediaminoadipic acid/hexamethylenediaminosebacic acid copolymers (PA6/66/610), and caprolactam/hexamethylenediaminoadipic acid/hexamethylenediaminododecanedicarboxylic acid copolymers (PA6/66/612).

Preferred aliphatic polyamides are crystalline aliphatic polyamides. Examples of crystalline aliphatic polyamides include PA6, PA11, PA12, PA66, PA610, PA612, PA6/66, and PA6/66/12. The melting point (Tm) of a crystalline aliphatic polyamide is preferably 180°C or above, more preferably 190°C or above, even more preferably 200°C or above, and preferably is 300°C or below, more preferably 270°C or below, even more preferably 240°C or below. For example, the melting point is 180°C or above and 300°C or below.

Examples of aromatic polyamides include semi-aromatic polyamides and fully aromatic polyamides, with semi-aromatic polyamides being preferred. A semi-aromatic polyamide is a polyamide having constituent units derived from an aromatic diamine and constituent units derived from an aliphatic dicarboxylic acid or a polyamide having constituent units derived from an aliphatic diamine and constituent units derived from an aromatic dicarboxylic acid. Examples include polyamides composed of an aromatic diamine and an aliphatic dicarboxylic acid and polyamides composed of an aliphatic diamine and an aromatic dicarboxylic acid.

Examples of semi-aromatic polyamides include polyhexamethylene terephthalamide (PA6T), polyhexamethylene isophthalamide (PA6I), polynonamethylene terephthalamide (PA9T), polyhexamethylene adipamide/polyhexamethylene terephthalamide copolymers (PA66/6T), polyhexamethylene adipamide/polyhexamethylene isophthalamide copolymers (PA66/6I), polyhexamethylene terephthalamide/polycaproamide copolymers (PA6T/6), polyhexamethylene isophthalamide/polycaproamide copolymers (PA6I/6), polyhexamethylene terephthalamide/polydodecamide copolymers (PA6T/12), polyhexamethylene isophthalamide/polyhexamethylene terephthalamide copolymers (PA6I/6T), polyhexamethylene terephthalamide/poly(2-methylpentamethylene terephthalamide) copolymers (PA6T/M5T), polyhexamethylene adipamide/polyhexamethylene terephthalamide/polyhexamethylene isophthalamide copolymers (PA66/6T/6I), polyhexamethylene adipamide/polycaproamide/polyhexamethylene isophthalamide copolymers (PA66/6/6I), and polymeta-xylylene adipamide (PAMXD6). Of these, polymeta-xylylene adipamide (PAMXD6) is particularly preferred.

Preferred semi-aromatic polyamides are crystalline semi-aromatic polyamides. The melting point (Tm) of a crystalline semi-aromatic polyamide is preferably 190°C or above, more preferably 200°C or above, even more preferably 210°C or above, and preferably is 310°C or below, more preferably 280°C or below, even more preferably 250°C or below. For example, the melting point is 190°C or above and 310°C or below.

The melt volume rate (MVR) of a semi-aromatic polyamide is preferably 5 $cm^3$/10 minutes or more, more preferably 10 $cm^3$/10 minutes or more, and preferably is 200 $cm^3$/10 minutes or less, more preferably 100 $cm^3$/10 minutes or less. For example, the melt volume rate is 5 $cm^3$/10 minutes or more and 200 $cm^3$/10 minutes or less. The MVR is measured at a temperature of 275°C and a load of 5.00 kg according to JIS K7210-1: 2014.

The relative viscosity of a polyamide, such as an aliphatic polyamide, is preferably 1.5 or greater, more preferably 2.0 or greater, even more preferably 2.5 or greater, and preferably is 5.0 or less, more preferably 4.5 or less, even more preferably 4.0 or less. For example, the relative viscosity is 1.5 or greater and 5.0 or less. The relative viscosity of a polyamide is determined by dissolving 1 g of the polyamide in 100 mL of 96% concentrated sulfuric acid and measuring the relative viscosity at 25°C according to JIS K6920-2: 2009.

The MFR of a polyamide is preferably 0.1 g/10 minutes or more, more preferably 0.3 g/10 minutes or more, even more preferably 0.5 g/10 minutes or more, still more preferably 1 g/10 minutes or more, particularly preferably 1.5 g/10 minutes or more, and preferably is 50 g/10 minutes or less, more preferably 30 g/10 minutes or less, even more preferably 10 g/10 minutes or less. For example, the MFR is 0.1 g/10 minutes or more and 50 g/10 minutes or less. The MFR of a polyamide is measured by method A under the conditions of a temperature of 235°C and a load of 2.16 kg according to JIS K7210-1: 2014. An appropriate measurement temperature can be employed according to the melting point of the polyamide.

The percentage of the gas barrier resin in a surface resin layer (G) is preferably 80% by mass or more, more preferably 85% by mass or more, even more preferably 90% by mass or more, particularly preferably 95% by mass or more, for gas barrier properties and other physical characteristics mentioned above.

A surface resin layer (G) may contain an aliphatic polyamide as its main component. For example, the percentage of the aliphatic polyamide in the surface resin layer (G) is preferably 80% by mass or more, more preferably 85% by mass or more, even more preferably 90% by mass or more, particularly preferably 95% by mass or more, for the workability and other physical characteristics mentioned above of the stretched base material.

A surface resin layer (G) may contain an aromatic polyamide as its main component. For example, the percentage of the aromatic polyamide in the surface resin layer (G) is preferably 80% by mass or more, more preferably 85% by mass or more, even more preferably 90% by mass or more, particularly preferably 95% by mass or more, for the rigidity, gas barrier properties, and other physical characteristics mentioned above of the stretched base material.

A surface resin layer (G) may contain an aliphatic polyamide and an aromatic polyamide. Aromatic polyamides tend to be better in terms of gas barrier properties and rigidity. Aliphatic polyamides tend to be better in terms of workability. For example, in the surface resin layer (G), the percentage of the aromatic polyamide is preferably 10% by mass or more and 90% by mass or less, more preferably 20% by mass or more and 80% by mass or less, even more preferably 30% by mass or more and 70% by mass or less, particularly preferably 40% by mass or more and 60% by mass or less, and the percentage of the aliphatic polyamide is preferably 10% by mass or more and 90% by mass or less, more preferably 20% by mass or more and 80% by mass or less, even more preferably 30% by mass or more and 70% by mass or less, particularly preferably 40% by mass or more and 60% by mass or less, for the balance between the rigidity, gas barrier properties, workability, and manufacturing cost of the stretched base material.

A surface resin layer (G) may contain resin materials as mentioned above other than the components described above.

A surface resin layer (G) may contain additives as mentioned above.

The thickness of each surface resin layer (G) is preferably 0.3 μm or more, more preferably 0.5 μm or more, even more preferably 0.8 μm or more, for gas barrier properties and other physical characteristics mentioned above. The thickness of each surface resin layer (G) is preferably 15 μm or less, more preferably 10 μm or less, even more preferably 5 μm or less, particularly preferably 3 μm or less, for the recyclability of the stretched base material and the barrier base material. The thickness of each surface resin layer (G) is, for example, 0.3 μm or more and 15 μm or less. When surface resin layers have protrusions caused by particles, which will be described later, the thickness of each layer is preferably measured in a region in which no such protrusions caused by particles are present. The same also applies to other aspects.

The thickness of each surface resin layer (G) is preferably 1% or more, more preferably 2% or more, even more preferably 4% or more, and preferably is 20% or less, more preferably 15% or less, even more preferably 10% or less, particularly preferably 8% or less, relative to the thickness of the stretched base material. For example, the thickness is 1% or more and 20% or less.

<Surface Resin Layer Containing a Polyolefin and an Adhesive Resin (AH)>

A surface resin layer containing a polyolefin and an adhesive resin (AH) will now be described.

The first surface resin layer in the stretched base material according to the second aspect contains at least one polyolefin and at least one adhesive resin. The first and second surface resin layers in the stretched base material according to the third aspect each independently contain at least one polyolefin and at least one adhesive resin. The second surface resin layer in the stretched base material according to the fourth-B aspect contains at least one polyolefin and at least one adhesive resin. A vapor deposition film provided on the surface of such a surface resin layer (AH) tends to be superior in adhesion to the surface resin layer (AH) and capable of exhibiting good gas barrier properties.

Examples of polyolefins include polypropylene, polyethylene, polybutene, and polymethylpentene. Of these, polypropylene and polyethylene are particularly preferred.

Examples of polypropylene include homopolypropylene, random polypropylene, and block polypropylene. Of these, random polypropylene and homopolypropylene are particularly preferred from the viewpoints of surface smoothness of the stretched base material, adhesion between the surface resin layer (AH) and a vapor deposition film, and heat resistance of the stretched base material, with random polypropylene being more preferred. When the percentage of random polypropylene is high in the stretched base material, heat resistance may be insufficient. Such a case, however, can be addressed by using homopolypropylene as the main component of a polypropylene intermediate layer as described above.

The melting point (Tm) of polypropylene in a surface resin layer (AH) is preferably 120°C or above, more preferably 125°C or above, even more preferably 130°C or above, and preferably is 175°C or below, more preferably 170°C or below, even more preferably 165°C or below, still more preferably 160°C or below, particularly preferably 155°C or below or 150°C or below, for reasons such as the strength and heat resistance of the stretched base material and adhesion between the surface resin layer (AH) and a vapor deposition film. For example, the melting point is 120°C or above and 175°C or below.

Preferred examples of polyethylene include high-density polyethylene, medium-density polyethylene, low-density polyethylene, and linear low-density polyethylene, with linear low-density polyethylene being more preferred from the viewpoints of surface smoothness of the stretched base material and adhesion between the surface resin layer (AH) and a vapor deposition film. Examples of linear low-density polyethylene include C4-LLDPE, C6-LLDPE, and C8-LLDPE.

The melting point (Tm) of polyethylene in a surface resin layer (AH) is preferably 100°C or above, more preferably 105°C or above, even more preferably 110°C or above, particularly preferably 115°C or above, and preferably is 140°C or below, for reasons such as the strength and heat resistance of the stretched base material and adhesion between the surface resin layer (AH) and a vapor deposition film. For example, the melting point is 100°C or above and 140°C or below.

Examples of adhesive resins include acid-modified resins, silicone resins, epoxy resins, and phenolic resins, with acid-modified resins being preferred. Examples of acid-modified resins include acid-modified polyolefins and acid-modified vinyl resins. Of these, acid-modified polyolefins are particularly preferred from the viewpoints of recyclability and adhesion, with acid-modified polypropylene and acid-modified polyethylene being more preferred. In the case of a polypropylene-based stretched base material, acid-modified polypropylene is even more preferred. Acid-modified random polypropylene and acid-modified homopolypropylene are still more preferred from the viewpoints of heat resistance and bonding, with acid-modified random polypropylene being particularly preferred. A surface resin layer (AH) containing acid-modified random polypropylene tends to be better in terms of adhesion to a vapor deposition film. In the case of a polyethylene-based stretched base material, acid-modified polyethylene is even more preferred, with acid-modified linear low-density polyethylene being still more preferred. A surface resin layer (AH) containing acid-modified linear low-density polyethylene tends to be better in terms of adhesion to a vapor deposition film.

In an embodiment of the stretched base material according to the second aspect, the polyolefin in the first surface resin layer includes polypropylene, the adhesive resin in the first surface resin layer includes acid-modified polypropylene, and the polyolefin intermediate layer contains polypropylene as its main component. In an embodiment of the stretched base material according to the second aspect, the polyolefin in the first surface resin layer includes random polypropylene, the adhesive resin in the first surface resin layer includes acid-modified random polypropylene, and the polyolefin intermediate layer contains homopolypropylene as its main component.

In an embodiment of the stretched base material according to the second aspect, the polyolefin in the first surface resin layer includes polyethylene, the adhesive resin in the first surface resin layer includes acid-modified polyethylene, and the polyolefin intermediate layer contains polyethylene as its main component.

Examples of acid-modified polyolefins include polyolefins (e.g., polypropylene and polyethylene) modified with acid modification agents, polyolefins grafted with acid modification agents in particular. Examples of acid modification agents include unsaturated carboxylic acids, such as maleic acid, fumaric acid, acrylic acid, methacrylic acid, itaconic acid, citraconic acid, and tetrahydrophthalic acid, or their acid anhydrides, esters, or metal salts. Preferred acid-modified polyolefins are maleic acid-modified polyolefins and maleic anhydride-modified polyolefins, with maleic acid-modified polypropylene, maleic anhydride-modified polypropylene, maleic acid-modified polyethylene, and maleic anhydride-modified polyethylene being more preferred.

The percentage of constituent units derived from the acid modification agent in an acid-modified polyolefin is preferably 0.01% by mass or more, more preferably 0.05% by mass or more, even more preferably 0.1% by mass or more, for adhesion between the surface resin layer (AH) and a vapor deposition film. The percentage of constituent units derived from the acid modification agent in an acid-modified polyolefin is preferably 10% by mass or less, more preferably 5% by mass or less, even more preferably 3% by mass or less, for bonding between the surface resin layer (AH) and the polyolefin intermediate layer. The percentage is, for example, 0.01% by mass or more and 10% by mass or less. The percentage of constituent units derived from the acid modification agent is measured by infrared spectrometry.

The MFR of an acid-modified polyolefin is preferably 0.1 g/10 minutes or more, more preferably 1 g/10 minutes or more, even more preferably 1.5 g/10 minutes or more, and preferably is 50 g/10 minutes or less, more preferably 30 g/10 minutes or less, even more preferably 10 g/10 minutes or less, for film formation and workability reasons. For example, the MFR is 0.1 g/10 minutes or more and 50 g/10 minutes or less. The MFR of an acid-modified polyolefin is measured by method A under the condition of a load of 2.16 kg according to JIS K7210-1: 2014. The temperature for the measurement of the MFR is selected according to, for example, the melting point of the acid-modified polyolefin. In the case of acid-modified polypropylene, the measurement temperature is 230°C, and in the case of acid-modified polyethylene, the measurement temperature is 190°C.

The density of acid-modified polypropylene is, for example, 0.88 g/cm$^3$ or more and 0.92 g/cm$^3$ or less. Herein, the density of acid-modified polypropylene is measured according to method D (density gradient column method, 23°C) in JIS K7112: 1999. Examples of density ranges for acid-modified polyethylene are the same as those presented above for polyethylene.

The melting point (Tm) of acid-modified polypropylene is preferably 120°C or above, more preferably 125°C or above, even more preferably 130°C or above, and preferably is 175°C or below, more preferably 170°C or below, even more preferably 165°C or below, still more preferably 160°C or below, particularly preferably 155°C or below or 150°C or below, for reasons such as the strength and heat resistance of the stretched base material and adhesion between the surface resin layer (AH) and a vapor deposition film. For example, the melting point is 120°C or above and 175°C or below.

The melting point (Tm) of acid-modified polyethylene is preferably 100°C or above, more preferably 105°C or above, even more preferably 110°C or above, particularly preferably 115°C or above, and preferably is 140°C or below, for reasons such as the strength and heat resistance of the stretched base material and adhesion between the surface resin layer (AH) and a vapor deposition film. For example, the melting point is 100°C or above and 140°C or below.

In a surface resin layer (AH), preferably, the percentage of the polyolefin is 60% by mass or more and 95% by mass or less, and the percentage of the adhesive resin is 5% by mass or more and 40% by mass or less. More preferably, the percentage of the polyolefin is 70% by mass or more and 95% by mass or less, and the percentage of the adhesive resin is 5% by mass or more and 30% by mass or less. Even more preferably, the percentage of the polyolefin is 80% by mass or more and 95% by mass or less, and the percentage of the adhesive resin is 5% by mass or more and 20% by mass or less. Particularly preferably, the percentage of the polyolefin is 85% by mass or more and 95% by mass or less, and the percentage of the adhesive resin is 5% by mass or more and 15% by mass or less. A surface resin layer (AH) in such a configuration tends to be better in terms of surface smoothness, adhesion to a vapor deposition film, and bonding with the polyolefin intermediate layer. When the percentage of the adhesive resin is equal to or smaller than the upper limits, overadhesion of the film to a roller or other elements during the production of the stretched base material, for example, can be reduced. The polyolefin is, for example, polyethylene or polypropylene.

A surface resin layer (AH) may contain linear low-density polyethylene as its main component for reasons such as suitability for biaxial orientation and surface smoothness. The details of the linear low-density polyethylene are as described later in the section of Polyethylene Layer (1), and their description in this section is omitted.

A surface resin layer (AH) contains, in an embodiment, at least one type of polyethylene selected from high-density polyethylene and medium-density polyethylene, preferably high-density polyethylene. Accordingly, a stretched base material including such a surface resin layer exhibits, for example, high heat resistance. Specifically, such a stretched base material is superior in resistance to drying during printing and heating during heat sealing, and in deposition resistance in the case where vapor deposition is performed on the film. In addition, such a surface resin layer exhibits, for example, high rigidity. With such a surface resin layer, therefore, the rate of transport of the film can be increased in the case where vapor deposition is performed on the film, and thus productivity can be improved.

The details of the high-density polyethylene and medium-density polyethylene are as described later in the section of Polyethylene Layer (1), and their description in this section is omitted. Each of the high-density polyethylene and medium-density polyethylene is preferably an ethylene-α-olefin copolymer, which will be described later.

In 100% by mass polyethylene contained in a surface resin layer (AH), the percentage of linear low-density polyethylene may be 60% by mass or more, may be 65% by mass or more, may be 70% by mass or more, may be 100% by mass or less, may be 95% by mass or less, may be 90% by mass or less, may be 85% by mass or less, or may be 80% by mass or less. For example, the percentage is 60% by mass or more and 100% by mass or less.

In 100% by mass polyethylene contained in a surface resin layer (AH), the sum of the percentages of high-density polyethylene and medium-density polyethylene may be 0% by mass or more, may be 5% by mass or more, may be 10% by mass or more, may be 15% by mass or more, may be 20% by mass or more, may be 40% by mass or less, may be 35% by mass or less, or may be 30% by mass or less. For example, the sum is 0% by mass or more and 40% by mass or less.

Polyethylene contained in a surface resin layer (AH) may have a density of more than 0.930 g/cm$^3$ and 0.960 g/cm$^3$ or less, and this density is preferably 0.931 g/cm$^3$ or more and 0.955 g/cm$^3$ or less, more preferably 0.931 g/cm$^3$ or more and 0.950 g/cm$^3$ or less. When a surface resin layer (AH) contains two or more types of polyethylene with different densities, the above density of polyethylene represents the density of the mixture of two or more types of polyethylene.

A surface resin layer (AH) may contain resin materials as mentioned above other than the components described above.

A surface resin layer (AH) may contain additives as mentioned above.

The thickness of each surface resin layer (AH) is preferably 0.3 μm or more, more preferably 0.5 μm or more, even more preferably 0.8 μm or more, and preferably is 15 μm or less, more preferably 10 μm or less, even more preferably 5 μm or less, particularly preferably 3 μm or less, because this makes the advantages described above more pronounced. For example, the thickness is 0.3 μm or more and 15 μm or less.

The thickness of each surface resin layer (AH) is preferably 1% or more, more preferably 2% or more, even more preferably 4% or more, and preferably is 20% or less, more preferably 15% or less, even more preferably 10% or less, particularly preferably 8% or less, relative to the thickness of the stretched base material. For example, the thickness is 1% or more and 20% or less.

<Surface Resin Layer Containing a Polyolefin as Its Main Component (PO)>

A surface resin layer containing a polyolefin as its main component (PO) will now be described.

The first surface resin layer in the stretched base material according to the fourth aspect contains a polyolefin as its main component. Examples of polyolefins include polypropylene, polyethylene, polybutene, and polymethylpentene. Of these, polypropylene and polyethylene are particularly preferred. Examples of preferred surface resin layers (PO) include a layer containing polypropylene as its main component and a layer containing polyethylene as its main component.

The percentage of the polyolefin (e.g., polypropylene or polyethylene) in a surface resin layer (PO) is preferably 80% by mass or more, more preferably 85% by mass or more, even more preferably 90% by mass or more, particularly preferably 95% by mass or more.

Examples of layers containing polypropylene as their main component in the context of a surface resin layer (PO) include layers similar to those described in (Polypropylene Intermediate Layer) under <Polyolefin Intermediate Layer> above.

A layer containing polypropylene as its main component in the context of a surface resin layer (PO) may contain homopolypropylene and random polypropylene, for example for adhesion to another layer provided on the surface resin layer (PO) in a laminate, which will be described later. For example, in a surface resin layer (PO), preferably, the percentage of homopolypropylene is 50% by mass or more and 95% by mass or less, and the percentage of random polypropylene is 5% by mass or more and 50% by mass or less. More preferably, the percentage of homopolypropylene is 60% by mass or more and 90% by mass or less, and the percentage of random polypropylene is 10% by mass or more and 40% by mass or less. Even more preferably, the percentage of homopolypropylene is 70% by mass or more and 85% by mass or less, and the percentage of random polypropylene is 15% by mass or more and 30% by mass or less.

Examples of layers containing polyethylene as their main component in the context of a surface resin layer (PO) include layers similar to those described in (Polyethylene Intermediate Layer) under <Polyolefin Intermediate Layer> above. A surface resin layer (PO) may be polyethylene layer (1) or (2), each of which will be described later.

A surface resin layer (PO) may contain resin materials as mentioned above other than polyolefins.

A surface resin layer (PO) may contain additives as mentioned above.

The thickness of a surface resin layer (PO) is preferably 0.3 μm or more, more preferably 0.5 μm or more, even more preferably 0.8 μm or more, and preferably is 15 μm or less, more preferably 10 μm or less, even more preferably 5 μm or less, particularly preferably 3 μm or less, because this makes the advantages described above more pronounced. For example, the thickness is 0.3 μm or more and 15 μm or less.

The thickness of a surface resin layer (PO) is preferably 1% or more, more preferably 2% or more, even more preferably 4% or more, and preferably is 20% or less, more preferably 15% or less, even more preferably 10% or less, particularly preferably 8% or less, relative to the thickness of the stretched base material. For example, the thickness is 1% or more and 20% or less.

The first surface resin layer and/or the second surface resin layer in the stretched base material in each aspect described above may further contain particles. By incorporating particles in the surface resin layer(s), anti-blocking properties or lubricity of the stretched base material, for example, can be improved. The details of the particles will be described in the section of <Layer Configuration of the Film>, and their description in this section is omitted.

When any two adjacent layers selected from a polyethylene intermediate layer, a surface resin layer containing polyethylene as its main component, and a surface resin layer containing polyethylene and an adhesive resin in the stretched base material according to each aspect described above are referred to as layer (i) and layer (ii), the absolute difference between the density of the polyethylene constituting layer (i) and the density of the polyethylene constituting layer (ii) is preferably 0.030 g/cm$^3$ or less, more preferably 0.025 g/cm$^3$ or less, even more preferably 0.020 g/cm$^3$ or less, particularly preferably 0.010 g/cm$^3$ or less, for all combinations. Such a film is superior in interlayer adhesion and is superior in, for example, drop resistance.

In a stretched base material according to an embodiment, the density of polyethylene in a polyethylene intermediate layer is higher than the density of polyethylene in the first surface resin layer, and, when desired, the density of polyethylene in the second surface resin layer is lower than the density of polyethylene in the polyethylene intermediate layer. Such a stretched base material tends to be superior in the balance between heat resistance and surface smoothness, transparency, printing suitability, and adhesion in vapor deposition. When the thickness of the polyethylene intermediate layer is larger than those of the surface resin layers, high heat resistance is achieved by virtue of the polyethylene intermediate layer. The difference in the density of polyethylene between the polyethylene intermediate layer and these surface resin layers may be, for example, 0.003 g/cm$^3$ or more.

The sum of the percentages of high-density polyethylene and medium-density polyethylene is hereinafter referred to as "percentage A." In this context, the material may be high-density polyethylene alone, may be medium-density polyethylene alone, or may be a mixture of high-density polyethylene and medium-density polyethylene.

In a stretched base material according to an embodiment, percentage A in a polyethylene intermediate layer is greater than percentage A in the first surface resin layer, and, when desired, percentage A in the second surface resin layer is smaller than percentage A in the polyethylene intermediate layer. Such a stretched base material tends to be superior in the balance between heat resistance and surface smoothness, transparency, printing suitability, and adhesion in vapor deposition. The difference in percentage A between the polyethylene intermediate layer and these surface resin layers may be, for example, 10% by mass or more, may be 50% by mass or less, may be 40% by mass or less, or may be 30% by mass or less.

In a stretched base material according to an embodiment, the density of polyethylene in a polyethylene intermediate layer is lower than the density of polyethylene in the first surface resin layer, and, when desired, the density of polyethylene in the second surface resin layer is higher than the density of polyethylene in the polyethylene intermediate layer. Such a stretched base material tends to be superior in the balance between suitability for biaxial orientation and heat resistance. When the thickness of the polyethylene intermediate layer is larger than those of the surface resin layers, high suitability for biaxial orientation is achieved by virtue of the polyethylene intermediate layer. The difference in the density of polyethylene between these surface resin layers and polyethylene intermediate layer may be, for example, 0.003 g/cm$^3$ or more.

In a stretched base material according to an embodiment, percentage A in a polyethylene intermediate layer is smaller than percentage A in the first surface resin layer, and, when desired, percentage A in the second surface resin layer is greater than percentage A in the polyethylene intermediate layer. Such a stretched base material tends to be superior in the balance between suitability for biaxial orientation and heat resistance. The difference in percentage A between these surface resin layers and polyethylene intermediate layer may be, for example, 10% by mass or more, may be 50% by mass or less, may be 40% by mass or less, or may be 30% by mass or less.

In a stretched base material according to an embodiment, the densities of polyethylene in the first surface resin layer, a polyethylene intermediate layer, and, when desired, the second surface resin layer are substantially equal to each other. For example, the difference in the density of polyethylene between the layer with the highest polyethylene density and the layer with the lowest polyethylene density among the first surface resin layer, the polyethylene intermediate layer, and, when desired, the second surface resin layer is less than 0.003 g/cm$^3$.

In a stretched base material according to an embodiment, percentages A in the first surface resin layer, a polyethylene intermediate layer, and, when desired, the second surface resin layer are substantially equal to each other. For example, the difference in percentage A between the layer with the largest percentage A and the layer with the smallest percentage A among the first surface resin layer, the polyethylene intermediate layer, and, when desired, the second surface resin layer is less than 10% by mass.

It should be noted that when each layer described above contains two or more types of polyethylene with different densities, the density of polyethylene refers to the density of the mixture of two or more types of polyethylene. The methods for measuring and calculating this density are as described above.

<Adhesive Resin Layer>

The stretched base material according to the first aspect may further include a first adhesive resin layer between the first surface resin layer and the polyolefin intermediate layer. The stretched base material according to the first aspect may include a second adhesive resin layer between the polyolefin intermediate layer and the second surface resin layer. The stretched base materials according to the second aspect and the fourth-A aspect may further include an adhesive resin layer between the polyolefin intermediate layer and the second surface resin layer. Such a stretched base material is superior in, for example, bonding between the polyolefin intermediate layer and the surface resin layer(s).

An adhesive resin layer contains an adhesive resin as its main component.

Examples of adhesive resins include acid-modified resins, silicone resins, epoxy resins, and phenolic resins, with acid-modified resins being preferred. Examples of acid-modified resins include acid-modified polyolefins and acid-modified vinyl resins. Of these, acid-modified polyolefins are particularly preferred, with acid-modified polypropylene and acid-modified polyethylene being more preferred. In the case of a polypropylene-based stretched base material, acid-modified polypropylene is even more preferred from the viewpoints of recyclability and bonding to both of the polypropylene layer and the surface resin layer. Acid-modified random polypropylene and acid-modified homopolypropylene are still more preferred from the viewpoints of heat resistance and bonding, with acid-modified random polypropylene being particularly preferred. In the case of a polyethylene-based stretched base material, acid-modified polyethylene is even more preferred from the viewpoints of recyclability and bonding to both of the polyethylene layer and the surface resin layer, with acid-modified linear low-density polyethylene being still more preferred. The details of acid-modified polyolefins (composition and the MFR, density, Tm, and other characteristics) are as described in the section of surface resin layers (AH), and their description in this section is omitted.

The percentage of constituent units derived from the acid modification agent in an acid-modified polyolefin is preferably 0.01% by mass or more, more preferably 0.05% by mass or more, even more preferably 0.1% by mass or more, for bonding between the surface resin layer and the polyolefin intermediate layer. The percentage of constituent units derived from the acid modification agent in an acid-modified polyolefin is preferably 10% by mass or less, more preferably 5% by mass or less, even more preferably 3% by mass or less, for bonding between the surface resin layer and the polyolefin intermediate layer. The percentage is, for example, 0.01% by mass or more and 10% by mass or less. The percentage of constituent units derived from the acid modification agent is measured by infrared spectrometry.

The percentage of the adhesive resin in an adhesive resin layer is preferably 80% by mass or more, more preferably 85% by mass or more, even more preferably 90% by mass or more, particularly preferably 95% by mass or more.

An adhesive resin layer may contain additives as mentioned above.

The thickness of each adhesive resin layer is preferably 0.5 $\mu$m or more, more preferably 0.8 $\mu$m or more, even more preferably 1 $\mu$m or more, for bonding reasons. The thickness of each adhesive resin layer is preferably 18 $\mu$m or less, more preferably 13 $\mu$m or less, even more preferably 8 $\mu$m or less, particularly preferably 5 $\mu$m or less, for the recyclability of the stretched base material and the barrier base material. The thickness of each adhesive resin layer is, for example, 0.5 $\mu$m or more and 18 $\mu$m or less.

The thickness of each adhesive resin layer is preferably 2% or more, more preferably 4% or more, even more preferably 6% or more, and preferably is 25% or less, more preferably 20% or less, even more preferably 15% or less, particularly preferably 10% or less, relative to the thickness of the stretched base material. For example, the thickness is 2% or more and 25% or less.

The stretched base material according to the first aspect may include the first surface resin layer, a first adhesive resin layer, the polyolefin intermediate layer, a second adhesive resin layer, and the second surface resin layer in this order. In a stretched base material including the first surface resin layer, a first adhesive resin layer, the polyolefin intermediate layer, a second adhesive resin layer, and the second surface resin layer in this order, the ratio of the thickness of the first adhesive resin layer to the thickness of the second adhesive resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched base material and reduced occurrence of curling.

<Polyethylene layer (1)>

The stretched base material according to the fifth aspect includes polyethylene layer (1).

Polyethylene layer (1) contains at least one type of polyethylene selected from high-density polyethylene and medium-density polyethylene, preferably high-density polyethylene. Accordingly, a stretched base material including polyethylene layer (1) exhibits, for example, high heat resistance. Specifically, such a stretched base material is superior in resistance to drying during printing and heating during heat sealing, and in deposition resistance in the case where vapor deposition is performed on the film. In addition, polyethylene layer (1) exhibits, for example, high rigidity. With polyethylene layer (1), therefore, the rate of transport of the film can be increased in the case where vapor deposition is performed on the film, and thus productivity can be improved.

Examples of high-density polyethylene include homopolymers of ethylene and ethylene-$\alpha$-olefin copolymers. Examples of $\alpha$-olefins include the aforementioned $\alpha$-olefins containing 3 or more and 20 or fewer carbons. $\alpha$-Olefins containing 3 or more and 8 or fewer carbons are preferred, and $\alpha$-olefins containing 4 or more and 8 or fewer carbons are more preferred. Examples of ethylene-$\alpha$-olefin copolymers include ethylene-1-butene copolymers (C4-HDPE), in which at least 1-butene serves as a comonomer, ethylene-1-hexene copolymers (C6-HDPE), in which at least 1-hexene serves as a comonomer, and ethylene-1-octene copolymers (C8-HDPE), in which at least 1-octene serves as a comonomer. In these copolymers, the specified comonomers are not the only ones; additional comonomers may also be used. For example, high-density polyethylene produced using a metallocene catalyst is preferred.

Examples of medium-density polyethylene include homopolymers of ethylene and ethylene-$\alpha$-olefin copolymers. Examples of $\alpha$-olefins include the aforementioned $\alpha$-olefins containing 3 or more and 20 or fewer carbons. $\alpha$-Olefins containing 3 or more and 8 or fewer carbons are preferred, and $\alpha$-olefins containing 4 or more and 8 or fewer carbons are more preferred. Examples of ethylene-$\alpha$-olefin copolymers include ethylene-1-butene copolymers (C4-MDPE), in which at least 1-butene serves as a comonomer, ethylene-1-hexene copolymers (C6-MDPE), in which at least 1-hexene serves as a comonomer, and ethylene-1-octene copolymers (C8-MDPE), in which at least 1-octene serves as a comonomer. In these copolymers, the specified comonomers are not the only ones; additional comonomers may also be used. For example, medium-density polyethylene produced using a metallocene catalyst is preferred.

Each of the high-density polyethylene and medium-density polyethylene is preferably an ethylene-$\alpha$-olefin copolymer as described above. A film containing such high-density polyethylene and/or medium-density polyethylene is superior in, for example, suitability for biaxial orientation, and is superior in stretchability in the transverse direction in particular. This is presumably because tearing of the film during stretching can be reduced by virtue of side chains derived from the $\alpha$-olefin. The ethylene-$\alpha$-olefin copolymer is preferably polyethylene obtained by polymerizing ethylene and a small amount of $\alpha$-olefin using a polymerization process employing a multi-site catalyst, such as a Ziegler-Natta catalyst, or a single-site catalyst, such as a metallocene catalyst, more preferably polyethylene produced using a metallocene catalyst.

The density of the high-density polyethylene is preferably more than 0.945 g/cm$^3$ and 0.960 g/cm$^3$ or less. The density of the medium-density polyethylene is preferably more than 0.930 g/cm$^3$ and 0.945 g/cm$^3$ or less. The density can be adjusted by, for example, the quantity of introduced constituent units derived from the $\alpha$-olefin serving as a comonomer in the ethylene-$\alpha$-olefin copolymer.

In the stretched base materials according to the fifth aspect and the sixth aspect, the melting point (Tm) of the polyethylene is preferably 100°C or above, more preferably 105°C or above, even more preferably 110°C or above, particularly preferably 115°C or above, and preferably is 140°C or below, for reasons such as the strength and heat resistance of the biaxially oriented polyethylene films. For example, the melting point is 100°C or above and 140°C or below.

Polyethylene layer (1) may contain, for example, high-density polyethylene as its main component, may contain medium-density polyethylene as its main component, or may contain a mixture of high-density polyethylene and medium-density polyethylene as its main component.

Polyethylene layer (1) may contain, for example, a mixture of high-density polyethylene and at least one different type of polyethylene as its main component, may contain a mixture of medium-density polyethylene and at least one different type of polyethylene as its main component, or may contain a mixture of high-density polyethylene, medium-density polyethylene, and at least one different type of polyethylene as its main component.

When the main component is a mixture as described above, it means that the percentage of the mixture in polyethylene layer (1) is more than 50% by mass. This percentage is preferably 60% by mass or more, more preferably 70% by mass or more, even more preferably 80% by mass or more.

The high-density polyethylene may be, for example, a homopolymer of ethylene, may be an ethylene-$\alpha$-olefin copolymer, or may be a mixture thereof. The medium-density polyethylene may be, for example, a homopolymer of ethylene, may be an ethylene-$\alpha$-olefin copolymer, or may be a mixture thereof.

An example of the different type of polyethylene is at least one type selected from linear low-density polyethylene and high-pressure low-density polyethylene. The different type of polyethylene may be linear low-density polyethylene, may be high-pressure low-density polyethylene, or may be a mixture of linear low-density polyethylene and high-pressure low-density polyethylene.

The sum of the percentages of high-density polyethylene and medium-density polyethylene in polyethylene layer (1) is preferably 10% by mass or more, more preferably 15% by mass or more, even more preferably 20% by mass or more, for heat resistance reasons. The sum of the percentages may be 30% by mass or more, may be 35% by mass or more, or may be 40% by mass or more.

The sum of the percentages of high-density polyethylene and medium-density polyethylene in polyethylene layer (1) is 100% by mass or less. The sum of the percentages is preferably 90% by mass or less, more preferably 85% by mass or less, even more preferably 80% by mass or less, for suitability for biaxial orientation. The sum of the percentages may be 70% by mass or less, may be 65% by mass or less, or may be 60% by mass or less.

The sum of the percentages of high-density polyethylene and medium-density polyethylene in polyethylene layer (1) is, for example, 10% by mass or more and 100% by mass or less, and preferably is 20% by mass or more and 60% by mass or less.

When polyethylene layer (1) is a surface resin layer of the film, a small sum of the percentages tends to result in the possibility of improving adhesion between the surface resin layer and a printed layer, a vapor deposition film, or the like through surface treatment as mentioned above. This is presumably because high-density polyethylene, for example, has high crystallinity, which may prevent the introduction of a sufficient quantity of polar groups into the polyethylene layer through surface treatment, such as corona treatment. When the sum of the percentages is small, however, a sufficient quantity of polar groups can be introduced into the polyethylene layer through surface treatment, such as corona treatment. When polyethylene layer (1) is a surface resin layer of the film, furthermore, small percentages tend to result in excellent appearance, surface smoothness, and transparency of the film.

Polyethylene layer (1) preferably further contains linear low-density polyethylene in addition to at least one type of polyethylene selected from high-density polyethylene and medium-density polyethylene for suitability for biaxial orientation. More preferably, polyethylene layer (1) further contains linear low-density polyethylene in addition to high-density polyethylene.

Examples of linear low-density polyethylene include ethylene-α-olefin copolymers. Examples of α-olefins include the aforementioned α-olefins containing 3 or more and 20 or fewer carbons. α-Olefins containing 3 or more and 8 or fewer carbons are preferred, and α-olefins containing 4 or more and 8 or fewer carbons are more preferred. Examples of linear low-density polyethylene include ethylene-1-butene copolymers (C4-LLDPE), in which at least 1-butene serves as a comonomer, ethylene-1-hexene copolymers (C6-LLDPE), in which at least 1-hexene serves as a comonomer, and ethylene-1-octene copolymers (C8-LLDPE), in which at least 1-octene serves as a comonomer. In these copolymers, the specified comonomers are not the only ones; additional comonomers may also be used. For example, linear low-density polyethylene produced using a metallocene catalyst is preferred. The density of the linear low-density polyethylene is preferably 0.900 g/cm$^3$ or more and 0.930 g/cm$^3$ or less.

The percentage of linear low-density polyethylene in polyethylene layer (1) is preferably 10% by mass or more, more preferably 15% by mass or more, even more preferably 20% by mass or more, for suitability for biaxial orientation. The percentage may be 30% by mass or more, may be 35% by mass or more, or may be 40% by mass or more.

The percentage of linear low-density polyethylene in polyethylene layer (1) is preferably 90% by mass or less, more preferably 85% by mass or less, even more preferably 80% by mass or less, for heat resistance reasons. The percentage may be 70% by mass or less, may be 65% by mass or less, or may be 60% by mass or less.

The percentage of linear low-density polyethylene in polyethylene layer (1) is, for example, 10% by mass or more and 90% by mass or less, and preferably is 40% by mass or more and 80% by mass or less.

Polyethylene layer (1) contains polyethylene as its main component.

The percentage of polyethylene in polyethylene layer (1) is preferably 80% by mass or more, more preferably 85% by mass or more, even more preferably 90% by mass or more, particularly preferably 95% by mass or more.

Polyethylene layer (1) may contain types of polyethylene other than high-density polyethylene, medium-density polyethylene, and linear low-density polyethylene, and resin materials other than polyethylene. Examples of resin materials other than polyethylene include polyolefins other than polyethylene, polyesters, polyamides, (meth)acrylic resins, vinyl resins, cellulose resins, and ionomer resins.

Polyethylene layer (1) may contain additives. Examples of additives include crosslinking agents, antioxidants, ultraviolet absorbers, photostabilizers, anti-blocking agents, slipping agents, fillers, reinforcing agents, antistatic agents, compatibilizers, pigments, and reforming resins.

<Polyethylene Layer (2)>

The stretched base material according to the sixth aspect includes polyethylene layer (2).

Polyethylene layer (2) contains polyethylene as its main component, and the polyethylene has a density of more than 0.930 g/cm$^3$ and 0.960 g/cm$^3$ or less. The density of the polyethylene in polyethylene layer (2) is preferably 0.931 g/cm$^3$ or more and 0.955 g/cm$^3$ or less, more preferably 0.931 g/cm$^3$ or more and 0.950 g/cm$^3$ or less.

When polyethylene layer (2) contains two or more types of polyethylene with different densities, the above density of polyethylene represents the density of the mixture of two or more types of polyethylene. The density is measured according to method D (density gradient column method, 23°C) in JIS K7112: 1999 for polyethylene sampled from the layer. When this measurement is difficult, the average density $D_{av}$ calculated according to the equation below may be used as the density of the polyethylene constituting the layer.

$$D_{av} = \Sigma W_i \times D_i$$

In the equation, $\Sigma$ means that $W_i \times D_i$ is summated for i from 1 to n (n types of polyethylene present), n is an integer of 2 or greater, $W_i$ denotes the mass fraction of the i-th polyethylene, and $D_i$ denotes the density (g/cm$^3$) of the i-th polyethylene.

The density of polyethylene layer (2) can be adjusted based on, for example, the composition described in relation to polyethylene layer (1) described above. That is, polyethylene layer (2) can have a composition described in relation to polyethylene layer (1).

Polyethylene layer (2) may contain resin materials as mentioned above other than polyethylene.

Polyethylene layer (2) may contain additives as mentioned above.

<Layer Configuration of the Film>

The stretched base materials according to the fifth and sixth aspects will now be described.

The stretched base material (biaxially oriented polyethylene film) according to the fifth aspect is, in an embodiment, a monolayer film consisting of polyethylene layer (1). The stretched base material (biaxially oriented polyethylene film) according to the fifth aspect includes, in an embodiment, two or more polyethylene layers, with at least one of the polyethylene layers being polyethylene layer (1). Preferably, each of the polyethylene layers is polyethylene layer (1).

The stretched base material (biaxially oriented polyethylene film) according to the sixth aspect is, in an embodiment, a monolayer film consisting of polyethylene layer (2). The stretched base material (biaxially oriented polyethylene film) according to the sixth aspect includes, in an embodiment, two or more polyethylene layers, with at least one of the polyethylene layers being polyethylene layer (2). Preferably, each of the polyethylene layers is polyethylene layer (2).

The polyethylene layers contain polyethylene as their main component. Preferred examples of polyethylene include high-density polyethylene, medium-density polyethylene, low-density polyethylene, and linear low-density polyethylene. The percentage of polyethylene in the polyethylene layers is preferably 80% by mass or more, more preferably 85% by mass or more, even more preferably 90% by mass or more, particularly preferably 95% by mass or more.

The polyethylene layers may contain resin materials as mentioned above other than polyethylene.

The polyethylene layers may contain additives as mentioned above.

The biaxially oriented polyethylene film has, in an embodiment, a multilayer structure, which includes two or more layers. The number of layers in the film is preferably two or more, more preferably three or more, and preferably is nine or fewer, more preferably seven or fewer. For example, the number of layers is two or more and nine or fewer. Specifically, the number of layers in the biaxially oriented polyethylene film is three, five, seven, or nine. A biaxially oriented polyethylene film base material having a multilayer structure is superior in, for example, the balance between strength, rigidity, heat resistance, heat resistance, transparency, and printing suitability.

The biaxially oriented polyethylene film includes, in an embodiment, at least:

a first surface resin layer containing polyethylene as its main component;

a polyethylene intermediate layer containing polyethylene as its main component; and

a second surface resin layer containing polyethylene as its main component in this order in the thickness direction, and at least one layer selected from the first surface resin layer, the polyethylene intermediate layer, and the second surface resin layer is polyethylene layer (1) or polyethylene layer (2). For heat resistance reasons, it is preferred that each of the first surface resin layer, the polyethylene intermediate layer, and the second surface resin layer be polyethylene layer (1) or polyethylene layer (2).

Hereinafter, "include (layers) in this order in the thickness direction" will also be simply written as "include (layers) in this order."

The biaxially oriented polyethylene film may include two or more polyethylene intermediate layers.

The biaxially oriented polyethylene film may include a first surface resin layer, a first polyethylene layer, a second polyethylene layer, a third polyethylene layer, and a second surface resin layer in this order. At least one layer selected from the first surface resin layer, the first polyethylene layer, the second polyethylene layer, the third polyethylene layer, and the second surface resin layer is polyethylene layer (1) or polyethylene layer (2). For heat resistance reasons, it is preferred that each of these layers be polyethylene layer (1) or polyethylene layer (2).

The compositions of the first and second surface resin layers may be identical to each other or may be different. The thicknesses of the first and second surface resin layers may be equal to each other or may be different. The compositions of the first to third polyethylene layers may be identical to each other or may be different. The thicknesses of the first to third polyethylene layers may be equal to each other or may be different.

When any two adjacent layers selected from polyethylene layers in the biaxially oriented polyethylene film are referred to as layer (i) and layer (ii), the absolute difference between the density of the polyethylene constituting layer (i) and the density of the polyethylene constituting layer (ii) is preferably 0.030 g/cm$^3$ or less, more preferably 0.025 g/cm$^3$ or

less, even more preferably 0.020 g/cm$^3$ or less, particularly preferably 0.010 g/cm$^3$ or less, for all combinations. Such a film is superior in interlayer adhesion and is superior in, for example, drop resistance.

In a biaxially oriented polyethylene film according to an embodiment, the density of polyethylene in the polyethylene intermediate layer is higher than the density of polyethylene in the first surface resin layer, and the density of polyethylene in the second surface resin layer is lower than the density of polyethylene in the polyethylene intermediate layer. Such a film tends to be superior in the balance between heat resistance and surface smoothness, transparency, printing suitability, and adhesion in vapor deposition. When the thickness of the polyethylene intermediate layer is larger than that of the surface resin layers, high heat resistance is achieved by virtue of the polyethylene intermediate layer. The difference in the density of polyethylene between the polyethylene intermediate layer and these surface resin layers may be, for example, 0.003 g/cm$^3$ or more.

The sum of the percentages of high-density polyethylene and medium-density polyethylene is hereinafter referred to as "percentage A." In this context, the material may be high-density polyethylene alone, may be medium-density polyethylene alone, or may be a mixture of high-density polyethylene and medium-density polyethylene.

In a biaxially oriented polyethylene film according to an embodiment, percentage A in the polyethylene intermediate layer is greater than percentage A in the first surface resin layer, and percentage A in the second surface resin layer is smaller than percentage A in the polyethylene intermediate layer. Such a film tends to be superior in the balance between heat resistance and surface smoothness, transparency, printing suitability, and adhesion in vapor deposition. The difference in percentage A between the polyethylene intermediate layer and these surface resin layers may be, for example, 10% by mass or more, and may be 30% by mass or less.

In a biaxially oriented polyethylene film according to an embodiment, the density of polyethylene in the polyethylene intermediate layer is lower than the density of polyethylene in the first surface resin layer, and the density of polyethylene in the second surface resin layer is higher than the density of polyethylene in the polyethylene intermediate layer. Such a film tends to be superior in the balance between suitability for biaxial orientation and heat resistance. When the thickness of the polyethylene intermediate layer is larger than those of the surface resin layers, high suitability for biaxial orientation is achieved by virtue of the polyethylene intermediate layer. The difference in the density of polyethylene between these surface resin layers and polyethylene intermediate layer may be, for example, 0.003 g/cm$^3$ or more.

In a biaxially oriented polyethylene film according to an embodiment, percentage A in the polyethylene intermediate layer is smaller than percentage A in the first surface resin layer, and percentage A in the second surface resin layer is greater than percentage A in the polyethylene intermediate layer. Such a film tends to be superior in the balance between suitability for biaxial orientation and heat resistance. The difference in percentage A between these surface resin layers and polyethylene intermediate layer may be, for example, 10% by mass or more, and may be 30% by mass or less.

In a biaxially oriented polyethylene film according to an embodiment, the densities of polyethylene in the first surface resin layer, the polyethylene intermediate layer, and the second surface resin layer are substantially equal to each other. For example, the difference in the density of polyethylene between the layer with the highest polyethylene density and the layer with the lowest polyethylene density among the first surface resin layer, the polyethylene intermediate layer, and the second surface resin layer is less than 0.003 g/cm$^3$.

In a biaxially oriented polyethylene film according to an embodiment, percentages A in the first surface resin layer, the polyethylene intermediate layer, and the second surface resin layer are substantially equal to each other. For example, the difference in percentage A between the layer with the largest percentage A and the layer with the smallest percentage A among the first surface resin layer, the polyethylene intermediate layer, and the second surface resin layer is less than 10% by mass.

It should be noted that when each layer described above contains two or more types of polyethylene with different densities, the density of polyethylene refers to the density of the mixture of two or more types of polyethylene. The methods for measuring and calculating this density are as described above.

Either one or both of the first and second surface resin layers may further contain particles. By incorporating particles in the surface resin layer(s), anti-blocking properties or lubricity of the biaxially oriented polyethylene film, for example, can be improved. The following description of particles is also applicable to the stretched base materials according to the first to fourth aspects.

Examples of particles include inorganic compound-based anti-blocking agents and resin particle-based anti-blocking agents. Specific examples of inorganic compound-based anti-blocking agents include oxides, such as silica, aluminum oxide, magnesium oxide, calcium oxide, titanium oxide, and zinc oxide, hydroxides, such as aluminum hydroxide, magnesium hydroxide, and calcium hydroxide, carbonates, such as magnesium carbonate and calcium carbonate, sulfates, such as calcium sulfate and barium sulfate, silicates, such as magnesium silicate, aluminum silicate, calcium silicate, and aluminosilicic acid, as well as kaolin, talc, and diatomaceous earth. Specific examples of the resin particles include resin particles composed of resin components such as polymethyl methacrylate (PMMA), polystyrene, methyl methacrylate-styrene copolymers, polyesters, polyamides, polytetrafluoroethylene, epoxy resins, urea resins, and phenolic resins. The resin particles may be crosslinked particles or may be non-crosslinked particles.

The particles may be an inorganic compound-based anti-blocking agent for cost and other reasons.

The particles may be a resin particle-based anti-blocking agent. As a result of this, the possibility of damage from the particles to a vapor deposition film can be reduced when the base material is stored in a rolled form, for example in the case of a barrier base material as described later in which one surface resin layer contains a resin particle-based anti-blocking agent and that includes a vapor deposition film on the other surface resin layer. This is because resin particle-based anti-blocking agents typically have smaller surface irregularities and are more flexible than inorganic compound-based anti-blocking agents.

The average diameter of the particles is preferably 0.5 μm or more, more preferably 1 μm or more, even more preferably 2 μm or more, and preferably is 6 μm or less, more preferably 5.5 μm or less, even more preferably 5 μm or less. For example, the average particle diameter is 0.5 μm or more and 6 μm or less. The average diameter of particles refers to the average of particle diameters (arithmetic mean diameter) measured for 100 randomly selected non-aggregated particles in a cross-section in the thickness direction of the layer observed using a scanning electron microscope (SEM).

The quantity of the particles in the case where the first surface resin layer contains particles is preferably 100 ppm or more, more preferably 500 ppm or more, even more preferably 1,000 ppm or more, and preferably is 10,000 ppm or less, more preferably 8,000 ppm or less, even more preferably 5,000 ppm or less, based on the mass of the first surface resin layer. For example, the quantity of the particles is 100 ppm or more and 10,000 ppm or less.

The quantity of the particles in the case where the second surface resin layer contains particles is preferably 100 ppm or more, more preferably 500 ppm or more, even more preferably 1,000 ppm or more, and preferably is 10,000 ppm or less, more preferably 8,000 ppm or less, even more preferably 5,000 ppm or less, based on the mass of the second surface resin layer. For example, the quantity of the particles is 100 ppm or more and 10,000 ppm or less.

When a vapor deposition film is provided on a surface resin layer, it is preferred that the surface resin layer on which the vapor deposition film is provided contain no particles for the ease of formation of the vapor deposition film.

The ratio between the average diameter of the particles and the thickness of the surface resin layer(s) in the case where a surface resin layer(s) contains particles (average particle diameter/thickness) is preferably 0.5 or greater and 5.0 or less, more preferably 0.8 or greater and 4.0 or less, even more preferably 1.0 or greater and 3.5 or less. The surface resin layer(s) in this context may be the first surface resin layer, may be the second surface resin layer, or may be both.

The thicknesses of the first and second surface resin layers are preferably 0.3 μm or more, more preferably 0.5 μm or more, even more preferably 0.8 μm or more, and preferably are 15 μm or less, more preferably 10 μm or less, even more preferably 5 μm or less, particularly preferably 3 μm or less, independently for each layer. For example, each thickness is 0.3 μm or more and 15 μm or less. When the surface resin layers have protrusions caused by particles, the thickness of each layer is preferably measured in a region in which no such protrusions caused by particles are present.

The thicknesses of the first and second surface resin layers are preferably 1% or more, more preferably 2% or more, even more preferably 4% or more, and preferably are 20% or less, more preferably 15% or less, even more preferably 10% or less, particularly preferably 8% or less, relative to the thickness of the biaxially oriented polyethylene film, independently for each layer. For example, each thickness is 1% or more and 20% or less.

In the biaxially oriented polyethylene film, the thickness of the polyethylene intermediate layer is preferably 6 μm or more, more preferably 10 μm or more, even more preferably 14 μm or more, and preferably is 100 μm or less, more preferably 80 μm or less, even more preferably 60 μm or less, still more preferably 40 μm or less, particularly preferably 30 μm or less. For example, the thickness is 6 μm or more and 100 μm or less. A biaxially oriented polyethylene film including a polyethylene intermediate layer having a thickness equal to or greater than the lower limits is superior in, for example, strength, rigidity, heat resistance, and recyclability. A biaxially oriented polyethylene film including a polyethylene intermediate layer having a thickness equal to or smaller than the upper limits is superior in, for example, workability. When the biaxially oriented polyethylene film includes two or more polyethylene intermediate layers, this "thickness" refers to the sum of the thickness of each polyethylene intermediate layer.

In the biaxially oriented polyethylene film, the thickness of the polyethylene intermediate layer is preferably 60% or more, more preferably 70% or more, even more preferably 80% or more, particularly preferably 84% or more, and preferably is 98% or less, more preferably 96% or less, even more preferably 92% or less, relative to the thickness of the biaxially oriented polyethylene film. For example, the thickness is 60% or more and 98% or less. When the biaxially oriented polyethylene film includes two or more polyethylene intermediate layers, this "thickness" refers to the sum of the thickness of each polyethylene intermediate layer.

The biaxially oriented polyethylene film may include one polyethylene intermediate layer or may include two or more. The biaxially oriented polyethylene film may include a first surface resin layer, a first polyethylene layer, a second polyethylene layer, a third polyethylene layer, and a second surface resin layer in this order.

The thickness of the second polyethylene layer is preferably 4 μm or more, more preferably 6 μm or more, even more preferably 8 μm or more, and preferably is 60 μm or less, more preferably 40 μm or less, even more preferably 20 μm or less, because this makes the advantages described above more pronounced. For example, the thickness is 4 μm or more and 60 μm or less.

The thickness of the second polyethylene layer is preferably 50% or more, more preferably 60% or more, even more preferably 70% or more, and preferably is 94% or less, more preferably 90% or less, even more preferably 86% or less, relative to the thickness of the polyethylene intermediate layers. For example, the thickness is 50% or more and 94% or less.

The thicknesses of the first and third polyethylene layers are preferably 0.5 $\mu$m or more, more preferably 0.8 $\mu$m or more, even more preferably 1 $\mu$m or more, and preferably are 18 $\mu$m or less, more preferably 13 $\mu$m or less, even more preferably 8 $\mu$m or less, particularly preferably 5 $\mu$m or less, independently for each layer. For example, each thickness is 0.5 $\mu$m or more and 18 $\mu$m or less.

The thicknesses of the first and third polyethylene layers are preferably 3% or more, more preferably 5% or more, even more preferably 7% or more, and preferably are 25% or less, more preferably 20% or less, even more preferably 15% or less, relative to the thickness of the polyethylene intermediate layers, independently for each layer. For example, each thickness is 3% or more and 25% or less.

In a biaxially oriented polyethylene film including a first surface resin layer, a first polyethylene layer, a second polyethylene layer, a third polyethylene layer, and a second surface resin layer in this order, the ratio of the thickness of the first polyethylene layer to the thickness of the third polyethylene layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the film and reduced occurrence of curling.

The ratio of the thickness of the second surface resin layer to the thickness of the first surface resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the film and reduced occurrence of curling.

When a vapor deposition film is provided on the biaxially oriented polyethylene film, a layer containing a gas barrier resin as its main component or a layer containing polyethylene and an adhesive resin, for example, may be provided between the polyethylene layer and the vapor deposition film. In that case, a surface resin layer as described above in the biaxially oriented polyethylene film may be a layer containing a gas barrier resin as its main component or a layer containing polyethylene and an adhesive resin, and the vapor deposition film may be provided on this layer. Alternatively, a layer containing a gas barrier resin as its main component (e.g., a coating layer or an extruded resin layer) or a layer containing polyethylene and an adhesive resin (e.g., a coating layer or an extruded resin layer) may be provided on the biaxially oriented polyethylene film, and the vapor deposition film may be provided on this layer. With such a layer provided, the vapor deposition film tends to be superior in adhesion to the biaxially oriented polyethylene film and capable of exhibiting good gas barrier properties.

The thickness of the layer containing a gas barrier resin as its main component or the layer containing polyethylene and an adhesive resin is not particularly limited, but may each independently be 0.3 $\mu$m or more, may be 0.5 $\mu$m or more, may be 0.8 $\mu$m or more, may be 15 $\mu$m or less, may be 10 $\mu$m or less, or may be 5 $\mu$m or less. For example, the thickness is 0.3 $\mu$m or more and 15 $\mu$m or less.

A gas barrier resin is a resin having the function of limiting the penetration of gases. Examples of gas barrier resins include ethylene-vinyl alcohol copolymers, polyvinyl alcohol, polyamides, polyvinylidene chloride, polyesters, polyether polyols, polyester polyols, polyurethanes, polyacrylonitrile, and (meth)acrylic resins. Of these, ethylene-vinyl alcohol copolymers, polyvinyl alcohol, and polyamides are particularly preferred from viewpoints such as gas barrier properties (oxygen barrier properties in particular), heat resistance, and rigidity, with ethylene-vinyl alcohol copolymers and polyamides being more preferred.

Examples of adhesive resins include acid-modified resins, silicone resins, epoxy resins, and phenolic resins, with acid-modified resins being preferred. Examples of acid-modified resins include acid-modified polyolefins and acid-modified vinyl resins. Of these, acid-modified polyolefins are particularly preferred from the viewpoints of recyclability and adhesion. Acid-modified polypropylene and acid-modified polyethylene are more preferred, and acid-modified polyethylene is even more preferred. Examples of acid-modified polyolefins include polyolefins (e.g., polypropylene and polyethylene) modified with acid modification agents, polyolefins grafted with acid modification agents in particular. Examples of acid modification agents include unsaturated carboxylic acids, such as maleic acid, fumaric acid, acrylic acid, methacrylic acid, itaconic acid, citraconic acid, and tetrahydrophthalic acid, or their acid anhydrides, esters, or metal salts. Preferred acid-modified polyolefins are maleic acid-modified polyolefins and maleic anhydride-modified polyolefins, with maleic acid-modified polypropylene, maleic anhydride-modified polypropylene, maleic acid-modified polyethylene, and maleic anhydride-modified polyethylene being more preferred.

In the layer containing polyethylene and an adhesive resin, preferably, the percentage of the polyethylene is 60% by mass or more and 95% by mass or less, and the percentage of the adhesive resin is 5% by mass or more and 40% by mass or less. More preferably, the percentage of polyethylene is 70% by mass or more and 95% by mass or less, and the percentage of the adhesive resin is 5% by mass or more and 30% by mass or less. Even more preferably, the percentage of polyethylene is 80% by mass or more and 95% by mass or less, and the percentage of the adhesive resin is 5% by mass or more and 20% by mass or less. Particularly preferably, the percentage of polyethylene is 85% by mass or more and 95% by mass or less, and the percentage of the adhesive resin is 5% by mass or more and 15% by mass or less.

<Layer Configuration of the Biaxially Oriented Polyethylene Film>

In the following, several examples will be presented for the layer configuration of the biaxially oriented polyethylene film according to the present disclosure, with reference to drawings.

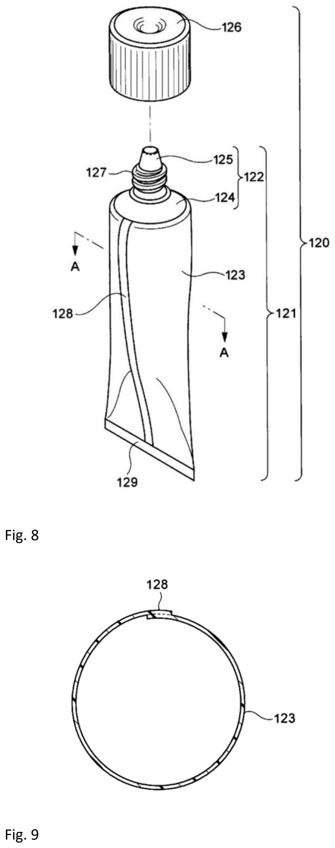

The biaxially oriented polyethylene film 1A illustrated in Fig. 9 consists of a polyethylene layer 10.

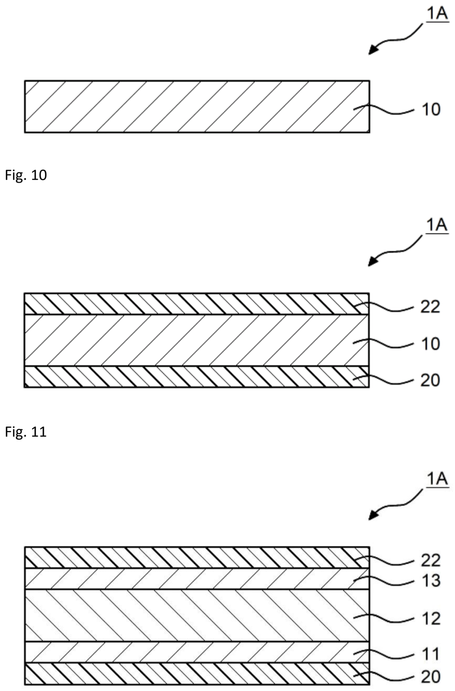

The biaxially oriented polyethylene film 1A illustrated in Fig. 10 includes a first surface resin layer 20, a polyethylene layer 10 (polyethylene intermediate layer), and a second surface resin layer 22 in this order.

The biaxially oriented polyethylene film 1A illustrated in Fig. 11 includes a first surface resin layer 20, a first polyethylene layer 11, a second polyethylene layer 12, a third polyethylene layer 13, and a second surface resin layer 22 in this order.

<Gas Barrier Properties of the Stretched Base Material>

The oxygen transmission rate (unit: $cc/(m^2 \cdot day \cdot atm)$) of the stretched base material according to the present disclosure may be, for example, less than 30, may be less than 25, may be less than 18, may be less than 10, or may be less than 5.0. The oxygen transmission rate is measured in an environment at a temperature of 23°C and a humidity of 90% RH according to JIS K7126-2: 2006.

The water vapor transmission rate (unit: $g/(m^2 \cdot day)$) of the stretched base material according to the present disclosure may be, for example, less than 20, may be less than 15, may be less than 10, may be less than 8.0, or may be less than 5.0. The water vapor transmission rate is measured in an environment at a temperature of 40°C and a humidity of 90% RH according to JIS K7129-2: 2019.

[Barrier Base Material]

Barrier base materials according to the first to third aspects of the present disclosure each include:

a stretched base material according to any of the first to third aspects described above; and

at least one vapor deposition film provided on the surface of at least one selected from the first surface resin layer and the second surface resin layer in the stretched base material.

A barrier base material according to the fourth aspect of the present disclosure includes:

a stretched base material according to the fourth aspect described above; and

a vapor deposition film provided on the surface of the second surface resin layer in the stretched base material.

Barrier base materials according to the fifth and sixth aspects of the present disclosure each include:

a stretched base material according to any of the fifth or sixth aspect described above; and

at least one vapor deposition film provided on at least one surface of the stretched base material (e.g., vapor deposition film(s) provided on the surface of at least one selected from a first surface resin layer and a second surface resin layer).

In the barrier base materials according to the first to third aspects, the vapor deposition film may be provided solely on the surface of the first surface resin layer in the stretched base material, may be provided solely on the surface of the second surface resin layer, or may be provided on the surface of the first surface resin layer and the surface of the second surface resin layer. In the barrier base material according to the fourth aspect, the vapor deposition film may also be provided on the surface of the first surface resin layer in the stretched base material.

In the barrier base materials according to the fifth and sixth aspects, the vapor deposition film may be provided solely on one surface of the stretched base material (biaxially oriented polyethylene film), may be provided solely on the other surface, or may be provided on both surfaces. In the barrier base materials according to the fifth and sixth aspects, the vapor deposition film may be provided solely on the surface of a first surface resin layer in the stretched base material (biaxially oriented polyethylene film), may be provided solely on the surface of a second surface resin layer, or may be provided on the surface of the first surface resin layer and the surface of the second surface resin layer.

As mentioned above, the barrier base materials according to the fifth and sixth aspects may include, for example, a layer containing a gas barrier resin as its main component or a layer containing polyethylene and an adhesive resin between the polyethylene layer and the vapor deposition film. For example, a surface resin layer as described above in the biaxially oriented polyethylene film may be a layer containing a gas barrier resin as its main component or a layer containing polyethylene and an adhesive resin, and the vapor deposition film may be provided on this layer. Alternatively, the barrier base materials may include a layer containing a gas barrier resin as its main component (e.g., a coating layer or an extruded resin layer) or a layer containing polyethylene and an adhesive resin (e.g., a coating layer or an extruded resin layer) between the biaxially oriented polyethylene film and the vapor deposition film. With such a layer provided, the vapor deposition film tends to be superior in adhesion to the biaxially oriented polyethylene film and capable of exhibiting good gas barrier properties.

When a matter common to the barrier base materials according to the first to sixth aspects is described or when the barrier base materials according to the first to sixth aspects are not specifically distinguished, the term "barrier base material" may simply be used.

The barrier base material according to the present disclosure includes, in an embodiment, at least:

a first vapor deposition film;

a stretched base material as described above; and

a second vapor deposition film

in this order in the thickness direction.

The stretched base material has a first surface and a second surface opposite the first surface. In an embodiment, the first surface resin layer constitutes the first surface, and the second surface resin layer constitutes the second surface. The first vapor deposition film is provided on the first surface of the stretched base material. The first vapor deposition film is provided on, for example, the surface of the first surface resin layer of the stretched base material. The second vapor deposition film is provided on the second surface of the stretched base material. The second vapor deposition film is provided on, for example, the surface of the second surface resin layer of the stretched base material.

The barrier base material may further include a printed layer, which will be described later.

<Vapor Deposition Film>

The barrier base material according to the present disclosure includes at least one vapor deposition film and is superior in gas barrier properties. A packaging container produced using such a barrier base material, therefore, is superior in gas barrier properties. The barrier base material according to the present disclosure includes, in an embodiment, a first vapor deposition film and a second vapor deposition film and is better in terms of gas barrier properties. With such a barrier base material, the deterioration of gas barrier properties caused by pinholes can be reduced because the barrier base material includes vapor deposition films on both surfaces of the stretched base material.

The vapor deposition film is composed of, for example, a metal and/or an inorganic oxide. The vapor deposition film may be a metal deposition film composed of one or two or more metals or may be an inorganic oxide deposition film composed of one or two or more inorganic oxides. An inorganic oxide deposition film may be a transparent deposition film. Examples of metals include aluminum, chromium, tin, nickel, copper, silver, gold, and platinum. Examples of inorganic oxides include aluminum oxide, silicon oxide, magnesium oxide, calcium oxide, zirconium oxide, titanium oxide, boron oxide, hafnium oxide, barium oxide, and silicon oxycarbide (carbon-containing silicon oxide). Of vapor deposition films, an aluminum deposition film, an aluminum oxide (alumina) deposition film, a silicon oxide (silica) deposition film, and a silicon oxycarbide deposition film are particularly preferred, and it is preferred that each of the first vapor deposition film and the second vapor deposition film be independently an aluminum deposition film, an aluminum oxide (alumina) deposition film, a silicon oxide (silica) deposition film, or a silicon oxycarbide deposition film.

The combination of the first vapor deposition film and the second vapor deposition film is not particularly limited.

The first vapor deposition film may be a metal deposition film with the second vapor deposition film being a metal deposition film, and in that case the two films may be identical or may be different. One of the first vapor deposition film or the second vapor deposition film may be a metal deposition film with the other being an inorganic oxide deposition film or transparent deposition film. The first vapor deposition film may be an inorganic oxide deposition film or transparent deposition film, the second vapor deposition film may be an inorganic oxide deposition film or transparent deposition film, and in that case the two films may be identical or may be different.

In an embodiment, the first vapor deposition film is a metal deposition film, and the second vapor deposition film is a metal deposition film. In this case, the two films may be identical or may be different. Such a barrier base material is particularly superior in gas barrier properties.

For example, when a packaging container is produced using a laminate that includes a barrier base material having metal deposition films, such as aluminum deposition films, on both surfaces of a stretched base material, the metal deposition films are oxidized and turn into metal oxides, depending on the type of contents packed within the packaging container. As a result, problems such as discoloration or corrosion of the films or lifting and detachment of layers due to reduced lamination strength caused by volume expansion can occur.

In an embodiment, at least either one of the first vapor deposition film or the second vapor deposition film is an inorganic oxide deposition film. By using a laminate including such a barrier base material, a packaging container superior in resistance to contents can be produced. For example, a laminate that includes a barrier base material and a heat-sealing layer is prepared. The laminate includes a barrier base material positioned such that the inorganic oxide deposition film faces the heat-sealing layer side (the inside of the packaging container) with the other vapor deposition film facing the outside (the outside of the packaging container). When both of the first vapor deposition film and the second vapor deposition film are inorganic oxide deposition films, the orientation of the barrier base material is not particularly limited. By producing a packaging container using this laminate, the discoloration, corrosion, or degradation of the vapor deposition films and the lifting and detachment of layers can be reduced, even when corrosive contents are packed within the packaging container. This is because the inorganic oxide deposition film(s) has already been oxidized, with which the occurrence of volume expansion through oxidation as seen with metal deposition films can be reduced.

In an embodiment, the first vapor deposition film is an inorganic oxide deposition film, and the second vapor deposition film is a metal deposition film. In an embodiment, the first vapor deposition film is a metal deposition film, and the second vapor deposition film is an inorganic oxide deposition film. The inorganic oxide deposition film may be a transparent deposition film.

In an embodiment, the first vapor deposition film is an inorganic oxide deposition film, and the second vapor deposition film is an inorganic oxide deposition film. In this case, the two films may be identical or may be different. The inorganic oxide deposition films may be transparent deposition films. With such a barrier base material, the problem of oxidative degradation when the vapor deposition films are metal deposition films, for example, can be avoided, and the corrosion of the vapor deposition films from the end faces of the barrier base material can also be reduced. Such a barrier base material, furthermore, is superior in transparency, and thus a packaging container superior in the visibility of contents can be produced using it. For example, a packaging container that can be used in a microwave oven can be produced, and a packaging container that can pass through a metal detector can also be produced. Moreover, with a packaging container that includes such a barrier base material, the absence of an aluminum deposition film can be clearly understood, for example by consumers, facilitating waste sorting. In recycling treatment, furthermore, the inclusion of black-spot (metal-colored) foreign matters, which can occur due to aluminum deposition films, can be reduced.

Both of the first vapor deposition film and the second vapor deposition film may be aluminum deposition films, and in that case the two films may be identical or may be different. Either one of the first vapor deposition film or the second vapor deposition film may be an alumina deposition film, a silica deposition film, or a silicon oxycarbide deposition film with the other being an aluminum deposition film. The first vapor deposition film may be an alumina deposition film, a silica deposition film, or a silicon oxycarbide deposition film with the second vapor deposition film being an alumina deposition film, a silica deposition film, or a silicon oxycarbide deposition film, and in that case the two films may be identical or may be different.

In an embodiment, the barrier base material according to the present disclosure includes a vapor deposition film solely on one surface of the stretched base material. In an embodiment, the barrier base material according to the present disclosure include a vapor deposition film solely on the surface of the second surface resin layer of the stretched base material and does not include a vapor deposition film on the surface of the first surface resin layer. By using a laminate including such a barrier base material, a packaging container superior in resistance to contents can be produced. For example, a laminate that includes a barrier base material and a heat-sealing layer is prepared. The laminate includes a barrier base material positioned such that the stretched base material faces the heat-sealing layer side (the inside of the packaging container) with the vapor deposition film facing the outside (the outside of the packaging container). By producing a packaging container using this laminate, the vapor deposition film can be placed outside, and thus the discoloration, corrosion, or degradation of the vapor deposition film and the lifting and detachment of layers can be reduced, even when corrosive contents are packed within the packaging container.

The thickness of the vapor deposition film is preferably 1 nm or more, more preferably 5 nm or more, even more preferably 10 nm or more, for gas barrier properties reasons. The thickness of the vapor deposition film is preferably 150 nm or less, more preferably 100 nm or less, even more preferably 80 nm or less, for reduced development of cracks in the vapor deposition film and for the recyclability of the packaging container. The thickness of the vapor deposition film is, for example, 1 nm or more and 150 nm or less. For the thicknesses of the first vapor deposition film and the second vapor deposition film, too, it is preferred that each independently fall within the above ranges.

When the vapor deposition film is an aluminum deposition film, the optical density (OD value) of the aluminum deposition film is preferably 2.0 or greater and 3.5 or less, more preferably 2.2 or greater and 3.5 or less, even more preferably 2.7 or greater and 3.5 or less, particularly preferably 3.0 or greater and 3.5 or less. Through this, oxygen barrier properties and water vapor barrier properties can be improved while, for example, productivity in the manufacture of the barrier base material is maintained. When one vapor deposition film is a transparent deposition film in the barrier base material according to the present disclosure, it tends to be possible to form, as the other vapor deposition film, an aluminum deposition film having a stable OD value and superior in thickness uniformity. The OD value can be measured according to JIS K7361-1: 1997.

The barrier base material may include two or more vapor deposition films on the first surface (or the surface of the first surface resin layer) of the stretched base material. The barrier base material may include two or more vapor deposition films on the second surface (or the surface of the second surface resin layer) of the stretched base material. Such a barrier base material is better in terms of, for example, gas barrier properties. Specifically, the barrier base material may include at least the stretched base material, a third vapor deposition film, and a fourth vapor deposition film in this order or may include at least a sixth vapor deposition film, a fifth vapor deposition film, the stretched base material, a third vapor deposition film, and a fourth vapor deposition film in this order, and may include additional vapor deposition films. A barrier coating layer may be provided on the fourth vapor deposition film. A barrier coating layer may be provided on the sixth vapor deposition film.

The fourth vapor deposition film may be in contact with the third vapor deposition film. The third vapor deposition film and the fourth vapor deposition film may be vapor deposition films constituting a multistage vapor deposition film. The sixth vapor deposition film may be in contact with the fifth vapor deposition film. The fifth vapor deposition film and the sixth vapor deposition film may be vapor deposition films constituting a multistage vapor deposition film. The thickness and/or composition of each vapor deposition film may be equal/identical to each other or may be different. A barrier coating layer may be provided on a multistage vapor deposition film.

The surface of the vapor deposition film has preferably undergone surface treatment as mentioned above. Such a vapor deposition film is superior in, for example, adhesion to the adjacent layer.

Examples of methods for forming the vapor deposition film include Physical Vapor Deposition (PVD) methods, such as vacuum deposition, sputtering, and ion plating, and Chemical Vapor Deposition (CVD) methods, such as plasma chemical vapor deposition, thermal chemical vapor deposition, and photochemical vapor deposition. The vapor deposition film may be a composite film including two or more vapor deposition films of different types formed using both physical vapor deposition and chemical vapor deposition in combination.

As for the degree of vacuum in the deposition chamber, approximately $10^{-2}$ to $10^{-8}$ mbar is preferred before oxygen introduction, and approximately $10^{-1}$ to $10^{-6}$ mbar is preferred after oxygen introduction. The amount of oxygen introduced and other parameters vary depending on conditions such as the size of the deposition machine. For the oxygen introduced, inert gases, such as an argon gas, a helium gas, and a nitrogen gas, may be used as carrier gases, provided that they do not interfere with the process. The rate of transport of the target film on which the vapor deposition film is formed is, for example, 10 m/min or more and 800 m/min or less.

The vapor deposition film may be single-layer, formed through one deposition step, or may be multilayer, formed through multiple deposition steps. When the vapor deposition film is multilayer, each layer may be composed of identical components or may be composed of different components. Each layer may be formed using an identical method or may be formed using different methods.

In an embodiment, the stretched base material includes a first surface resin layer constituting the first surface and a second surface resin layer constituting the second surface, the first vapor deposition film is provided on the surface of the first surface resin layer, and the second vapor deposition film is provided on the surface of the second surface resin layer. Such a stretched base material is superior in, for example, the ease of formation, smoothness, and adhesion of the vapor deposition films, and the resulting barrier base material is superior in, for example, gas barrier properties, specifically oxygen barrier properties and water vapor barrier properties. When the vapor deposition films are metal deposition films, furthermore, the barrier base material is superior in brightness.

In an embodiment, the stretched base material includes a first surface resin layer constituting the first surface and a second surface resin layer constituting the second surface, and the vapor deposition film is provided on the surface of the second surface resin layer. Such a stretched base material is superior in, for example, the ease of formation, smoothness, and adhesion of the vapor deposition film, and the resulting barrier base material is superior in, for example, gas barrier properties, specifically oxygen barrier properties and water vapor barrier properties. When the vapor deposition film is a metal deposition film, furthermore, the barrier base material is superior in brightness.

<Barrier Coating Layer>

The barrier base material according to the present disclosure may further include at least one barrier coating layer on the vapor deposition film. That is, the barrier base material may further include a barrier coating layer on the surface of the vapor deposition film opposite the surface closer to the stretched base material. Such a barrier base material is superior in, for example, oxygen barrier properties and water vapor barrier properties. When the vapor deposition film is composed of an inorganic oxide, such as aluminum oxide or silicon oxide, furthermore, the development of cracks in the vapor deposition film can be effectively reduced.

The barrier base material includes, in an embodiment, a metal deposition film as a first vapor deposition film, a first surface resin layer, a polyolefin intermediate layer, a second surface resin layer, an inorganic oxide deposition film as a second vapor deposition film, and a barrier coating layer in this order.

The barrier base material includes, in an embodiment, a barrier coating layer, an inorganic oxide deposition film as a first vapor deposition film, a first surface resin layer, a polyolefin intermediate layer, a second surface resin layer, and a metal deposition film as a second vapor deposition film in this order.

The barrier base material includes, in an embodiment, a first barrier coating layer, an inorganic oxide deposition film as a first vapor deposition film, a first surface resin layer, a polyolefin intermediate layer, a second surface resin layer, an inorganic oxide deposition film as a second vapor deposition film, and a second barrier coating layer in this order.

The barrier base material includes, in an embodiment, a first surface resin layer, a polyolefin intermediate layer, a second surface resin layer, an inorganic oxide deposition film, and a barrier coating layer in this order.

The barrier base material includes, in an embodiment, a metal deposition film as a first vapor deposition film, a biaxially oriented polyethylene film, an inorganic oxide deposition film as a second vapor deposition film, and a barrier coating layer in this order.

The barrier base material includes, in an embodiment, a barrier coating layer, an inorganic oxide deposition film as a first vapor deposition film, a biaxially oriented polyethylene film, and a metal deposition film as a second vapor deposition film in this order.

The barrier base material includes, in an embodiment, a first barrier coating layer, an inorganic oxide deposition film as a first vapor deposition film, a biaxially oriented polyethylene film, an inorganic oxide deposition film as a second vapor deposition film, and a second barrier coating layer in this order.

The barrier base material includes, in an embodiment, a biaxially oriented polyethylene film, an inorganic oxide deposition film, and a barrier coating layer in this order.

The barrier base material may include two or more laminate films each composed of a vapor deposition film and a barrier coating layer on the first surface (or the surface of the first surface resin layer) of the stretched base material. The barrier base material may include two or more laminate films each composed of a vapor deposition film and a barrier coating layer on the second surface (or the surface of the second surface resin layer) of the stretched base material. Such a barrier base material is better in terms of, for example, gas barrier properties.

The barrier base material may include a third vapor deposition film, a third barrier coating layer, a fourth vapor deposition film, and a fourth barrier coating layer in this order on the first surface (or the surface of the first surface resin layer) of the stretched base material. The barrier base material may include a third vapor deposition film, a third barrier coating layer, a fourth vapor deposition film, and a fourth barrier coating layer in this order on the second surface (or the surface of the second surface resin layer) of the stretched base material.

The barrier base material may include at least a sixth barrier coating layer, a sixth vapor deposition film, a fifth barrier coating layer, a fifth vapor deposition film, the stretched base material, a third vapor deposition film, a third barrier coating layer, a fourth vapor deposition film, and a fourth barrier coating layer in this order and may include additional laminate films each composed of a vapor deposition film and a barrier coating layer.

The thickness and/or composition of each vapor deposition film may be equal/identical to each other or may be different. The thickness and/or composition of each barrier coating layer may be equal/identical to each other or may be different.

In an embodiment, the barrier coating layer contains a gas barrier resin. Examples of gas barrier resins include ethylene-vinyl alcohol copolymers, polyvinyl alcohol, polyamides, polyvinylidene chloride, polyesters, polyether polyols, polyester polyols, polyurethanes, polyacrylonitrile, and (meth)acrylic resins.

The percentage of the gas barrier resin in the barrier coating layer is preferably more than 50% by mass, more preferably 60% by mass or more, even more preferably 70% by mass or more. Such a barrier coating layer is superior in, for example, gas barrier properties.

The barrier coating layer may contain additives as mentioned above.

The thickness of a barrier coating layer containing a gas barrier resin is preferably 0.01 $\mu$m or more, more preferably 0.1 $\mu$m or more, for gas barrier properties reasons. The thickness of a barrier coating layer containing a gas barrier resin is preferably 10 $\mu$m or less, more preferably 5 $\mu$m or less, for the workability of the barrier base material and the recyclability of the packaging container. The thickness is, for example, 0.01 $\mu$m or more and 10 $\mu$m or less.

The barrier coating layer can be formed by, for example, dissolving or dispersing the materials, such as a gas barrier resin, in water or an appropriate organic solvent, applying the resulting coating liquid to the vapor deposition film, and drying the applied liquid.

In another embodiment, the barrier coating layer is a gas barrier coating film formed by mixing a metal alkoxide, at least one water-soluble polymer, and optionally a silane coupling agent and optionally adding water, an organic solvent, and a sol-gel catalyst, applying the resulting gas barrier composition to the vapor deposition film, and drying the applied composition. The gas barrier coating film contains a hydrolysis and polycondensation product resulting from the hydrolysis and polycondensation of the metal alkoxide and other materials through the sol-gel process. By providing such a barrier coating layer on the vapor deposition film, gas barrier properties can be improved when the vapor deposition film is composed of an inorganic oxide. The development of cracks in the vapor deposition film, furthermore, can be effectively reduced.

Examples of metal alkoxides include alkoxysilanes, and specific examples include tetramethoxysilane, tetraethoxysilane, tetrapropoxysilane, and tetrabutoxysilane.

Examples of water-soluble polymers include hydroxyl-containing polymers, such as polyvinyl alcohol and ethylene-vinyl alcohol copolymers. Depending on the desired physical characteristics, such as oxygen barrier properties, water vapor barrier properties, water resistance, and weatherability, either one of polyvinyl alcohol or an ethylene-vinyl alcohol copolymer may be used, both may be used in combination, or a gas barrier coating film obtained using polyvinyl alcohol and a gas barrier coating film obtained using an ethylene-vinyl alcohol copolymer may be stacked. The amount of water-soluble polymer used is preferably 5 parts by mass or more and 500 parts by mass or less relative to 100 parts by mass of the metal alkoxide.

The silane coupling agent can be a known organoalkoxysilane containing an organic reactive group. Organoalkoxysilanes having an epoxy group are preferred, with examples including γ-glycidoxypropyltrimethoxysilane, γ-glycidoxypropyltriethoxysilane, γ-glycidoxypropylmethyldiethoxysilane, and β-(3,4-epoxycyclohexyl)ethyltrimethoxysilane. The amount of silane coupling agent used is preferably 1 part by mass or more and 20 parts by mass or less relative to 100 parts by mass of the metal alkoxide.

The gas barrier composition may contain water, preferably in a proportion of 0.1 moles or more, more preferably 0.5 moles or more, preferably 100 moles or less, more preferably 60 moles or less, per mole of the metal alkoxide. By setting the amount of water equal to or greater than the lower limits, the oxygen barrier properties and water vapor barrier properties of the barrier base material, for example, can be improved. By setting the amount of water equal to or smaller than the upper limits, the hydrolysis reaction, for example, can be performed rapidly.

The gas barrier composition may contain an organic solvent. Examples of organic solvents include methyl alcohol, ethyl alcohol, n-propyl alcohol, isopropyl alcohol, and n-butyl alcohol.

The sol-gel catalyst is preferably an acid or an amine compound.

Examples of methods for applying the gas barrier composition include application means such as gravure roll coating and other types of roll coating, spray coating, spin coating, dipping, a brush, bar coating, and an applicator.

In the following, an embodiment of a method for forming a gas barrier coating film will be described.

By mixing materials such as a metal alkoxide, a water-soluble polymer, a sol-gel catalyst, water, an organic solvent, and optionally a silane coupling agent, a gas barrier composition is prepared. Within the composition, a polycondensation reaction proceeds gradually. Using conventional methods, the composition is applied to the vapor deposition film and dried. Through this drying, the polycondensation of the metal alkoxide and the water-soluble polymer (and the silane coupling agent, if the composition contains a silane coupling agent) further proceeds, resulting in the formation of a layer of a composite polymer. Multiple composite polymer layers may be stacked by repeating this operation. For example, the applied composition is heated for 1 second or longer and 10 minutes or shorter, preferably at a temperature of 20°C or above, more preferably 50°C or above, even more preferably 70°C or above, and preferably at a temperature of 150°C or below, more preferably 120°C or below, even more preferably 100°C or below. Through this, a gas barrier coating film can be formed.

The thickness of the gas barrier coating film is preferably 0.01 μm or more, more preferably 0.05 μm or more, even more preferably 0.1 μm or more, and preferably is 100 μm or less, more preferably 50 μm or less, even more preferably 5 μm or less, still more preferably 2 μm or less, particularly preferably 1 μm or less. For example, the thickness is 0.01 μm or more and 100 μm or less. A barrier base material including such a gas barrier coating film is superior in, for example, gas barrier properties, and, with such a barrier base material, the development of cracks in a vapor deposition film composed of an inorganic oxide can be reduced. Such a barrier base material, furthermore, is superior in the recyclability and workability of packaging containers made therewith.

<Layer Configuration of the Barrier Base Material>

In the following, several examples will be presented for the layer configuration of the barrier base material according to the present disclosure, with reference to drawings. The layer configuration of the stretched base material according to the present disclosure will also be described in these drawings.

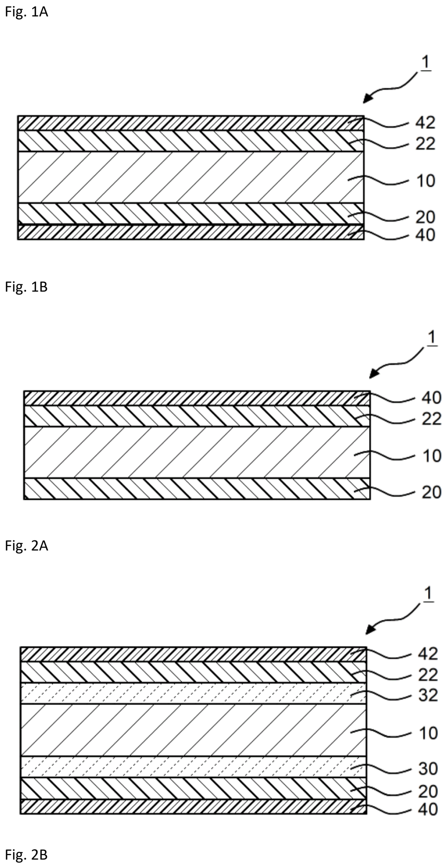

The barrier base material 1 illustrated in Fig. 1A includes a first vapor deposition film 40, a first surface resin layer 20, a polyolefin intermediate layer 10, a second surface resin layer 22, and a second vapor deposition film 42 in this order. The stretched base material includes a first surface resin layer 20, a polyolefin intermediate layer 10, and a second surface resin layer 22 in this order.

The barrier base material 1 illustrated in Fig. 1B includes a first surface resin layer 20, a polyolefin intermediate layer 10, a second surface resin layer 22, and a vapor deposition film 40 in this order. The stretched base material includes a first surface resin layer 20, a polyolefin intermediate layer 10, and a second surface resin layer 22 in this order.

The barrier base material 1 illustrated in Fig. 2A includes a first vapor deposition film 40, a first surface resin layer 20, a first adhesive resin layer 30, a polyolefin intermediate layer 10, a second adhesive resin layer 32, a second surface resin layer 22, and a second vapor deposition film 42 in this order. The stretched base material includes a first surface resin layer 20, a first adhesive resin layer 30, a polyolefin intermediate layer 10, a second adhesive resin layer 32, and a second surface resin layer 22 in this order.

The barrier base material 1 illustrated in Fig. 2B includes a first vapor deposition film 40, a first surface resin layer 20, a polyolefin intermediate layer 10, an adhesive resin layer 30, a second surface resin layer 22, and a second vapor deposition film 42 in this order. The stretched base material includes a first surface resin layer 20, a polyolefin intermediate layer 10, an adhesive resin layer 30, and a second surface resin layer 22 in this order.

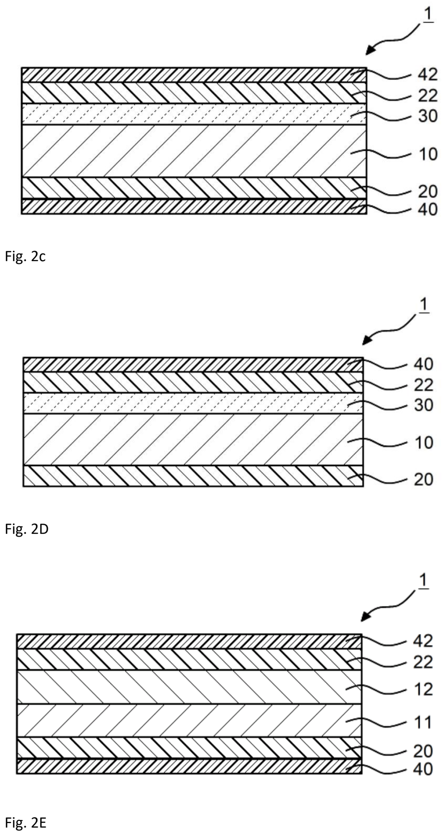

The barrier base material 1 illustrated in Fig. 2C includes a first surface resin layer 20, a polyolefin intermediate layer 10, an adhesive resin layer 30, a second surface resin layer 22, and a vapor deposition film 40 in this order. The stretched base material includes a first surface resin layer 20, a polyolefin intermediate layer 10, an adhesive resin layer 30, and a second surface resin layer 22 in this order.

The barrier base material 1 illustrated in Fig. 2D includes a first vapor deposition film 40, a first surface resin layer 20, a first polyolefin layer 11, a second polyolefin layer 12, a second surface resin layer 22, and a second vapor deposition film 42 in this order. The stretched base material includes a first surface resin layer 20, a first polyolefin layer 11, a second polyolefin layer 12, and a second surface resin layer 22 in this order.

The barrier base material 1 illustrated in Fig. 2E includes a first surface resin layer 20, a first polyolefin layer 11, a second polyolefin layer 12, a third polyolefin layer 13, a second surface resin layer 22, and a vapor deposition film 40 in this order. The stretched base material includes a first surface resin layer 20, a first polyolefin layer 11, a second polyolefin layer 12, a third polyolefin layer 13, and a second surface resin layer 22 in this order.

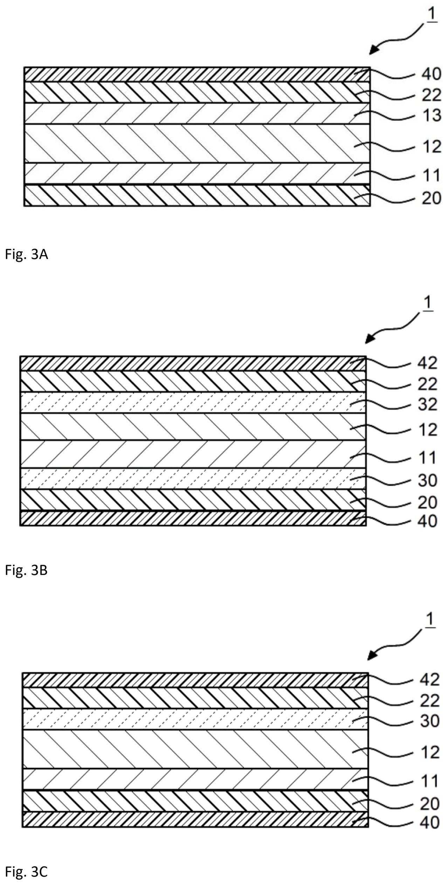

The barrier base material 1 illustrated in Fig. 3A includes a first vapor deposition film 40, a first surface resin layer 20, a first adhesive resin layer 30, a first polyolefin layer 11, a second polyolefin layer 12, a second adhesive resin layer 32, a second surface resin layer 22, and a second vapor deposition film 42 in this order. The stretched base material includes a first surface resin layer 20, a first adhesive resin layer 30, a first polyolefin layer 11, a second polyolefin layer 12, a second adhesive resin layer 32, and a second surface resin layer 22 in this order.

The barrier base material 1 illustrated in Fig. 3B includes a first vapor deposition film 40, a first surface resin layer 20, a first polyolefin layer 11, a second polyolefin layer 12, an adhesive resin layer 30, a second surface resin layer 22, and a second vapor deposition film 42 in this order. The stretched base material includes a first surface resin layer 20, a first polyolefin layer 11, a second polyolefin layer 12, an adhesive resin layer 30, and a second surface resin layer 22 in this order.

The barrier base material 1 illustrated in Fig. 3C includes a first vapor deposition film 40, a first surface resin layer 20, a first polyolefin layer 11, a second polyolefin layer 12, a third polyolefin layer 13, a second surface resin layer 22, and a second vapor deposition film 42 in this order. The stretched base material includes a first surface resin layer 20, a first polyolefin layer 11, a second polyolefin layer 12, a third polyolefin layer 13, and a second surface resin layer 22 in this order.

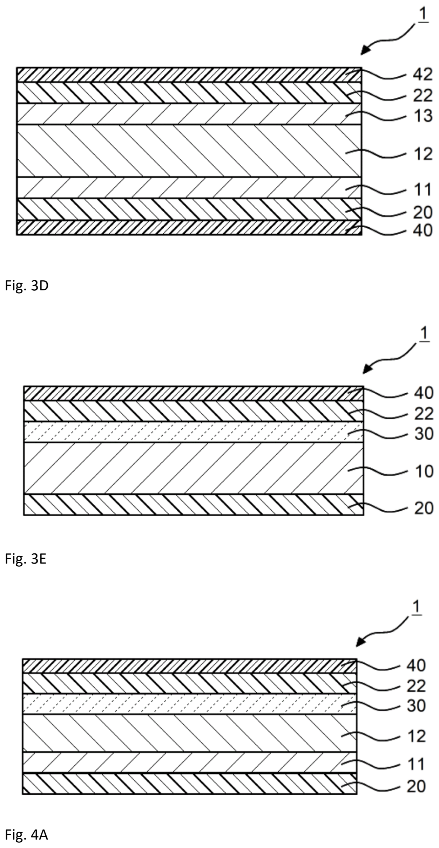

The barrier base material 1 illustrated in Fig. 3D includes a first surface resin layer 20, a polyolefin intermediate layer 10, an adhesive resin layer 30, a second surface resin layer 22, and a vapor deposition film 40 in this order. The stretched base material includes a first surface resin layer 20, a polyolefin intermediate layer 10, an adhesive resin layer 30, and a second surface resin layer 22 in this order.

The barrier base material 1 illustrated in Fig. 3E includes a first surface resin layer 20, a first polyolefin layer 11, a second polyolefin layer 12, an adhesive resin layer 30, a second surface resin layer 22, and a vapor deposition film 40 in this order. The stretched base material includes a first surface resin layer 20, a first polyolefin layer 11, a second polyolefin layer 12, an adhesive resin layer 30, and a second surface resin layer 22 in this order.

In Figs. 1 to Figs. 3, the barrier base material 1 may further include a barrier coating layer, not illustrated, on the first vapor deposition film 40. In Figs. 1 to Figs. 3, the barrier base material 1 may further include a barrier coating layer, not illustrated, on the second vapor deposition film 42. In Figs. 1 to Figs. 3, a vapor deposition film may be provided solely on one surface of the stretched base material. In Figs. 1 to Figs. 3, the barrier base material 1 may further include a barrier coating layer, not illustrated, on the vapor deposition film 40.

<Gas Barrier Properties of the Barrier Base Material>

The oxygen transmission rate (unit: cc/(m$^2$·day·atm)) of the barrier base material according to the present disclosure may be, for example, less than 30, may be less than 20, may be less than 10, may be less than 5.0, may be less than 4.0, may be less than 3.0, may be less than 2.0, may be less than 1.5, may be less than 1.0, may be less than 0.8, may be less than 0.5, may be less than 0.3, or may be less than 0.2. The lower limit to the oxygen transmission rate may be, for example, 0.01. The oxygen transmission rate is measured in an environment at a temperature of 23°C and a humidity of 90% RH according to JIS K7126-2: 2006.

The water vapor transmission rate (unit: g/(m$^2$·day)) of the barrier base material according to the present disclosure may be, for example, less than 10, may be less than 8.0, may be less than 5.0, may be less than 4.0, may be less than 3.0, may be less than 2.0, may be less than 1.5, may be less than 1.0, may be less than 0.8, may be less than 0.5, may be less than 0.3, or may be less than 0.2. The lower limit to the water vapor transmission rate may be, for example, 0.01. The water vapor transmission rate is measured in an environment at a temperature of 40°C and a humidity of 90% RH according to JIS K7129-2: 2019.

[Laminate]

A laminate according to the present disclosure includes at least a stretched base material, printing base material, or barrier base material as described above and at least one heat-sealing layer.

A laminate according to the first aspect of the present disclosure includes a stretched base material, printing base material, or barrier base material according to the first aspect of the present disclosure and at least one heat-sealing layer. A laminate according to the second aspect of the present disclosure includes a stretched base material, printing base material, or barrier base material according to the second aspect of the present disclosure and at least one heat-sealing layer. A laminate according to the third aspect of the present disclosure includes a stretched base material, printing base material, or barrier base material according to the third aspect of the present disclosure and at least one heat-sealing layer. A laminate according to the fourth aspect of the present disclosure includes a stretched base material, printing base material, or barrier base material according to the fourth aspect of the present disclosure and at least one heat-sealing layer. A laminate according to the fifth or sixth aspect of the present disclosure includes a stretched base material, printing base material, or barrier base material according to the fifth or sixth aspect of the present disclosure and at least one heat-sealing layer.

When a matter common to the laminates according to the first to sixth aspects is described or when the laminates according to the first to sixth aspects are not specifically distinguished, the term "laminate" may simply be used.

The laminate according to the present disclosure is suitable for use as a packaging material.

The total thickness of the laminate according to the present disclosure may be, in an embodiment, 40 μm or more, may be 60 μm or more, may be 80 μm or more, may be 100 μm or more, may be 120 μm or more, may be 140 μm or more, may be 400 μm or less, may be 350 μm or less, or may be 300 μm or less. For example, the total thickness is 40 μm or more and 400 μm or less. The total thickness of the laminate can be changed as appropriate, for example according to the intended use or form of the packaging container.

<Base Material>

The laminate according to the present disclosure includes a stretched base material, printing base material, or barrier base material according to the present disclosure. The laminate according to the present disclosure may include two or more stretched base materials. The laminate according to the present disclosure may include two or more printing base materials. The laminate according to the present disclosure may include two or more barrier base materials. The details of the stretched base material, the printing base material, and the barrier base material are as described above, and their detailed descriptions are omitted here.

In a laminate that includes a barrier base material and a heat-sealing layer, the orientation of the barrier base material is not particularly limited. In a laminate according to the second aspect that includes a barrier base material, the barrier base material is preferably positioned such that a first vapor deposition film faces the heat-sealing layer side (the inside of the packaging container) with a second vapor deposition film facing the side opposite the heat-sealing layer (the outside of the packaging container). That is, this laminate preferably includes a second vapor deposition film, a second surface resin layer, a polyolefin intermediate layer, a first surface resin layer, a first vapor deposition film, and a heat-sealing layer in this order. In a laminate according to the fourth aspect that includes a barrier base material, the barrier base material is preferably positioned such that the first surface resin layer faces the heat-sealing layer side (the inside of the packaging container) with the vapor deposition film facing the side opposite the heat-sealing layer (the outside of the packaging container). That is, this laminate preferably includes a vapor deposition film, a second surface resin layer, a polyolefin intermediate layer, a first surface resin layer, and a heat-sealing layer in this order.

In a laminate that includes a stretched base material or printing base material and a heat-sealing layer, the orientation of the stretched base material and the printing base material is not particularly limited. In laminates according to the second aspect and the fourth aspect each including a stretched base material or printing base material, the stretched base material and the printing base material are preferably positioned such that the first surface resin layer faces the heat-sealing layer side (the inside of the packaging container) with the second surface resin layer facing the side opposite the heat-sealing layer (the outside of the packaging container). That is, these laminates preferably include a second surface resin layer, a polyolefin intermediate layer, a first surface resin layer, and a heat-sealing layer in this order.

In a laminate that includes a biaxially oriented polyethylene film and a heat-sealing layer, the orientation of the biaxially oriented polyethylene film is not particularly limited. In a laminate that includes a printing base material and a heat-sealing layer, the orientation of the printing base material is not particularly limited. In a laminate that includes a barrier base material and a heat-sealing layer, the orientation of the barrier base material is not particularly limited.

The laminate according to the present disclosure does not include, in an embodiment, aluminum foil. Such a laminate according to the present disclosure and a packaging container that includes this laminate are superior in recyclability.

The laminate according to the present disclosure may further include a polyolefin stretched base material, which contains a polyolefin as its main component. Examples of polyolefins include polypropylene, polyethylene, polybutene, and polymethylpentene. Of these, polypropylene and polyethylene are particularly preferred. The polyolefin stretched base material is preferably, for example, a polypropylene stretched base material, which contains polypropylene as its main component, or a polyethylene stretched base material, which contains polyethylene as its main component. A polyolefin stretched base material is a polyolefin base material that has undergone stretching treatment. The details of the stretching treatment are as described above, and their description in this section is omitted. The polyolefin stretched base material is, for example, a uniaxially oriented base material or a biaxially oriented base material.

The thickness of the polyolefin stretched base material is preferably 5 $\mu$m or more, more preferably 8 $\mu$m or more, even more preferably 10 $\mu$m or more, for the strength and heat resistance of the laminate, and preferably is 300 $\mu$m or less, more preferably 100 $\mu$m or less, even more preferably 50 $\mu$m or less, for the workability of the laminate. For example, the thickness is 5 $\mu$m or more and 300 $\mu$m or less.

The polyolefin stretched base material may have undergone surface treatment as mentioned above. Such a polyolefin stretched base material is superior in, for example, adhesion to the layer adjacent to the base material. On the surface of the polyolefin stretched base material, furthermore, an anchor coating layer may be formed using an anchor coating agent known in the related art.

A laminate further including a polyolefin stretched base material may include, for example, the polyolefin stretched base material, a stretched base material, printing base material, or barrier base material according to the present disclosure, and a heat-sealing layer in this order or may include a stretched base material, printing base material, or barrier base material according to the present disclosure, the polyolefin stretched base material, and a heat-sealing layer in this order.

<Printed Layer>

The laminate according to the present disclosure may include at least one printed layer on one surface or both surfaces of the base material described above, such as a stretched base material, a barrier base material, or a polyolefin stretched base material. The laminate according to the present disclosure may include a printed layer on a second heat-sealing layer, which will be described later.

The printed layer includes an image. Examples of images include characters, figures, patterns, symbols, and combinations thereof. The image may include text information, such as the product name, the name of the article in the packaging container, the manufacturer, and the raw material names. The image may be unicolored and plain (a so-called solid image).

The printed layer can be formed using, for example, an ink composition. Examples of methods for forming the printed layer include gravure printing, offset printing, flexography, screen printing, letterpress printing, and transfer printing. The printed layer may be formed by flexography for reduced environmental impact. The printed layer may be formed using a biomass-derived ink for reduced environmental impact.

The thickness of the printed layer is preferably 0.1 $\mu$m or more, more preferably 0.2 $\mu$m or more, even more preferably 0.3 $\mu$m or more, and preferably is 10 $\mu$m or less, more preferably 5 $\mu$m or less, even more preferably 3 $\mu$m or less. For example, the thickness is 0.1 $\mu$m or more and 10 $\mu$m or less.

<Surface Protection Layer>

The laminate according to the present disclosure may include a surface protection layer on a printed layer provided on a second heat-sealing layer, which will be described later, for good abrasion resistance and weatherability of the printed layer. The laminate according to the present disclosure preferably includes a surface protection layer that covers the entire area of a printed layer. For the visibility of the printed layer, the surface protection layer preferably has transparency in the visible light region and more preferably is colorless and transparent.

The surface protection layer contains, for example, a thermoplastic resin, a cured thermosetting resin, or a cured energy radiation-curable compound. Of these, it is particularly preferred that the surface protection layer contain a cured thermosetting resin or a cured energy radiation-curable compound, more preferably a cured energy radiation-curable compound, because in that case abrasion resistance and weatherability can be improved. The percentage of the cured material to all resin components in the surface protection layer is preferably 80% by mass or more, more preferably 90% by mass or more. Examples of methods for printing the surface protection layer include letterpress printing, flexography, gravure printing, offset printing, screen printing, inkjet printing, and thermal transfer printing.

The thickness of the surface protection layer is preferably 0.5 μm or more, more preferably 1 μm or more, and preferably is 15 μm or less, more preferably 10 μm or less. For example, the thickness is 0.5 μm or more and 15 μm or less. A laminate including such a surface protection layer is superior in abrasion resistance and weatherability.

<Heat-Sealing Layer>

The laminate according to the present disclosure includes at least one heat-sealing layer.

The heat-sealing layer contains a heat-fusible resin, which melts and fuses in response to heat, as its main component. Examples of heat-fusible resins include polyolefins, such as polyethylene, polypropylene, and polymethylpentene, cyclic polyolefins, cyclic olefin copolymers, ionomer resins, acid-modified polyolefins, and ethylene-(meth) acrylate-unsaturated carboxylic acid terpolymers. Examples of polyethylene include linear low-density polyethylene, high-pressure low-density polyethylene, medium-density polyethylene, high-density polyethylene, ethylene-propylene copolymers, ethylene-vinyl acetate copolymers, ethylene-(meth)acrylic acid copolymers, and ethylene-(meth)acrylate copolymers. Examples of acid-modified polyolefins include resins obtained by modifying polyolefins, such as polyethylene and polypropylene, with unsaturated carboxylic acid compounds, such as (meth)acrylic acid and maleic anhydride.

In recent years, from the perspective of reducing environmental impact, there has been a need to recycle packaging containers. From the viewpoint of recyclability, it is preferred that the base material and the heat-sealing layer be composed of the same type of resin material (monomaterialization). The heat-sealing layer contains, in an embodiment, a polyolefin, such as polyethylene or polypropylene, as its main component. As a result of this, the monomaterialization of the packaging container can be sought. Such a packaging container is superior in recyclability; for example, there is no need to separate the base material and the heat-sealing layer after collecting a used packaging container.

When the stretched base material is a polypropylene-based stretched base material, for example, the heat-sealing layer preferably contains polypropylene as its main component. When the stretched base material is a polyethylene-based stretched base material, for example, the heat-sealing layer preferably contains polyethylene as its main component.

The percentage of polyolefins (e.g., polypropylene or polyethylene) in the entire laminate according to the present disclosure is, in an embodiment, preferably 80% by mass or more, more preferably 85% by mass or more, even more preferably 90% by mass or more, particularly preferably 95% by mass or more. As a result of this, for example, a monomaterialized packaging container can be produced using the laminate, whereby the recyclability of the packaging container can be improved. The upper limit to the percentage of polyolefins is not particularly limited, but it may be 99% by mass.

The heat-sealing layer may contain additives as mentioned above.

The laminate according to the present disclosure may include at least a first heat-sealing layer as a heat-sealing layer as described above, a stretched base material, printing base material, or barrier base material according to the present disclosure, and a second heat-sealing layer as a heat-sealing layer as described above in this order. The first heat-sealing layer and the second heat-sealing layer can each melt and fuse together upon heating. Such a laminate is suitable for use as, for example, a packaging material for forming the trunk of a tube container body. In that case, the second heat-sealing layer is a sealant layer closer to the outer surface of the trunk, and the first heat-sealing layer is a sealant layer closer to the inner surface of the trunk. That is, the trunk includes the second heat-sealing layer, the stretched base material, printing base material, or barrier base material, and the first heat-sealing layer in this order from the outside toward the inside of the trunk. The first heat-sealing layer and the second heat-sealing layer contain, in an embodiment, a polyolefin, such as polypropylene or polyethylene, as their main component.

In this laminate, the orientation of the barrier base material is not particularly limited.

In a laminate according to the second aspect that includes a barrier base material, the barrier base material is preferably positioned such that a first vapor deposition film faces the first heat-sealing layer side with a second vapor deposition film facing the second heat-sealing layer side. That is, this laminate preferably includes a second heat-sealing layer, a second vapor deposition film, a second surface resin layer, a polyolefin intermediate layer, an first surface resin layer, a first vapor deposition film, and a first heat-sealing layer in this order.

In a laminate according to the fourth aspect that includes a barrier base material, the barrier base material is preferably positioned such that the first surface resin layer faces the first heat-sealing layer side with the vapor deposition film facing the second heat-sealing layer side. That is, this laminate preferably includes a second heat-sealing layer, a vapor deposition film, a second surface resin layer, a polyolefin intermediate layer, a first surface resin layer, and a first heat-sealing layer in this order.

In the above laminate, the orientation of the stretched base material and the printing base material is not particularly limited.

In laminates according to the second aspect and the fourth aspect each including a stretched base material or printing base material, the stretched base material and the printing base material are preferably positioned such that the first surface resin layer faces the first heat-sealing layer side with the second surface resin layer facing the second heat-sealing layer side. That is, these laminates preferably include a second heat-sealing layer, a second surface resin layer, a polyolefin intermediate layer, a first surface resin layer, and a first heat-sealing layer in this order.

The heat-sealing layer may have a single-layer structure or may have a multilayer structure.

The thickness of the heat-sealing layer may be 10 $\mu$m or more, may be 20 $\mu$m or more, may be 30 $\mu$m or more, may be 50 $\mu$m or more, may be 60 $\mu$m or more, may be 70 $\mu$m or more, or may be 80 $\mu$m or more for heat sealability and the recyclability of the packaging container. The thickness of the heat-sealing layer may be 300 $\mu$m or less, may be 200 $\mu$m or less, or may be 150 $\mu$m or less for the workability of the laminate. The thickness of the heat-sealing layer is, for example, 10 $\mu$m or more and 300 $\mu$m or less. For the thicknesses of the first and second heat-sealing layers, too, it is preferred that each independently fall within the above ranges. The thickness of the heat-sealing layer can be changed as appropriate, for example according to the intended use or form of the packaging container. In the case of a sachet, the thickness of the heat-sealing layer may be, for example, 20 $\mu$m or more and 60 $\mu$m or less, but is not particularly limited. In the case of a stand-up pouch, the thickness of the heat-sealing layer may be, for example, 60 $\mu$m or more and 150 $\mu$m or less, but is not particularly limited. In the case of a tube container, the thickness of the heat-sealing layer may be, for example, 50 $\mu$m or more, may be 60 $\mu$m or more, may be 70 $\mu$m or more, or may be 80 $\mu$m or more, but is not particularly limited.

The heat-sealing layer is preferably a cast resin film for heat sealability reasons. More preferably, the heat-sealing layer is a cast coextruded resin film, with each layer constituting the heat-sealing layer being a coextruded resin layer. This resin film can be produced by utilizing, for example, T-die casting or inflation. "Cast film" is a concept that does not only represent a completely unstretched film but also encompasses a film that is slightly stretched due to the tension applied during film formation.

For example, a cast resin film corresponding to the heat-sealing layer may be placed on the stretched base material, printing base material, or barrier base material, optionally with a bonding layer interposed therebetween, or a heat-fusible resin or a resin composition containing it may be melted and extruded onto the stretched base material, printing base material, or barrier base material to form the heat-sealing layer. In the latter case, the provision of a bonding layer is unnecessary. Examples of bonding layers include bonding layers as described below.

<Bonding Layer>

The laminate according to the present disclosure may include a bonding layer between any layers, for example between the stretched base material, printing base material, or barrier base material and the heat-sealing layer. Such a laminate is superior in, for example, adhesion between the stretched base material, printing base material, or barrier base material and the heat-sealing layer.

The laminate according to the present disclosure may include, for example, the stretched base material, printing base material, or barrier base material according to the present disclosure, a bonding layer, and the heat-sealing layer in this order, may include a polyolefin stretched base material, a second bonding layer, the stretched base material, printing base material, or barrier base material according to the present disclosure, a first bonding layer, and the heat-sealing layer in this order, or may include the stretched base material, printing base material, or barrier base material according to the present disclosure, a second bonding layer, a polyolefin stretched base material, a first bonding layer, and the heat-sealing layer in this order. The laminate according to the present disclosure may include, for example, a second heat-sealing layer, a second bonding layer, the stretched base material, printing base material, or barrier base material according to the present disclosure, a first bonding layer, and a first heat-sealing layer in this order.

The bonding layer may be, in an embodiment, an adhesive agent layer, which is composed of an adhesive. The adhesive may be any of a one-component adhesive, a two-component adhesive, or a non-curing adhesive. The adhesive may be a solventless adhesive or may be a solvent-based adhesive.

Examples of solventless adhesives, or solventless lamination adhesives, include polyether adhesives, polyester adhesives, silicone adhesives, epoxy adhesives, and urethane adhesives. Of these, urethane adhesives are particularly preferred, with two-component urethane adhesives being more preferred.

Examples of solvent-based adhesives include rubber adhesives, vinyl adhesives, olefin adhesives, silicone adhesives, epoxy adhesives, phenolic adhesives, and urethane adhesives. Of these, urethane adhesives are particularly preferred, with two-component urethane adhesives being more preferred.

The laminate according to the present disclosure may be, in an embodiment, manufactured by joining the stretched base material, printing base material, or barrier base material according to the present disclosure, optionally a polyolefin stretched base material, and a resin film corresponding to the heat-sealing layer by solventless lamination, in which a solventless adhesive is used, or may be manufactured by joining them using dry lamination, in which a solvent-based adhesive is used.

The adhesive agent layer can be formed by, for example, applying an adhesive, for example to the stretched base material, printing base material, or barrier base material, by direct gravure roll coating, gravure roll coating, kiss coating, reverse roll coating, fountain coating, transfer roll coating, or other methods and drying the applied adhesive.

The thickness of the adhesive agent layer may be 0.1 $\mu$m or more, may be 0.2 $\mu$m or more, may be 0.5 $\mu$m or

more, may be 10 μm or less, may be 8 μm or less, or may be 6 μm or less. For example, the thickness is 0.1 μm or more and 10 μm or less. The thickness of the adhesive agent layer may be 2 μm or less.

The bonding layer may be, in an embodiment, an adhesive resin layer containing a thermoplastic resin or may be an extruded resin layer containing a thermoplastic resin. Examples of thermoplastic resins include heat-fusible resins as described above. The thermoplastic resin may be a fossil fuel-derived material or may be a biomass-derived material, or both of them may be used.

The thickness of the extruded resin layer is preferably 5 μm or more, more preferably 10 μm or more, for interlayer adhesion reasons, and preferably is 30 μm or less, more preferably 25 μm or less, for reduced production cost of the laminate and improved productivity in its manufacture. For example, the thickness is 5 μm or more and 30 μm or less.

<Layer Configuration of the Laminate>

In the following, several examples will be presented for the layer configuration of the laminate according to the present disclosure.

The laminate 2 illustrated in Fig. 4A includes a barrier base material 1, a bonding layer 60, and a heat-sealing layer 80 in this order. Specifically, the laminate 2 includes a second vapor deposition film 42, a second surface resin layer 22, a polyolefin intermediate layer 10, a first surface resin layer 20, a first vapor deposition film 40, a bonding layer 60, and a heat-sealing layer 80 in this order. The laminate 2 may further include a printed layer, not illustrated; for example, it may further include a printed layer on the first vapor deposition film 40 or second vapor deposition film 42 in the barrier base material 1.

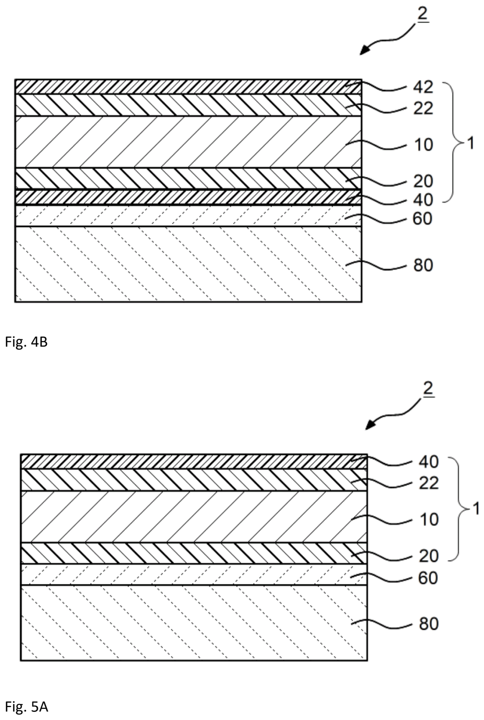

The laminate 2 illustrated in Fig. 4B includes a barrier base material 1, a bonding layer 60, and a heat-sealing layer 80 in this order. Specifically, the laminate 2 includes a vapor deposition film 40, a second surface resin layer 22, a polyolefin intermediate layer 10, a first surface resin layer 20, a bonding layer 60, and a heat-sealing layer 80 in this order. The laminate 2 may further include a printed layer, not illustrated; for example, it may further include a printed layer on the vapor deposition film 40 or first surface resin layer 20 in the barrier base material 1.

The laminate 2 illustrated in Fig. 5A includes a polyolefin stretched base material 70, a second bonding layer 62, a barrier base material 1, a first bonding layer 60, and a heat-sealing layer 80 in this order. Specifically, the laminate 2 includes a polyolefin stretched base material 70, a second bonding layer 62, a second vapor deposition film 42, a second surface resin layer 22, a polyolefin intermediate layer 10, a first surface resin layer 20, a first vapor deposition film 40, a first bonding layer 60, and a heat-sealing layer 80 in this order. The laminate 2 may further include a printed layer, not illustrated; for example, it may further include a printed layer on the surface of the polyolefin stretched base material 70 closer to the barrier base material 1. A laminate having such a configuration is suitable as, for example, a packaging material for forming a stand-up pouch.

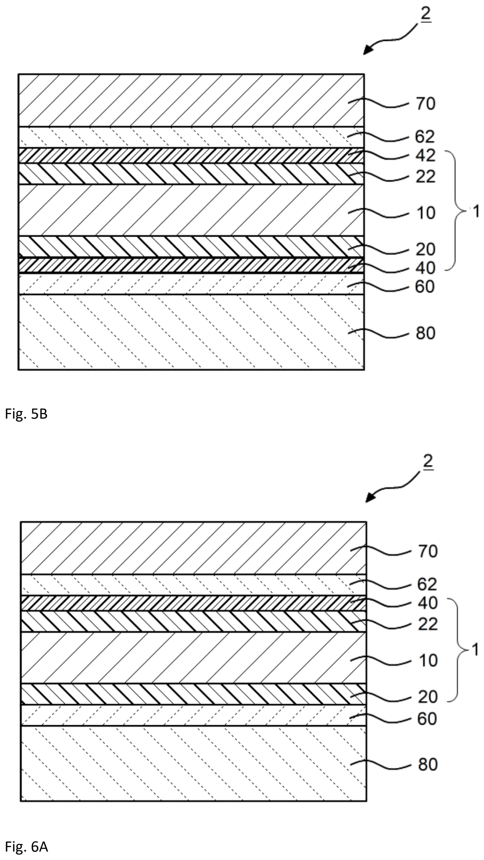

The laminate 2 illustrated in Fig. 5B includes a polyolefin stretched base material 70, a second bonding layer 62, a barrier base material 1, a first bonding layer 60, and a heat-sealing layer 80 in this order. Specifically, the laminate 2 includes a polyolefin stretched base material 70, a second bonding layer 62, a vapor deposition film 40, a second surface resin layer 22, a polyolefin intermediate layer 10, a first surface resin layer 20, a first bonding layer 60, and a heat-sealing layer 80 in this order. The laminate 2 may further include a printed layer, not illustrated; for example, it may further include a printed layer on the surface of the polyolefin stretched base material 70 closer to the barrier base material 1. A laminate having such a configuration is suitable as, for example, a packaging material for forming a stand-up pouch.

The laminate 2 illustrated in Fig. 6A includes a second heat-sealing layer 82, a second bonding layer 62, a barrier base material 1, a first bonding layer 60, and a first heat-sealing layer 80 in this order. Specifically, the laminate 2 includes a second heat-sealing layer 82, a second bonding layer 62, a second vapor deposition film 42, a second surface resin layer 22, a polyolefin intermediate layer 10, a first surface resin layer 20, a first vapor deposition film 40, a first bonding layer 60, and a first heat-sealing layer 80 in this order. The laminate 2 may further include a printed layer, not illustrated; for example, it may further include a printed layer on the surface of the second heat-sealing layer 82. A laminate having such a configuration is suitable as, for example, a packaging material for forming the trunk of a tube container body.

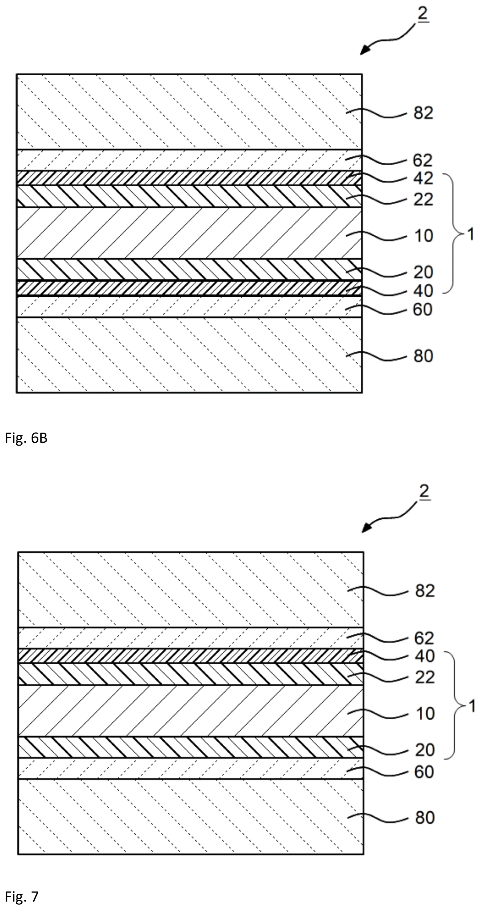

The laminate 2 illustrated in Fig. 6B includes a second heat-sealing layer 82, a second bonding layer 62, a barrier base material 1, a first bonding layer 60, and a first heat-sealing layer 80 in this order. Specifically, the laminate 2 includes a second heat-sealing layer 82, a second bonding layer 62, a vapor deposition film 40, a second surface resin layer 22, a polyolefin intermediate layer 10, a first surface resin layer 20, a first bonding layer 60, and a first heat-sealing layer 80 in this order. The laminate 2 may further include a printed layer, not illustrated; for example, it may further include a printed layer on the surface of the second heat-sealing layer 82. A laminate having such a configuration is suitable as, for example, a packaging material for forming the trunk of a tube container body.

The polyolefin intermediate layer 10 is, for example, a polyethylene intermediate layer or a polypropylene intermediate layer.

In Fig. 4A to Fig. 6A, the barrier base material 1 may further include a barrier coating layer, not illustrated, on the first vapor deposition film 40. In Fig. 4A to Fig. 6A, the barrier base material 1 may further include a barrier coating layer, not illustrated, on the second vapor deposition film 42. In Fig. 4A to Fig. 6A, the orientation of the barrier base material 1 may be opposite. In Fig. 4A to Fig. 6A, the laminate 2 may include, instead of the barrier base material 1, a stretched base material or a printing base material, or may include a barrier base material that includes a vapor deposition film solely on one surface of a stretched base material or a printing base material.

In Fig. 4B to Fig. 6B, the barrier base material 1 may further include a barrier coating layer, not illustrated, on the vapor deposition film 40. In Fig. 4B to Fig. 6B, the orientation of the barrier base material 1 may be opposite. In Fig. 4B to Fig. 6B, the laminate 2 may include, instead of the barrier base material 1, a stretched base material or a printing base material.

[Packaging Container]

The laminate according to the present disclosure is suitable for use in packaging material applications. Packaging materials are used to produce packaging containers. By using at least the laminate according to the present disclosure, packaging containers superior in gas barrier properties can be manufactured.

Examples of packaging containers include a packaging bag, a tube container, and a lidded container.

Examples of packaging bags include packaging bags in various forms, such as the stand-up pouch type, the side-seal type, the two-side-seal type, the three-side-seal type, the four-side-seal type, the center-seal type, the pillow-seal type, the pleated-seal type, the flat-bottom-seal type, the square-bottom-seal type, and the gusset type. A packaging bag may be, for example, a sachet or may be a zipper bag. A packaging bag may be a refill pouch, in which liquid, powder, or other contents to be placed into a container, such as a bottle, for replacement are contained, a stand-up pouch in particular. A packaging bag may be, for example, a flexible packaging bag.

A packaging bag according to the present disclosure includes a laminate according to the present disclosure.

A packaging bag according to the present disclosure has, for example:

one or more laminates according to the present disclosure;

a seal portion, in which portions of the heat-sealing layer of the laminate, or heat-sealing layers of the laminates, have been joined together; and

a holding portion, in which contents are to be contained.

The seal portion includes inner edges that define the holding portion.

Examples of methods for forming the seal portion include heat sealing, in which the heat-sealing layer of the laminate, or heat-sealing layers of the laminates, is melted, for example by heating, and portions of the heat-sealing layer, or the heat-sealing layers, are fused together. Specific examples include bar sealing, revolving roller sealing, belt sealing, impulse sealing, radiofrequency sealing, and ultrasonic sealing. For example, the packaging bag can be sealed by placing the contents into the packaging bag and then heat-sealing the opening of the packaging bag.

The packaging bag may include an easy-open portion. Examples of easy-open portions include a notch portion, which serves as a starting point for tearing the packaging bag, and a half-cut line, formed using laser machining, a cutting knife, or other methods as a guideline during tearing of the packaging bag.

In an embodiment, the laminate according to the present disclosure is used as the lid of a lidded container. A lidded container includes a container body having a holding portion and a lid joined (heat-sealed) to the container body so as to seal the holding portion. In this configuration, the lid, or the heat-sealing layer of the laminate, and the container body have been heat-sealed together. Examples of shapes of the container body include a cup shape and a bottomed cylindrical shape. The container body is, for example, made of polystyrene, made of polypropylene, made of polyethylene, or made of paper.

Examples of contents that can be held in the packaging container include liquids, solids, powders, and gels. The contents may be food or a beverage or may be an inedible article, such as a chemical product, a cosmetic product, a pharmaceutical product, a metal component, or an electronic component. Examples of contents include shampoo, hair rinse, hair conditioner, hand soap, body soap, air freshener, a chemical deodorizer, a physical deodorizer, mothballs, fabric softener, and detergent; sauce, soy sauce, dressing, cooking oil, mayonnaise, ketchup, syrup, cooking liquor, and other liquid or viscous seasonings and ingredients; fruit and vegetable juices; spices; a liquid beverage, jelly drink, liquid soup, powder soup, instant food, and other foods and beverages; cream; toothpaste; and a metal component and an electronic component. The contents of a tube container, for example, are preferably toothpaste.

In an embodiment, the packaging bag can be produced by folding a laminate according to the present disclosure in two such that the stretched base material, printing base material, or barrier base material is positioned outside and the heat-sealing layer inside, aligning the two halves, and heat-sealing, for example, their edges. In a different embodiment, the packaging bag can be produced by aligning multiple laminates according to the present disclosure such that their heat-sealing layers face each other, and heat-sealing, for example, their edges. All of the packaging bag may be composed of the laminate(s), or part of the packaging bag may be composed of the laminate(s).

A stand-up pouch includes, in an embodiment, a trunk composed of a side sheet and a bottom composed of a bottom sheet. The bottom sheet supports the shape of the side sheet, thereby imparting self-standability to the pouch. As a result, the pouch can be formed as a stand-up type. Within the region enclosed by the side sheet and the bottom sheet, the holding portion, which is for holding contents, is created. In a stand-up pouch, the side sheet alone may be a laminate according to the present disclosure, the bottom sheet alone may be a laminate according to the present disclosure, or both of the side sheet and the bottom sheet may be laminates according to the present disclosure.

In an embodiment, the side sheet can be formed by shaping a laminate according to the present disclosure into a bag such that its heat-sealing layer becomes the innermost layer. In an embodiment, the side sheet can be formed by preparing two laminates according to the present disclosure, aligning them such that their heat-sealing layers face each other, and shaping the laminates into a bag by heat-sealing both side edges.

In a different embodiment, the side sheet can be formed by preparing two laminates according to the present disclosure, aligning them such that their heat-sealing layers face each other, folding two laminates into a V-shape such that the heat-sealing layer is positioned outside, inserting the two folded laminates between the aligned laminates at both side edges, one on each side, and heat-sealing the laminates. With such a production method, a stand-up pouch having a trunk with side gussets is obtained.

In an embodiment, the bottom sheet can be formed by inserting a laminate according to the present disclosure between lower portions of a bag-shaped side sheet and heat-sealing them. More specifically, the bottom sheet can be formed by folding a laminate into a V-shape such that its heat-sealing layer is positioned outside, inserting the folded laminate between lower portions of a bag-shaped side sheet, and heat-sealing them.

In an embodiment, the bottom is formed by preparing two laminates according to the present disclosure, aligning them such that their heat-sealing layers face each other, then folding another laminate according to the present disclosure into a V-shape such that its heat-sealing layer is positioned outside, placing it between lower portions of the laminates facing each other, and heat-sealing the laminates. Subsequently, the trunk is formed by heat-sealing the two edges adjacent to the bottom. In such a manner, a stand-up pouch according to an embodiment can be formed.

[Tube Container Body]

A tube container body according to the present disclosure includes a laminate according to the present disclosure.

In the following, a tube container body according to the present disclosure will be described with reference to drawings. Fig. 7 is a diagram outlining the structure of a tube container 120, and Fig. 8 is an A-A cross-sectional view of Fig. 7. As illustrated in Fig. 7, the tube container body 121 includes a head 122 and a trunk 123; the trunk 123 is composed of a laminate according to the present disclosure.

<Head>

The head 122 includes a shoulder 124 connected to one end of the trunk 123 and an outlet 125 connected to the shoulder 124. In an embodiment, the injection outlet 125 includes a thread 127 for a cap 126 to engage with it by screwing.

In an embodiment, the head is formed of a resin composition containing a thermoplastic resin. Examples of thermoplastic resins include polyolefins, such as polyethylene and polypropylene, polyesters, cellulose resins, and vinyl resins. The resin composition may contain additives as mentioned above.

The head can be produced using methods known in the related art. For example, compression molding or injection molding can be used to produce the head and join it to the trunk at the same time.

<Trunk>

In the tube container body 121 according to the present disclosure, the trunk 123 is connected to the shoulder 124 of the head 122. The trunk 123 includes, for example, a fused portion 128 formed by rolling a laminate according to the present disclosure into a cylinder by putting one end of the laminate on top of the other end such that the surface closer to a first heat-sealing layer comes into contact with the surface closer to a second heat-sealing layer, and heat-sealing the overlapping portions. The trunk 123 includes, for example, a bottom seal portion 129 formed by heat-sealing the opening of the laminate rolled into a cylinder.

Examples of methods for heat sealing include methods known in the related art, such as bar sealing, revolving roller sealing, belt sealing, impulse sealing, radiofrequency sealing, ultrasonic sealing, and flame sealing.

For example, a cylindrical trunk may be produced by rolling a laminate according to the present disclosure into a cylinder by putting one end of the laminate on top of the other end such that the surface closer to a first heat-sealing layer comes into contact with the surface closer to a second heat-sealing layer, and heat-sealing the overlapping portions. From the viewpoint of the ease of heat sealing, it is preferred that one of the overlapping ends be a first heat-sealing layer, with the other end being a second heat-sealing layer. In that case, the first heat-sealing layer and the second heat-sealing layer are melted and joined together, resulting in the formation of a fused portion.

It is, therefore, preferred that no printed layer or surface protection layer be present in the region of the second heat-sealing layer intended to be heat-sealed during the formation of the trunk of the tube container body. As a result of this, a cylindrical trunk can be formed using a laminate according to the present disclosure with good heat sealing in this region.

In the above embodiment, the fused portion is formed by overlapping. The fused portion, however, may be formed by bringing both ends of the same surface of a laminate together and joining them by heat-sealing the surfaces of the first heat-sealing layer. In that case, a printed layer and a surface protection layer may be present on the second heat-sealing layer at both ends of the laminate. In that case, furthermore, joining tape may have been applied to the outer surface side of the trunk to cover the joint. Preferably, no printed layer or surface protection layer is provided in the area of the laminate to which the joining tape is applied. The joining tape may be provided on both of the inner surface and the outer surface of the trunk.

[Tube Container]

A tube container according to the present disclosure will now be described with reference to a drawing. As illustrated in Fig. 7, a tube container 120 according to the present disclosure includes a tube container body 121 and a cap 26 attached to its head 122.

<Tube Container Body>

The tube container body has already been described above; therefore, its description is omitted here.

<Cap>

The cap has been detachably attached to the outlet of the head and plays the role of closing the outlet. In an embodiment, the cap is formed of a resin composition containing a thermoplastic resin. Examples of thermoplastic resins include polyolefins, such as polyethylene and polypropylene, polyesters, cellulose resins, and vinyl resins. The resin composition may contain additives as mentioned above.

The cap may be, as illustrated in Fig. 7, of the screw type, which has a groove recess on the cap's inner surface to engage with the thread 127 of the outlet 125 by screwing, or, alternatively, may be of the stopper type, which is pressed into the outlet 125 to engage.

[Examples of Stretched Base Materials and Barrier Base Materials according to the First Aspect]

[1] A stretched base material including at least a first surface resin layer containing at least one gas barrier resin as a main component thereof, a polyolefin intermediate layer containing a polyolefin as a main component thereof, and a second surface resin layer containing at least one gas barrier resin as a main component thereof in this order.

[2] The stretched base material according to [1] above, wherein the gas barrier resins in the first surface resin layer and the second surface resin layer each independently include at least one selected from an ethylene-vinyl alcohol copolymer and a polyamide.

[3] The stretched base material according to [1] or [2] above, wherein the polyolefin intermediate layer is a polypropylene layer containing at least one type of polypropylene as a main component thereof or a polyethylene layer containing at least one type of polyethylene as a main component thereof.

[4] The stretched base material according to [3] above, wherein the polypropylene in the polypropylene layer includes homopolypropylene, and the polyethylene in the polyethylene layer includes linear low-density polyethylene.

[5] The stretched base material according to any one of [1] to [4] above, wherein the polyolefin intermediate layer further contains a compatibilizer.

[6] The stretched base material according to any one of [1] to [5] above, wherein the stretched base material further includes a first adhesive resin layer between the first surface resin layer and the polyolefin intermediate layer and further includes a second adhesive resin layer between the polyolefin intermediate layer and the second surface resin layer.

[7] The stretched base material according to any one of [1] to [6] above, wherein a thickness of the first surface resin layer is 0.3 $\mu$m or more and 15 $\mu$m or less, a thickness of the polyolefin intermediate layer is 4 $\mu$m or more and 60 $\mu$m or less, and a thickness of the second surface resin layer is 0.3 $\mu$m or more and 15 $\mu$m or less.

[8] The stretched base material according to any one of [1] to [7] above, wherein a percentage of polyolefins in the stretched base material is 60% by mass or more.

[9] The stretched base material according to any one of [1] to [8] above, wherein the stretched base material is a stretched coextruded resin film.

[10] The stretched base material according to any one of [1] to [9] above, wherein the stretched base material is a biaxially oriented base material.

[11] A barrier base material including the stretched base material according to any one of [1] to [10] above and at least one vapor deposition film provided on a surface of at least one selected from the first surface resin layer and the second surface resin layer in the stretched base material.

[12] A barrier base material including at least a first vapor deposition film, the stretched base material according to any one of [1] to [10] above, and a second vapor deposition film in this order, wherein the first vapor deposition film is provided on a surface of the first surface resin layer, and the second vapor deposition film is provided on a surface of the second surface resin layer.

[13] The barrier base material according to [12] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.

[14] The barrier base material according to [13] above, wherein the inorganic oxide deposition film or each inorganic oxide deposition film is an alumina deposition film, a silica deposition film, or a silicon oxycarbide deposition film, and the metal deposition film or each metal deposition film is an aluminum deposition film.

[Examples of Stretched Base Materials and Barrier Base Materials according to the Second Aspect]

[1] A stretched base material including at least a first surface resin layer containing at least one polyolefin and at least one adhesive resin, at least one polyolefin intermediate layer containing a polyolefin as a main component thereof, and a second surface resin layer containing at least one gas barrier resin as a main component thereof in this order.

[2] The stretched base material according to [1] above, wherein a percentage of the polyolefin in the first surface resin layer is 60% by mass or more and 95% by mass or less, and a percentage of the adhesive resin in the first surface resin layer is 5% by mass or more and 40% by mass or less.

[3] The stretched base material according to [1] or [2] above, wherein the polyolefin in the first surface resin layer includes at least one type of polypropylene, the adhesive resin in the first surface resin layer includes acid-modified polypropylene, and the polyolefin intermediate layer contains at least one type of polypropylene as a main component thereof, or the polyolefin in the first surface resin layer includes polyethylene, the adhesive resin in the first surface resin layer includes acid-modified polyethylene, and the polyolefin intermediate layer contains polyethylene as a main component thereof.

[4] The stretched base material according to [3] above, wherein the polypropylene in the first surface resin layer includes random polypropylene, the adhesive resin in the first surface resin layer includes acid-modified random polypropylene, and the polypropylene in the polyolefin intermediate layer includes homopolypropylene.

[5] The stretched base material according to any one of [1] to [4] above, wherein the gas barrier resin in the second surface resin layer includes at least one selected from an ethylene-vinyl alcohol copolymer and a polyamide.

[6] The stretched base material according to any one of [1] to [5] above, wherein the stretched base material includes two or more of the polyolefin intermediate layers.

[7] The stretched base material according to [6] above, wherein at least one of the polyolefin intermediate layers further contains a compatibilizer.

[8] The stretched base material according to any one of [1] to [7] above, wherein the stretched base material further includes an adhesive resin layer between the polyolefin intermediate layer and the second surface resin layer.

[9] The stretched base material according to any one of [1] to [8] above, wherein a thickness of the first surface resin layer is 0.3 $\mu$m or more and 15 $\mu$m or less, a thickness of the polyolefin intermediate layer is 5 $\mu$m or more and 100 $\mu$m or less, and a thickness of the second surface resin layer is 0.3 $\mu$m or more and 15 $\mu$m or less.

[10] The stretched base material according to any one of [1] to [9] above, wherein a percentage of polyolefins in the stretched base material is 70% by mass or more.

[11] The stretched base material according to any one of [1] to [10] above, wherein the stretched base material is a stretched coextruded resin film.

[12] The stretched base material according to any one of [1] to [11] above, wherein the stretched base material is a biaxially oriented base material.

[13] A barrier base material including the stretched base material according to any one of [1] to [12] above and at least one vapor deposition film provided on a surface of at least one selected from the first surface resin layer and the second surface resin layer in the stretched base material.

[14] A barrier base material including at least a first vapor deposition film, the stretched base material according to any one of [1] to [12] above, and a second vapor deposition film in this order, wherein the first vapor deposition film is provided on a surface of the first surface resin layer, and the second vapor deposition film is provided on a surface of the second surface resin layer.

[15] The barrier base material according to [14] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.

[16] The barrier base material according to [15] above, wherein the inorganic oxide deposition film or each inorganic oxide deposition film is an alumina deposition film, a silica deposition film, or a silicon oxycarbide deposition film, and the metal deposition film or each metal deposition film is an aluminum deposition film.

[Examples of Stretched Base Materials and Barrier Base Materials according to the Third Aspect]

[1] A stretched base material including at least a first surface resin layer containing at least one polyolefin and at least one adhesive resin, at least one polyolefin intermediate layer containing a polyolefin as a main component thereof, and a second surface resin layer containing at least one polyolefin and at least one adhesive resin in this order.

[2] The stretched base material according to [1] above, wherein, in the first surface resin layer and the second surface resin layer, a percentage of the polyolefin is 60% by mass or more and 95% by mass or less, and a percentage of the adhesive resin is 5% by mass or more and 40% by mass or less, independently for each layer.

[3] The stretched base material according to [1] or [2] above, wherein the polyolefin in the first surface resin layer includes at least one type of polypropylene, the adhesive resin in the first surface resin layer includes acid-modified polypropylene, the polyolefin intermediate layer contains at least one type of polypropylene as a main component thereof, the polyolefin in the second surface resin layer includes at least one type of polypropylene, and the adhesive resin in the second surface resin layer includes acid-modified polypropylene, or the polyolefin in the first surface resin layer includes polyethylene, the adhesive resin in the first surface resin layer includes acid-modified polyethylene, the polyolefin intermediate layer contains polyethylene as a main component thereof, the polyolefin in the second surface resin layer includes polyethylene, and the adhesive resin in the second surface resin layer includes acid-modified polyethylene.

[4] The stretched base material according to [3] above, wherein the polypropylene in the first surface resin layer and the polypropylene in the second surface resin layer each independently include random polypropylene, the adhesive resins in the first surface resin layer and the second surface resin layer each independently include acid-modified random polypropylene, and the polypropylene in the polyolefin intermediate layer includes homopolypropylene.

[5] The stretched base material according to any one of [1] to [4] above, wherein the stretched base material includes two or more of the polyolefin intermediate layers.

[6] The stretched base material according to any one of [1] to [5] above, wherein a thickness of the first surface resin layer is 0.3 $\mu$m or more and 15 $\mu$m or less, a thickness of the polyolefin intermediate layer is 6 $\mu$m or more and 100 $\mu$m or less, and a thickness of the second surface resin layer is 0.3 $\mu$m or more and 15 $\mu$m or less.

[7] The stretched base material according to any one of [1] to [6] above, wherein a percentage of polyolefins in the stretched base material is 80% by mass or more.

[8] The stretched base material according to any one of [1] to [7] above, wherein the stretched base material is a stretched coextruded resin film.

[9] The stretched base material according to any one of [1] to [8] above, wherein the stretched base material is a biaxially oriented base material.

[10] A barrier base material including the stretched base material according to any one of [1] to [9] above and at least one vapor deposition film provided on a surface of at least one selected from the first surface resin layer and the second surface resin layer in the stretched base material.

[11] A barrier base material including at least a first vapor deposition film, the stretched base material according to any one of [1] to [9] above, and a second vapor deposition film in this order, wherein the first vapor deposition film is provided on a surface of the first surface resin layer, and the second vapor deposition film is provided on a surface of the second surface resin layer.

[12] The barrier base material according to [11] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.

[13] The barrier base material according to [12] above, wherein the inorganic oxide deposition film or each inorganic oxide deposition film is an alumina deposition film, a silica deposition film, or a silicon oxycarbide deposition film, and the metal deposition film or each metal deposition film is an aluminum deposition film.

[Examples of Stretched Base Materials and Barrier Base Materials according to the Fourth Aspect]

[1] A stretched base material including at least a first surface resin layer containing a polyolefin as a main component thereof, at least one polyolefin intermediate layer containing a polyolefin as a main component thereof, and a second surface resin layer containing at least one polyolefin and at least one adhesive resin in this order.

[2] The stretched base material according to [1] above, wherein, in the second surface resin layer, a percentage of the polyolefin is 60% by mass or more and 95% by mass or less, and a percentage of the adhesive resin is 5% by mass or more and 40% by mass or less.

[3] The stretched base material according to [1] or [2] above, wherein the polyolefin in the second surface resin layer includes at least one type of polypropylene, the adhesive resin in the second surface resin layer includes acid-modified polypropylene, the polyolefin intermediate layer contains at least one type of polypropylene as a main component thereof, and the first surface resin layer contains at least one type of polypropylene as a main component thereof, or the polyolefin in the second surface resin layer includes polyethylene, the adhesive resin in the second surface resin layer includes acid-modified polyethylene, the polyolefin intermediate layer contains polyethylene as a main component thereof, and the first surface resin layer contains polyethylene as a main component thereof.

[4] The stretched base material according to [3] above, wherein the polypropylene in the second surface resin layer includes random polypropylene, the adhesive resin in the second surface resin layer includes acid-modified random polypropylene, and the polypropylene in the polyolefin intermediate layer and the polypropylene in the first surface resin layer each independently include homopolypropylene.

[5] A stretched base material including at least a first surface resin layer containing a polyolefin as a main component thereof, at least one polyolefin intermediate layer containing a polyolefin as a main component thereof, and a second surface resin layer containing at least one gas barrier resin as a main component thereof in this order.

[6] The stretched base material according to [5] above, wherein the gas barrier resin in the second surface resin layer includes at least one selected from an ethylene-vinyl alcohol copolymer and a polyamide.

[7] The stretched base material according to [5] or [6] above, wherein the polyolefin intermediate layer and the first surface resin layer each independently contain at least one type of polypropylene or polyethylene as a main component thereof.

[8] The stretched base material according to [7] above, wherein the polypropylene in the polyolefin intermediate layer and the polypropylene in the first surface resin layer each independently include homopolypropylene.

[9] The stretched base material according to any one of [5] to [8] above, wherein the stretched base material further includes an adhesive resin layer between the polyolefin intermediate layer and the second surface resin layer.

[10] The stretched base material according to any one of [5] to [9] above, wherein the polyolefin intermediate layer further contains a compatibilizer.

[11] The stretched base material according to any one of [1] to [10] above, wherein the stretched base material includes two or more of the polyolefin intermediate layers.

[12] The stretched base material according to any one of [1] to [11] above, wherein a thickness of the first surface resin layer is 0.3 μm or more and 15 μm or less, a thickness of the polyolefin intermediate layer is 5 μm or more and 100 μm or less, and a thickness of the second surface resin layer is 0.3 μm or more and 15 μm or less.

[13] The stretched base material according to any one of [1] to [12] above, wherein a percentage of polyolefins in the stretched base material is 80% by mass or more.

[14] The stretched base material according to any one of [1] to [13] above, wherein the stretched base material is a stretched coextruded resin film.

[15] The stretched base material according to any one of [1] to [14] above, wherein the stretched base material is a biaxially oriented base material.

[16] A barrier base material including the stretched base material according to any one of [1] to [15] above and a vapor deposition film provided on a surface of the second surface resin layer in the stretched base material.

[17] The barrier base material according to [16] above, wherein the vapor deposition film is a metal deposition film or an inorganic oxide deposition film.

[18] The barrier base material according to [16] or [17] above, wherein the vapor deposition film is an aluminum deposition film, an alumina deposition film, a silica deposition film, or a silicon oxycarbide deposition film.

[Further Examples of Stretched Base Materials and Barrier Base Materials according to the Above Aspects]

[1] A stretched base material including at least a first surface resin layer containing at least one gas barrier resin as a main component thereof, a polyolefin intermediate layer containing a polyolefin as a main component thereof, and a second surface resin layer containing at least one gas barrier resin as a main component thereof in this order, wherein the gas barrier resin in the first surface resin layer includes an aromatic polyamide, and the gas barrier resin in the second surface resin layer includes an aromatic polyamide.

[2] The stretched base material according to [1] above, wherein the stretched base material further includes a first adhesive resin layer between the first surface resin layer and the polyolefin intermediate layer and further includes a second adhesive resin layer between the polyolefin intermediate layer and the second surface resin layer.

[3] The stretched base material according to [1] or [2] above, wherein a thickness of the first surface resin layer is 0.3 $\mu$m or more and 15 $\mu$m or less, a thickness of the polyolefin intermediate layer is 4 $\mu$m or more and 60 $\mu$m or less, and a thickness of the second surface resin layer is 0.3 $\mu$m or more and 15 $\mu$m or less.

[4] A stretched base material including at least a first surface resin layer containing a polyolefin and an adhesive resin, a polyolefin intermediate layer containing a polyolefin as a main component thereof, and a second surface resin layer containing at least one gas barrier resin as a main component thereof in this order, wherein the gas barrier resin in the second surface resin layer includes an aromatic polyamide.

[5] The stretched base material according to [4] above, wherein a percentage of the polyolefin in the first surface resin layer is 60% by mass or more and 95% by mass or less, and a percentage of the adhesive resin in the first surface resin layer is 5% by mass or more and 40% by mass or less.

[6] The stretched base material according to [4] or [5] above, wherein the stretched base material further includes an adhesive resin layer between the polyolefin intermediate layer and the second surface resin layer.

[7] The stretched base material according to any one of [4] to [6] above, wherein a thickness of the first surface resin layer is 0.3 $\mu$m or more and 15 $\mu$m or less, a thickness of the polyolefin intermediate layer is 5 $\mu$m or more and 100 $\mu$m or less, and a thickness of the second surface resin layer is 0.3 $\mu$m or more and 15 $\mu$m or less.

[8] A stretched base material including at least a first surface resin layer containing a polyolefin as a main component thereof, a polyolefin intermediate layer containing a polyolefin as a main component thereof, and a second surface resin layer containing at least one gas barrier resin as a main component thereof in this order, wherein the gas barrier resin in the second surface resin layer includes an aromatic polyamide.

[9] The stretched base material according to [8] above, wherein the stretched base material further includes an adhesive resin layer between the polyolefin intermediate layer and the second surface resin layer.

[10] The stretched base material according to [8] or [9] above, wherein a thickness of the first surface resin layer is 0.3 $\mu$m or more and 15 $\mu$m or less, a thickness of the polyolefin intermediate layer is 5 $\mu$m or more and 100 $\mu$m or less, and a thickness of the second surface resin layer is 0.3 $\mu$m or more and 15 $\mu$m or less.

[11] The stretched base material according to any one of [1] to [10] above, wherein the polyolefin intermediate layer further contains a compatibilizer.

[12] The stretched base material according to any one of [1] to [11] above, wherein the stretched base material is a stretched coextruded resin film.

[13] The stretched base material according to any one of [1] to [12] above, wherein the stretched base material is a biaxially oriented base material.

[14] A barrier base material including the stretched base material according to any one of [1] to [7] and [11] to [13] above and at least one vapor deposition film provided on a surface of at least one selected from the first surface resin layer and the second surface resin layer in the stretched base material or including the stretched base material according to any one of [8] to [13] above and a vapor deposition film provided on a surface of the second surface resin layer in the stretched base material.

[15] A barrier base material including at least a first vapor deposition film, the stretched base material according to any one of [1] to [13] above, and a second vapor deposition film in this order, wherein the first vapor deposition film is provided on a surface of the first surface resin layer, and the second vapor deposition film is provided on a surface of the second surface resin layer.

[16] The barrier base material according to [15] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.

[17] The barrier base material according to [16] above, wherein the inorganic oxide deposition film or each inorganic oxide deposition film is an alumina deposition film, a silica deposition film, or a silicon oxycarbide deposition film, and the metal deposition film or each metal deposition film is an aluminum deposition film.

[Further Examples of Stretched Base Materials and Barrier Base Materials according to the Above Aspects]

[1] A stretched base material including at least a first surface resin layer containing at least one gas barrier resin as a main component thereof, one or two or more polyethylene intermediate layers each containing at least one type of polyethylene as a main component thereof, and a second surface resin layer containing at least one gas barrier resin as a main component thereof in this order, wherein the polyethylene in at least one of the polyethylene intermediate layers includes at least one type of polyethylene selected from high-density polyethylene and medium-density polyethylene or has a density of more than 0.930 g/cm$^3$ and 0.960 g/cm$^3$ or less.

[2] The stretched base material according to [1] above, wherein the gas barrier resins in the first surface resin layer and the second surface resin layer each independently include at least one selected from an ethylene-vinyl alcohol copolymer and a polyamide.

[3] The stretched base material according to [1] or [2] above, wherein the gas barrier resin in the first surface resin layer includes an aromatic polyamide, and the gas barrier resin in the second surface resin layer includes an aromatic polyamide.

[4] The stretched base material according to any one of [1] to [3] above, wherein the stretched base material further includes a first adhesive resin layer between the first surface resin layer and the polyethylene intermediate layers and further includes a second adhesive resin layer between the polyethylene intermediate layers and the second surface resin layer.

[5] A stretched base material including at least a first surface resin layer containing at least one type of polyethylene and an adhesive resin, one or two or more polyethylene intermediate layers each containing at least one type of polyethylene as a main component thereof, and a second surface resin layer containing at least one gas barrier resin as a main component thereof in this order, wherein the polyethylene in at least one layer selected from the first surface resin layer and the polyethylene intermediate layers includes at least one type of polyethylene selected from high-density polyethylene and medium-density polyethylene or has a density of more than 0.930 g/cm$^3$ and 0.960 g/cm$^3$ or less.

[6] The stretched base material according to [5] above, wherein the gas barrier resin in the second surface resin layer includes an aromatic polyamide.

[7] The stretched base material according to [5] or [6] above, wherein a percentage of the polyethylene in the first surface resin layer is 60% by mass or more and 95% by mass or less, and a percentage of the adhesive resin in the first surface resin layer is 5% by mass or more and 40% by mass or less.

[8] The stretched base material according to any one of [5] to [7] above, wherein the stretched base material further includes an adhesive resin layer between the polyethylene intermediate layers and the second surface resin layer.

[9] A stretched base material including at least a first surface resin layer containing at least one type of polyethylene and an adhesive resin, one or two or more polyethylene intermediate layers each containing at least one type of polyethylene as a main component thereof, and a second surface resin layer containing at least one type of polyethylene and an adhesive resin in this order, wherein the polyethylene in at least one layer selected from the first surface resin layer, the polyethylene intermediate layers, and the second surface resin layer includes at least one type of polyethylene selected from high-density polyethylene and medium-density polyethylene or has a density of more than 0.930 $g/cm^3$ and 0.960 $g/cm^3$ or less.

[10] The stretched base material according to [9] above, wherein, in the first surface resin layer and the second surface resin layer, a percentage of the polyethylene is 60% by mass or more and 95% by mass or less, and a percentage of the adhesive resin is 5% by mass or more and 40% by mass or less, independently for each layer.

[11] A stretched base material including at least a first surface resin layer containing at least one type of polyethylene as a main component thereof, one or two or more polyethylene intermediate layers each containing at least one type of polyethylene as a main component thereof, and a second surface resin layer containing at least one gas barrier resin as a main component thereof or containing at least one type of polyethylene and an adhesive resin in this order, wherein the polyethylene in at least one layer selected from the first surface resin layer, the polyethylene intermediate layers, and the second surface resin layer includes at least one type of polyethylene selected from high-density polyethylene and medium-density polyethylene or has a density of more than 0.930 $g/cm^3$ and 0.960 $g/cm^3$ or less.

[12] The stretched base material according to [11] above, wherein the gas barrier resin in the second surface resin layer includes at least one selected from an ethylene-vinyl alcohol copolymer and a polyamide.

[13] The stretched base material according to [11] or [12] above, wherein the gas barrier resin in the second surface resin layer includes an aromatic polyamide.

[14] The stretched base material according to any one of [11] to [13] above, wherein, in the second surface resin layer, a percentage of the polyethylene is 60% by mass or more and 95% by mass or less, and a percentage of the adhesive resin is 5% by mass or more and 40% by mass or less.

[15] The stretched base material according to any one of [11] to [14] above, wherein the second surface resin layer contains the gas barrier resin as a main component thereof, and the stretched base material further includes an adhesive resin layer between the polyethylene intermediate layers and the second surface resin layer.

[16] The stretched base material according to any one of [1] to [15] above, wherein the stretched base material is a stretched coextruded resin film.

[17] The stretched base material according to any one of [1] to [16] above, wherein the stretched base material is a biaxially oriented base material.

[18] The stretched base material according to any one of [1] to [17], wherein at least one of the polyethylene intermediate layers contains at least one type of polyethylene selected from high-density polyethylene and medium-density polyethylene and also contains linear low-density polyethylene.

[19] The stretched base material according to [18] above, wherein a sum of percentages of high-density polyethylene and medium-density polyethylene in the at least one of the polyethylene intermediate layers is 20% by mass or more and 60% by mass or less, and a percentage of linear low-density polyethylene in the at least one of the polyethylene intermediate layers is 40% by mass or more and 80% by mass or less.

[20] The stretched base material according to [18] or [19] above, wherein the high-density polyethylene is an ethylene-$\alpha$-olefin copolymer having a density of more than 0.945 $g/cm^3$ and 0.960 $g/cm^3$ or less, and the linear low-density polyethylene is an ethylene-$\alpha$-olefin copolymer having a density of 0.930 $g/cm^3$ or less.

[21] A barrier base material including the stretched base material according to any one of [1] to [10] and [16] to [20] above and at least one vapor deposition film provided on a surface of at least one selected from the first surface resin layer and the second surface resin layer in the stretched base material or including the stretched base material according to any one of [11] to [20] above and a vapor deposition film provided on a surface of the second surface resin layer in the stretched base material.

[22] A barrier base material including at least a first vapor deposition film, the stretched base material according to any one of [1] to [20] above, and a second vapor deposition film in this order, wherein the first vapor deposition film is provided on a surface of the first surface resin layer, and the second vapor deposition film is provided on a surface of the second surface resin layer.

[23] A laminate including at least the barrier base material according to [21] or [22] above and at least one heat-sealing layer.

[24] The laminate according to [23] above, wherein the heat-sealing layer contains polyethylene as a main component thereof, and a percentage of polyethylene in the entire laminate is 80% by mass or more.

[25] The laminate according to [23] or [24] above, wherein the laminate includes at least a first heat-sealing layer, the barrier base material, and a second heat-sealing layer in this order.

[Examples of Stretched Base Materials and Barrier Base Materials according to the Fifth and Sixth Aspects]

[1] A biaxially oriented polyethylene film including at least one polyethylene layer containing at least one type of polyethylene selected from high-density polyethylene and medium-density polyethylene.

[2] A biaxially oriented polyethylene film including at least one polyethylene layer containing at least one type of polyethylene as a main component thereof, wherein the polyethylene contained in the polyethylene layer has a density of more than 0.930 g/cm$^3$ and 0.960 g/cm$^3$ or less.

[3] The biaxially oriented polyethylene film according to [1] or [2] above, wherein the polyethylene layer contains at least one type of polyethylene selected from high-density polyethylene and medium-density polyethylene and also contains linear low-density polyethylene.

[4] The biaxially oriented polyethylene film according to [3] above, wherein a sum of percentages of high-density polyethylene and medium-density polyethylene in the polyethylene layer is 20% by mass or more and 60% by mass or less, and a percentage of linear low-density polyethylene in the polyethylene layer is 40% by mass or more and 80% by mass or less.

[5] The biaxially oriented polyethylene film according to [3] or [4] above, wherein the high-density polyethylene is an ethylene-$\alpha$-olefin copolymer having a density of more than 0.945 g/cm$^3$ and 0.960 g/cm$^3$ or less, and the linear low-density polyethylene is an ethylene-$\alpha$-olefin copolymer having a density of 0.930 g/cm$^3$ or less.

[6] The biaxially oriented polyethylene film according to any one of [1] to [5] above, wherein the biaxially oriented polyethylene film includes a first surface resin layer, at least one polyethylene intermediate layer, and a second surface resin layer, and each of the first surface resin layer, the polyethylene intermediate layer, and the second surface resin layer is independently one of the polyethylene layers.

[7] The biaxially oriented polyethylene film according to [6] above, wherein the biaxially oriented polyethylene film includes two or more of the polyethylene intermediate layers.

[8] The biaxially oriented polyethylene film according to [6] or [7] above, wherein the first surface resin layer, the polyethylene intermediate layer, and the second surface resin layer each independently contain high-density polyethylene that is an ethylene-$\alpha$-olefin copolymer having a density of more than 0.945 g/cm$^3$ or more and 0.960 g/cm$^3$ or less and linear low-density polyethylene that is an ethylene-$\alpha$-olefin copolymer having a density of 0.930 g/cm$^3$ or less.

[9] The biaxially oriented polyethylene film according to any one of [6] to [8] above, wherein a thickness of the first surface resin layer is 0.3 $\mu$m or more and 15 $\mu$m or less, a thickness of the polyethylene intermediate layer is 6 $\mu$m or

more and 100 µm or less, and a thickness of the second surface resin layer is 0.3 µm or more and 15 µm or less.

[10] The biaxially oriented polyethylene film according to any one of [1] to [9] above, wherein the biaxially oriented polyethylene film is a monolayer film consisting of the polyethylene layer or a multilayer film including at least the polyethylene layer.

[11] The biaxially oriented polyethylene film according to [10] above, wherein the biaxially oriented polyethylene film is a biaxially oriented coextruded resin film.

[12] A printing film including the biaxially oriented polyethylene film according to any one of [1] to [11] above and at least one printed layer provided on at least one surface of the film.

[13] A barrier base material including the biaxially oriented polyethylene film according to any one of [1] to [11] above and at least one vapor deposition film provided on at least one surface of the film.

[14] A laminate including at least the biaxially oriented polyethylene film according to any one of [1] to [11] above, the printing film according to [12] above, or the barrier base material according to [13] above and a heat-sealing layer.

[15] The laminate according to [14] above, wherein the heat-sealing layer contains polyethylene as a main component thereof, and a percentage of polyethylene in the entire laminate is 80% by mass or more.

EXAMPLES

[[First to Fourth Aspects]]

The stretched base materials and the barrier base materials according to the first to fourth aspects of the present disclosure will now be more specifically described using examples. The stretched base material and the barrier base material according to the present disclosure, however, are not limited to the following examples. In the descriptions below, "parts by mass" will be referred to simply as "parts."

[Materials for Stretched Base Materials]

In the production of stretched base materials, the following materials were used.

- Ethylene-vinyl alcohol copolymer (EVOH)

    EVAL G156B, manufactured by Kuraray Co., Ltd.; melting point, 157°C;

    MFR, 6.4 g/10 minutes; ethylene content, 48 mol%

- Aliphatic polyamide (aliphatic PA)

    Polyamide 6 (PA6) 1020, manufactured by UBE Corporation;
    melting point, 220°C; relative viscosity, 3.04

- Aromatic polyamide (aromatic PA)

    MX Nylon (MXD6) S6007, manufactured by Mitsubishi Gas Chemical Company, Inc.;
    polymeta-xylylene adipamide; melting point, 240°C; relative viscosity, 2.7

- Adhesive resin (acid-modified r-PP)

    ADMER QF580, manufactured by Mitsui Chemicals, Inc.;
    maleic anhydride-grafted random polypropylene;
    density, 0.900 g/cm$^3$; melting point, 140°C;
    MFR, 7.7 g/10 minutes

- Adhesive resin (acid-modified LLDPE)

ADMER NF587, manufactured by Mitsui Chemicals, Inc.;
maleic anhydride-grafted linear low-density polyethylene;
density, 0.910 g/cm$^3$; melting point, 120°C;
MFR, 2.3 g/10 minutes

- Homopolypropylene (h-PP)

  COSMOPLENE FS3031,
  manufactured by The Polyolefin Company (Singapore); density, 0.900 g/cm$^3$;
  melting point, 168°C; MFR, 3.4 g/10 minutes;
  isotactic index, 98%

- Random polypropylene (r-PP)

  COSMOPLENE FS5612,
  manufactured by The Polyolefin Company (Singapore); density, 0.900 g/cm$^3$;
  melting point, 134°C; MFR, 5.5 g/10 minutes

- High-density polyethylene (HDPE)

  Metallocene HDPE, an ethylene-1-octene copolymer;
  density, 0.955 g/cm$^3$; melting point, 130°C;
  MFR, 1.5 g/10 minutes

- Linear low-density polyethylene (LLDPE)

  INNATE TF80, manufactured by The Dow Chemical Company,
  metallocene LLDPE, an ethylene-1-octane copolymer;
  density, 0.926 g/cm$^3$; MFR, 1.7 g/10 minutes

- Acid-modified random polypropylene (MAH-r-PP)

  OREVAC 18722, manufactured by Arkema,
  maleic anhydride-grafted random polypropylene;
  density, 0.900 g/cm$^3$; melting point, 143°C;
  MFR, 7.0 g/10 minutes

- Acid-modified linear low-density polyethylene (MAH-LLDPE)

  OREVAC 18302N, manufactured by Arkema,
  maleic anhydride-grafted linear low-density polyethylene;
  density, 0.912 g/cm$^3$; melting point, 123°C;
  MFR, 1.5 g/10 minutes

- Compatibilizer

  RETAIN 3000, manufactured by The Dow Chemical Company;
  maleic anhydride-grafted polyethylene;
  density, 0.870 g/cm$^3$

- Anti-blocking agent (AB agent)
  Silica particles; average particle diameter, 3.5 μm

[Preparation of Compositions]

Blended polyethylene (A) was prepared by mixing 40 parts of HDPE and 60 parts of LLDPE (INNATE TF80).
Blended polyethylene (B1) was prepared by mixing 90 parts of LLDPE (INNATE TF80) and 10 parts of acid-modified LLDPE (OREVAC 18302N).

Blended polyethylene (B2) was prepared by mixing 18 parts of HDPE, 72 parts of LLDPE (INNATE TF80), and 10 parts of acid-modified LLDPE (OREVAC 18302N).

Blended polyethylene (C) was prepared by mixing 40 parts of HDPE, 60 parts of LLDPE (INNATE TF80), and 0.2 parts of (2,000 ppm) of the AB agent.

Blended polyethylene (D) was prepared by mixing 20 parts of HDPE, 80 parts of LLDPE (INNATE TF80), and 0.2 parts of (2,000 ppm) of the AB agent.

Blended polypropylene (A) was prepared by mixing 90 parts of random polypropylene (FS5612) and 10 parts of acid-modified random polypropylene (OREVAC 18722).

Blended polypropylene (B) was prepared by mixing 80 parts of homopolypropylene (FS3031) and 20 parts of random polypropylene (FS5612).

Blended polyamide (A) was prepared by mixing 50 parts of the aromatic polyamide (MXD6) and 50 parts of the aliphatic polyamide (polyamide 6 1020).

[First Aspect]

[EXAMPLE 1A]

The ethylene-vinyl alcohol copolymer (G156B),

the adhesive resin (QF580),

homopolypropylene (FS3031),

the adhesive resin (QF580), and

the ethylene-vinyl alcohol copolymer (G156B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared.

A stretched base material obtained in such a manner includes:

a 1-$\mu$m thick second surface resin layer (an EVOH layer),

a 1.5-$\mu$m thick second adhesive resin layer,

a 13-$\mu$m thick polypropylene intermediate layer,

a 1.5-$\mu$m thick first adhesive resin layer, and

a 1-$\mu$m thick first surface resin layer (an EVOH layer)

in this order.

Three types of barrier base materials were produced as follows.

On the surface of each of the first surface resin layer and the second surface resin layer of the stretched base material, a 30-nm thick aluminum (AL) deposition film was formed by PVD. In such a manner, a barrier base material was obtained.

On the surface of each of the first surface resin layer and the second surface resin layer of the stretched base material, a 30-nm thick alumina deposition film was formed by PVD. A solution was obtained by mixing 47.69 g of water, 22.8 g of isopropyl alcohol, and 1.13 g of 0.5 N hydrochloric acid. Into this solution, 27.04 g of tetraethoxysilane as a metal alkoxide and 1.35 g of 3-glycidoxypropyltriethoxysilane as a silane coupling agent were mixed with cooling to 10°C, yielding solution A. Then 4.14 g of polyvinyl alcohol with a degree of saponification of 99% or more and a degree of polymerization of 2,400 as a water-soluble polymer, 91.07 g of water, and 4.79 g of isopropyl alcohol were mixed, yielding solution B. Solution A and solution B were mixed such that solution A/solution B was 65.5/34.5 on a mass basis, yielding a barrier coating agent. The surface of the alumina deposition film was coated with this barrier coating agent by spin coating and subjected to heating treatment for 8 seconds at 100°C in an oven, resulting in the formation of a 0.3-$\mu$m thick barrier coating layer. In such a manner, a barrier base material was obtained.

On the surface of each of the first surface resin layer and the second surface resin layer of the stretched base material, a 30-nm thick silica deposition film was formed instead of an alumina deposition film. On this silica deposition film, furthermore, a barrier coating layer as described above was formed. In such a manner, a barrier base material was obtained.

[EXAMPLE 2A]

The polyamide (polyamide 6 1020),

the adhesive resin (QF580),

homopolypropylene (FS3031),

the adhesive resin (QF580), and

the polyamide (polyamide 6 1020)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 3A]

The ethylene-vinyl alcohol copolymer (G156B),

the adhesive resin (NF587),

LLDPE (INNATE TF80),

the adhesive resin (NF587), and

the ethylene-vinyl alcohol copolymer (G156B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 4A]

The polyamide (polyamide 6 1020),

the adhesive resin (NF587),

LLDPE (INNATE TF80),

the adhesive resin (NF587), and

the polyamide (polyamide 6 1020)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 11A]

The aromatic polyamide (MXD6),

the adhesive resin (QF580),

homopolypropylene (FS3031),

the adhesive resin (QF580), and

the aromatic polyamide (MXD6)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 12A]

Blended polyamide (A),

the adhesive resin (QF580),

homopolypropylene (FS3031),

the adhesive resin (QF580), and

blended polyamide (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 13A]

The aromatic polyamide (MXD6),

the adhesive resin (NF587),

LLDPE (INNATE TF80),

the adhesive resin (NF587), and

the aromatic polyamide (MXD6)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 14A]

Blended polyamide (A),

the adhesive resin (NF587),

LLDPE (INNATE TF80),

the adhesive resin (NF587), and

blended polyamide (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 21A]

The ethylene-vinyl alcohol copolymer (G156B),

the adhesive resin (NF587),

blended polyethylene (A),

the adhesive resin (NF587), and

the ethylene-vinyl alcohol copolymer (G156B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-$\mu$m thick stretched base material (biaxially oriented film) was prepared. In Example 21A, biaxial orientation was successfully performed. Using the stretched base material, three types of barrier base materials were produced in the same manner as in Example 1A.

[EXAMPLES 22A to 24A]

A stretched base material and barrier base materials were produced in the same manner as in Example 21A, except that the aliphatic polyamide (polyamide 6 1020), the aromatic polyamide (MXD6), or blended polyamide (A) was used instead of the ethylene-vinyl alcohol copolymer (G156B). In Examples 22A to 24A, biaxial orientation was successfully performed.

[Second Aspect]

[EXAMPLE 1B]

The ethylene-vinyl alcohol copolymer (G156B),

the adhesive resin (QF580),

homopolypropylene (FS3031),

homopolypropylene (FS3031), and

blended polypropylene (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 2B]

The polyamide (polyamide 6 1020),

the adhesive resin (QF580),

homopolypropylene (FS3031),

homopolypropylene (FS3031), and

blended polypropylene (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 3B]

The ethylene-vinyl alcohol copolymer (G156B),

the adhesive resin (NF587),

LLDPE (INNATE TF80),

LLDPE (INNATE TF80), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 4B]

The polyamide (polyamide 6 1020),

the adhesive resin (NF587),

LLDPE (INNATE TF80),

LLDPE (INNATE TF80), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 11B]

The aromatic polyamide (MXD6),

the adhesive resin (QF580),

homopolypropylene (FS3031),

homopolypropylene (FS3031), and

blended polypropylene (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 12B]

Blended polyamide (A),

the adhesive resin (QF580),

homopolypropylene (FS3031),

homopolypropylene (FS3031), and

blended polypropylene (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 13B]

The aromatic polyamide (MXD6),

the adhesive resin (NF587),

LLDPE (INNATE TF80),

LLDPE (INNATE TF80), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 14B]

Blended polyamide (A),

the adhesive resin (NF587),

LLDPE (INNATE TF80),

LLDPE (INNATE TF80), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1A.

[EXAMPLE 21B]

The ethylene-vinyl alcohol copolymer (G156B),

the adhesive resin (NF587),

blended polyethylene (A),

blended polyethylene (A), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-$\mu$m thick stretched base material (biaxially oriented film) was prepared. In Example 21B, biaxial orientation was successfully performed. Using the stretched base material, three types of barrier base materials were produced in the same manner as in Example 1A.

[EXAMPLES 22B to 24B]

A stretched base material and barrier base materials were produced in the same manner as in Example 21B, except that the aliphatic polyamide (polyamide 6 1020), the aromatic polyamide (MXD6), or blended polyamide (A) was used instead of the ethylene-vinyl alcohol copolymer (G156B). In Examples 22B to 24B, biaxial orientation was successfully performed.

[Third Aspect]

[EXAMPLE 1C]

Blended polypropylene (A),

homopolypropylene (FS3031),

homopolypropylene (FS3031),

homopolypropylene (FS3031), and

blended polypropylene (A)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1A.

[EXAMPLE 2C]

Blended polyethylene (B1),

LLDPE (INNATE TF80),

LLDPE (INNATE TF80),

LLDPE (INNATE TF80), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1A.

[EXAMPLE 11C]

Blended polyethylene (B1),

blended polyethylene (A),

blended polyethylene (A),

blended polyethylene (A), and

blended polyethylene (B1)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-μm thick stretched base material (biaxially oriented film) was prepared. In Example 11C, biaxial orientation was successfully performed. Using the stretched base material, three types of barrier base materials were produced in the same manner as in Example 1A.

[Fourth Aspect]

[EXAMPLE 1D]

Blended polypropylene (A),

homopolypropylene (FS3031),

homopolypropylene (FS3031),

homopolypropylene (FS3031), and

blended polypropylene (B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared.

Three types of barrier base materials were produced as follows.

On the surface of the second surface resin layer of the stretched base material, a 30-nm thick aluminum (AL) deposition film was formed by PVD. In such a manner, a barrier base material was obtained.

On the surface of the second surface resin layer of the stretched base material, a 30-nm thick alumina deposition film was formed by PVD. The surface of the alumina deposition film was coated with the barrier coating agent described above, prepared in Example 1A, by spin coating and subjected to heating treatment for 8 seconds at 100°C in an oven, resulting in the formation of a 0.3-$\mu$m thick barrier coating layer. In such a manner, a barrier base material was obtained.

On the surface of the second surface resin layer of the stretched base material, a 30-nm thick silica deposition film was formed instead of an alumina deposition film. On this silica deposition film, furthermore, a barrier coating layer as described above was formed. In such a manner, a barrier base material was obtained.

[EXAMPLE 2D]

Blended polyethylene (B1),

LLDPE (INNATE TF80),

LLDPE (INNATE TF80),

LLDPE (INNATE TF80), and

LLDPE (INNATE TF80)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1D.

[EXAMPLE 3D]

The ethylene-vinyl alcohol copolymer (G156B),

the adhesive resin (QF580),

homopolypropylene (FS3031),

homopolypropylene (FS3031), and

blended polypropylene (B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1D.

[EXAMPLE 4D]

The polyamide (polyamide 6 1020),

the adhesive resin (QF580),

homopolypropylene (FS3031),

homopolypropylene (FS3031), and

blended polypropylene (B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 5D]

The ethylene-vinyl alcohol copolymer (G156B),

the adhesive resin (NF587),

LLDPE (INNATE TF80),

LLDPE (INNATE TF80), and

LLDPE (INNATE TF80)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 6D]

The polyamide (polyamide 6 1020),

the adhesive resin (NF587),

LLDPE (INNATE TF80),

LLDPE (INNATE TF80), and

LLDPE (INNATE TF80)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 11D]

The aromatic polyamide (MXD6),

the adhesive resin (QF580),

homopolypropylene (FS3031),

homopolypropylene (FS3031), and

blended polypropylene (B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 12D]

Blended polyamide (A),

the adhesive resin (QF580),

homopolypropylene (FS3031),

homopolypropylene (FS3031), and

blended polypropylene (B)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 13D]

The aromatic polyamide (MXD6),

the adhesive resin (NF587),

LLDPE (INNATE TF80),

LLDPE (INNATE TF80), and

LLDPE (INNATE TF80)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-μm thick stretched base material (biaxially oriented film) was prepared. Using the stretched base material, three types of barrier base materials were produced in the same manner as in Example 1D.

[EXAMPLE 14D]

Blended polyamide (A),

the adhesive resin (NF587),

LLDPE (INNATE TF80),

LLDPE (INNATE TF80), and

LLDPE (INNATE TF80)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using the stretched base material, three types of barrier base materials were produced in the same manner as in Example 1D.

[EXAMPLE 21D]

Blended polyethylene (B1),

blended polyethylene (A),

blended polyethylene (A),

blended polyethylene (A), and

blended polyethylene (D)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-$\mu$m thick stretched base material (biaxially oriented film) was prepared. In Example 21D, biaxial orientation was successfully performed. Using the stretched base material, three types of barrier base materials were produced in the same manner as in Example 1D.

[EXAMPLE 22D]

A stretched base material and barrier base materials were produced in the same manner as in Example 21D, except that the blend proportions of materials, such as polyethylene, in each layer were changed as specified in Table 12. In Example 22D, biaxial orientation was successfully performed. In Table 12, the amount of the AB agent in the first surface resin layer is 2,000 ppm.

[EXAMPLE 31D]

The ethylene-vinyl alcohol copolymer (G156B),

the adhesive resin (NF587),

blended polyethylene (A),

blended polyethylene (A), and

blended polyethylene (C)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-$\mu$m thick stretched base material (biaxially oriented film) was prepared. In Example 31D, biaxial orientation was successfully performed. Using the stretched base material, three types of barrier base materials were produced in the same manner as in Example 1D.

[EXAMPLES 32D to 34D]

A stretched base material and barrier base materials were produced in the same manner as in Example 31D, except that the aliphatic polyamide (polyamide 6 1020), the aromatic polyamide (MXD6), or blended polyamide (A) was used instead of the ethylene-vinyl alcohol copolymer (G156B). In Examples 32D to 34D, biaxial orientation was successfully performed.

[COMPARATIVE EXAMPLE 1]

Homopolypropylene (FS3031) was extruded to form a single layer of film by T-die casting, yielding a monolayer film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using this stretched base material, three types of barrier base materials were produced in the same manner as in Example 1A. Using this stretched base material, three types of barrier base materials were produced in the same manner as in Example 1D.

[COMPARATIVE EXAMPLE 2]

LLDPE (INNATE TF80) was extruded to form a single layer of film by T-die casting, yielding a monolayer film. This film was subjected to a sequential biaxial orientation treatment consisting of stretching 5 times in the machine direction (MD direction) and subsequent stretching 8.5 times in the transverse direction (TD direction), through which an 18-$\mu$m thick stretched base material (biaxially oriented film) was prepared. Using this stretched base material, three types of barrier base materials were produced in the same manner as in Example 1A. Using this stretched base material, three types of barrier base materials were produced in the same manner as in Example 1D.

[Gas Barrier Properties Test]

For each stretched base material and each barrier base material obtained in the examples and comparative examples (hereinafter also referred to as "the test specimen"), the oxygen transmission rate (cc/(m$^2$·day·atm)) and the water vapor transmission rate (g/(m$^2$·day)) were measured by the following methods. The results are presented in the respective tables.

<Oxygen Transmission Rate>

Using an oxygen permeation analyzer (OX-TRAN 2/20, manufactured by MOCON, Inc.), the oxygen transmission rate of the test specimen in an environment at a temperature of 23°C and a humidity of 90% RH according to JIS K7126-2: 2006.
The evaluation criteria in Examples 1A to 4A, Examples 1B to 4B, and the comparative examples presented in the same tables as these examples are as follows.

A: The oxygen transmission rate is less than 0.2.

B: The oxygen transmission rate is 0.2 or more and less than 0.8.

C: The oxygen transmission rate is 0.8 or more and less than 2.0.

D: The oxygen transmission rate is 2.0 or more and less than 10.

E: The oxygen transmission rate is 10 or more and less than 100.

F: The oxygen transmission rate is 100 or more.

The evaluation criteria in Examples 11A to 14A, Examples 21A to 24A, Examples 11B to 14B, Examples 21B to 24B, Example 11C, Examples 11D to 14D, Examples 21D and 22D, Examples 31D to 34D, and the comparative examples presented in the same tables as these examples are as follows.

A: The oxygen transmission rate is less than 0.2.

B: The oxygen transmission rate is 0.2 or more and less than 0.8.

C: The oxygen transmission rate is 0.8 or more and less than 2.0.

D: The oxygen transmission rate is 2.0 or more and less than 10.

E: The oxygen transmission rate is 10 or more and less than 30.

F: The oxygen transmission rate is 30 or more and less than 100.

G: The oxygen transmission rate is 100 or more.

The evaluation criteria in Examples 1C and 2C and the comparative examples presented in the same table as these examples are as follows.

A: The oxygen transmission rate is less than 1.0.

B: The oxygen transmission rate is 1.0 or more and less than 5.0.

C: The oxygen transmission rate is 5.0 or more and less than 10.

D: The oxygen transmission rate is 10 or more and less than 100.

E: The oxygen transmission rate is 100 or more.

The evaluation criteria in Examples 1D to 6D and the comparative examples presented in the same tables as these examples are as follows.

A: The oxygen transmission rate is less than 0.5.

B: The oxygen transmission rate is 0.5 or more and less than 1.5.

C: The oxygen transmission rate is 1.5 or more and less than 5.0.

D: The oxygen transmission rate is 5.0 or more and less than 10.

E: The oxygen transmission rate is 10 or more and less than 100.

F: The oxygen transmission rate is 100 or more.

<Water Vapor Transmission Rate>

Using a water vapor permeation analyzer (PERMATRAN-w 3/33, manufactured by MOCON, Inc.), the water vapor transmission rate of the test specimen in an environment at a temperature of 40°C and a humidity of 90% RH was measured according to JIS K7129-2: 2019.
The evaluation criteria in Examples 1A to 4A, Examples 1B to 4B, and the comparative examples presented in the same tables as these examples are as follows.

A: The water vapor transmission rate is less than 0.2.

B: The water vapor transmission rate is 0.2 or more and less than 1.5.

C: The water vapor transmission rate is 1.5 or more and less than 10.

D: The water vapor transmission rate is 10 or more and less than 100.

E: The water vapor transmission rate is 100 or more.

The evaluation criteria in Examples 11A to 14A, Examples 21A to 24A, Examples 11B to 14B, Examples 21B to 24B, Example 11C, Examples 11D to 14D, Examples 21D and 22D, Examples 31D to 34D, and the comparative examples presented in the same tables as these examples are as follows.

A: The water vapor transmission rate is less than 0.2.

B: The water vapor transmission rate is 0.2 or more and less than 0.8.

C: The water vapor transmission rate is 0.8 or more and less than 1.5.

D: The water vapor transmission rate is 1.5 or more and less than 3.0.

E: The water vapor transmission rate is 3.0 or more and less than 5.0.

F: The water vapor transmission rate is 5.0 or more and less than 10.

G: The water vapor transmission rate is 10 or more and less than 100.

The evaluation criteria in Examples 1C and 2C and the comparative examples presented in the same table as these examples are as follows.

A: The water vapor transmission rate is less than 1.0.

B: The water vapor transmission rate is 1.0 or more and less than 5.0.

C: The water vapor transmission rate is 5.0 or more and less than 10.

D: The water vapor transmission rate is 10 or more and less than 100.

E: The water vapor transmission rate is 100 or more.

The evaluation criteria in Examples 1D to 6D and the comparative examples presented in the same tables as these examples are as follows.

A: The water vapor transmission rate is less than 0.5.

B: The water vapor transmission rate is 0.5 or more and less than 1.5.

C: The water vapor transmission rate is 1.5 or more and less than 5.0.

D: The water vapor transmission rate is 5.0 or more and less than 10.

E: The water vapor transmission rate is 10 or more and less than 100.

F: The water vapor transmission rate is 100 or more.

[T-Peel Test]

To the surface of a vapor deposition film or the surface of a barrier coating layer of each barrier base material obtained in the examples and comparative examples, a 20-$\mu$m thick general OPP film, with one surface corona-treated, was attached using a urethane adhesive (RU77T/H7, manufactured by Rock Paint Co., Ltd.) at an application amount of 3 g/m$^2$, through which a 15-mm wide test specimen was prepared. In accordance with JIS K6854-3: 1999 (Adhesives-Determination of peel strength of bonded assemblies-Part 3: Adhesives-180° peel test for flexible-to-flexible bonded assemblies (T-peel test)), the peel strength (N/15 mm) of the vapor deposition film for each layer was measured by performing a T-peel test using a tensile tester (TENSILON universal material testing instrument, manufactured by Orientec Corporation) under the following conditions: test speed, 50 mm/min; temperature, 23°C. The results are presented in the respective tables.

[Heat Resistance Evaluation 1: Printing Resistance Evaluation]

The surface of the stretched base materials produced as described above was subjected to corona discharge treatment. On the corona-treated surface of the stretched base materials, an image was formed by gravure printing using an oil-based gravure ink (manufactured by DIC Graphics Corporation; trade name, FINART). Heat resistance was evaluated according to the following criteria.

A: No significant shrinkage of the stretched base material occurred during drying of the printed image.

B: Significant shrinkage of the stretched base material occurred during drying of the printed image.

[Heat Resistance Evaluation 2: 170°C Heat-Sealing Resistance Evaluation]

The surface of the stretched base materials produced as described above was subjected to corona discharge treatment. On the corona-treated surface of the stretched base materials, an image was formed by gravure printing using an oil-based gravure ink (manufactured by DIC Graphics Corporation; trade name, FINART), yielding printing films. Each printing film was joined with a 40-$\mu$m thick LLDPE film, which was a monolayer film formed from Evolue SP2020 (manufactured by Mitsui Chemicals, Inc.), using a urethane-based dry lamination adhesive.

With portions of the surface of the LLDPE film in the joined laminate film opposed, heat sealing (1 second at a pressure of 1 kgf/cm$^2$) was performed using an aluminum bar sealer, with one of its bars set to 170°C, in such a manner that the laminate film was sandwiched between the bars, and the condition of thermal shrinkage of the laminate film in the heat-sealed area was checked. Heat resistance was evaluated according to the criteria below.

A: No shrinkage of the film occurred during heat sealing at 170°C.

B: Little shrinkage of the film occurred during heat sealing at 170°C.

C: Significant shrinkage of the film occurred during heat sealing at 170°C.

[Table 1]

Table 1

| | Example 1A | | | | Example 2A | | | | Comparative Example 1 | | | | Example 3A | | | | Example 4A | | | | Comparative Example 2 | | | |
|---|---|---|---|---|---|---|---|---|---|---|---|---|---|---|---|---|---|---|---|---|---|---|---|---|
| Structure of the stretched base material or barrier base material | | | | | | | | | | | | | | | | | | | | | | | | |
| Second barrier coating layer | | | Yes | Yes | | | Yes | Yes | | | Yes | Yes | | | Yes | Yes | | | Yes | Yes | | | Yes | Yes |
| Second vapor deposition film | | AL | Alumina | Silica | | AL | Alumina | Silica | | AL | Alumina | Silica | | AL | Alumina | Silica | | AL | Alumina | Silica | | AL | Alumina | Silica |
| Second surface resin layer | EVOH 1μm | | | | PA6 1μm | | | | | | | | EVOH 1μm | | | | PA6 1μm | | | | | | | |
| Second adhesive resin layer | Acid-modified r-PP 1.5μm | | | | Acid-modified r-PP 1.5μm | | | | Polypropylene layer h-PP 18μm | | | | Acid-modified LLDPE 1.5μm | | | | Acid-modified LLDPE 1.5μm | | | | Polyethylene layer LLDPE 18μm | | | |
| Polyolefin intermediate layer | h-PP 13μm | | | | h-PP 13μm | | | | | | | | LLDPE 13μm | | | | LLDPE 13μm | | | | | | | |
| First adhesive resin layer | Acid-modified r-PP 1.5μm | | | | Acid-modified r-PP 1.5μm | | | | | | | | Acid-modified LLDPE 1.5μm | | | | Acid-modified LLDPE 1.5μm | | | | | | | |
| First surface resin layer | EVOH 1μm | | | | PA6 1μm | | | | | | | | EVOH 1μm | | | | PA6 1μm | | | | | | | |
| First vapor deposition film | | AL | Alumina | Silica | | AL | Alumina | Silica | | AL | Alumina | Silica | | AL | Alumina | Silica | | AL | Alumina | Silica | | AL | Alumina | Silica |
| First barrier coating layer | | | Yes | Yes | | | Yes | Yes | | | Yes | Yes | | | Yes | Yes | | | Yes | Yes | | | Yes | Yes |
| Physical characteristics of the stretched base material or barrier base material | | | | | | | | | | | | | | | | | | | | | | | | |
| Oxygen transmission rate | D | A | B | B | E | A | B | B | F | E | C | C | D | A | C | B | E | A | B | B | F | E | C | C |

EP 4 725 694 A1

| Physical characteristics of the stretched base material or barrier base material | | | | | | | | | | | | | | | | | | | | | | | | |
|---|---|---|---|---|---|---|---|---|---|---|---|---|---|---|---|---|---|---|---|---|---|---|---|---|
| Water vapor transmission rate | C | A | B | B | C | A | B | B | C | B | C | C | C | A | B | B | C | A | B | B | D | C | C | C |
| Vapor deposition film/surface resin layer peel strength (N/15 mm) | | 4.0 or more | 4.0 or more | 4.0 or more | | 4.0 or more | 4.0 or more | 4.0 or more | | | | | | 4.0 or more | 4.0 or more | 4.0 or more | | 4.0 or more | 4.0 or more | 4.0 or more | | | | |
| Vapor deposition film/polyolefin layer peel strength (N/15 mm) | | | | | | | | | | 1.5 | 2.0 | 2.5 | | | | | | | | | | 2.5 | 3.0 | 3.0 |

[Table 2]

Table 2

| | Example 11A | | | Example 12A | | | Comparative Example 1 | | | Example 13A | | | Example 14A | | | Comparative Example 2 | | |
|---|---|---|---|---|---|---|---|---|---|---|---|---|---|---|---|---|---|---|
| Structure of the stretched base material or barrier base material | | | | | | | | | | | | | | | | | | |
| Second barrier coating layer | | Yes | Yes | | Yes | Yes | | Yes | Yes | | Yes | Yes | | Yes | Yes | | Yes | Yes |
| Second vapor deposition film | AL | Alumina | Silica | AL | Alumina | Silica | AL | Alumina | Silica | AL | Alumina | Silica | AL | Alumina | Silica | AL | Alumina | Silica |
| Second surface resin layer | MXD6 | | | MXD6 50% PA6 50% | | | Polypropylene layer h - PP 18μm | | | MXD6 | | | MXD6 50% PA6 50% | | | Polyethylene layer LLDPE 18μm | | |
| | 1μm | | | 1μm | | | | | | 1μm | | | 1μm | | | | | |
| Second adhesive resin layer | Acid-modified r-PP | | | Acid-modified r-PP | | | | | | Acid-modified LLDPE | | | Acid-modified LLDPE | | | | | |
| | 1.5μm | | | 1.5μm | | | | | | 1.5μm | | | 1.5μm | | | | | |
| Polyolefin intermediate layer | h -PP | | | h -PP | | | | | | LLDPE | | | LLDPE | | | | | |
| | 13μm | | | 13μm | | | | | | 13μm | | | 13μm | | | | | |
| First adhesive resin layer | Acid-modified r-PP | | | Acid-modified r-PP | | | | | | Acid-modified LLDPE | | | Acid-modified LLDPE | | | | | |
| | 1.5μm | | | 1.5μm | | | | | | 1.5μm | | | 1.5μm | | | | | |
| First surface resin layer | MXD6 | | | MXD6 50% PA6 50% | | | | | | MXD6 | | | MXD6 50% PA6 50% | | | | | |
| | 1μm | | | 1μm | | | | | | 1μm | | | 1μm | | | | | |
| First vapor deposition film | AL | Alumina | Silica | AL | Alumina | Silica | AL | Alumina | Silica | AL | Alumina | Silica | AL | Alumina | Silica | AL | Alumina | Silica |
| First barrier coating layer | | Yes | Yes | | Yes | Yes | | Yes | Yes | | Yes | Yes | | Yes | Yes | | Yes | Yes |

(continued)

| | | | | | | | | | | | | | | | | | | | | | | | | |
|---|---|---|---|---|---|---|---|---|---|---|---|---|---|---|---|---|---|---|---|---|---|---|---|---|
| Physical characteristics of the stretched base material or barrier base material | | | | | | | | | | | | | | | | | | | | | | | | |
| Oxygen transmission rate | D | A | B | B | D | A | B | B | G | E | C | C | D | A | B | B | D | A | B | B | G | E | C | C |
| Water vapor transmission rate | D | A | B | B | E | A | B | B | F | C | E | D | D | A | B | B | E | A | B | B | G | D | E | D |
| Vapor deposition film/surface resin layer peel strength (N/15 mm) | | 4.0 or more | 4.0 or more | 4.0 or more | | 4.0 or more | 4.0 or more | 4.0 or more | | | | | | 4.0 or more | 4.0 or more | 4.0 or more | | 4.0 or more | 4.0 or more | 4.0 or more | | | | |
| Vapor deposition film/polyolefin layer peel strength (N/15 mm) | | | | | | | | | | 1.5 | 2.0 | 2.5 | | | | | | | | | | 2.5 | 3.0 | 3.0 |

[Table 3]

[Table 3]

Table 3

| | Example 21A | | | Example 22A | | | Example 23A | | | Example 24A | | | Comparative Example 2A | | |
|---|---|---|---|---|---|---|---|---|---|---|---|---|---|---|---|
| Structure of the stretched base material or barrier base material | | | | | | | | | | | | | | | |
| Second barrier coating layer | | Yes | Yes | | Yes | Yes | | Yes | Yes | | Yes | Yes | | Yes | Yes |
| Second vapor deposition film | AL | Alumina | Silica | AL | Alumina | Silica | AL | Alumina | Silica | AL | Alumina | Silica | AL | Alumina | Silica |
| Second surface resin layer | EVOH | | | PA6 | | | MXD6 | | | MXD6 50% PA6 50% | | | Polyethylene layer LLDPE 25μm | | |
| | 1μm | | | 1μm | | | 1μm | | | 1μm | | | | | |
| Second adhesive resin layer | Acid-modified r-PP | | | ← | | | ← | | | ← | | | | | |
| | 2μm | | | 2μm | | | 2μm | | | 2μm | | | | | |
| Polyethylene intermediate layer | HDPE 40% LLDPE 60% | | | ← | | | ← | | | ← | | | | | |
| | 19μm | | | 19μm | | | 19μm | | | 19μm | | | | | |
| First adhesive resin layer | Acid-modified r-PP | | | ← | | | ← | | | ← | | | | | |
| | 2μm | | | 2μm | | | 2μm | | | 2μm | | | | | |
| First surface resin layer | EVOH | | | PA6 | | | MXD6 | | | MXD6 50% PA6 50% | | | | | |
| | 1μm | | | 1μm | | | 1μm | | | 1μm | | | | | |
| First vapor deposition film | AL | Alumina | Silica | AL | Alumina | Silica | AL | Alumina | Silica | AL | Alumina | Silica | AL | Alumina | Silica |
| First barrier coating layer | | Yes | Yes | | Yes | Yes | | Yes | Yes | | Yes | Yes | | Yes | Yes |

EP 4 725 694 A1

76

(continued)

| | | | | | | | | | | | | | | | | | | | | |
|---|---|---|---|---|---|---|---|---|---|---|---|---|---|---|---|---|---|---|---|---|
| Physical characteristics of the stretched base material or barrier base material | | | | | | | | | | | | | | | | | | | | |
| Oxygen transmission rate | D | A | C | B | E | A | B | B | D | A | B | B | D | A | B | B | G | E | C | C |
| Water vapor transmission rate | F | A | B | B | E | A | C | C | D | A | B | B | E | A | B | B | G | D | E | D |
| Vapor deposition film/surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more | | | | |
| Vapor deposition film/polyethylene layer peel strength (N/15 mm) | | | | | | | | | | | | | | | | | | 2.5 | 3.0 | 3.0 |
| Heat resistance evaluation 1 | A | | | | A | | | | A | | | | A | | | | B | | | |
| Heat resistance evaluation 2 | A | | | | A | | | | A | | | | A | | | | C | | | |

[Table 4]

[Table 4]

Table 4

| | Example 1B | | | Example 2B | | | Comparative Example 1 | | | Example 3B | | | Example 4B | | | Comparative Example 2 | | |
|---|---|---|---|---|---|---|---|---|---|---|---|---|---|---|---|---|---|---|
| Structure of the stretched base material or barrier base material | | | | | | | | | | | | | | | | | | | |
| Second barrier coating layer | | Yes | Yes | | Yes | Yes | | Yes | Yes | | Yes | Yes | | Yes | Yes | | Yes | Yes |
| Second vapor deposition film | AL | Alumina | Silica | AL | Alumina | Silica | AL | Alumina | Silica | AL | Alumina | Silica | AL | Alumina | Silica | AL | Alumina | Silica |
| Second surface resin layer | EVOH | | | PA6 | | | Polypropylene layer h -PP 18μm | | | EVOH | | | PA6 | | | Polyethylene layer LLDPE 18μm | | |
| | 1μm | | | 1μm | | | | | | 1μm | | | 1μm | | | | | |
| Adhesive resin layer | Acid-modified r-PP | | | Acid-modified r-PP | | | | | | Acid-modified LLDPE | | | Acid-modified LLDPE | | | | | |
| | 1.5μm | | | | | | | | | 1.5μm | | | 1.5μm | | | | | |
| Second polyolefin layer | h -PP | | | h -PP | | | | | | LLDPE | | | LLDPE | | | | | |
| | 13μm | | | 13μm | | | | | | 13μm | | | 13μm | | | | | |
| First polyolefin layer | h -PP | | | h -PP | | | | | | LLDPE | | | LLDPE | | | | | |
| | 1.5μm | | | 1.5μm | | | | | | 1.5μm | | | 1.5μm | | | | | |
| First surface resin layer | r -PP 90% MAH- r -PP 10% | | | r -PP 90% MAH- r -PP 10% | | | | | | LLDPE 90% MAH-LLDPE 10% | | | LLDPE 90% MAH-LLDPE 10% | | | | | |
| | 1μm | | | 1μm | | | | | | 1μm | | | 1μm | | | | | |
| First vapor deposition film | AL | Alumina | Silica | AL | Alumina | Silica | AL | Alumina | Silica | AL | Alumina | Silica | AL | Alumina | Silica | AL | Alumina | Silica |
| First barrier coating layer | | Yes | Yes | | Yes | Yes | | Yes | Yes | | Yes | Yes | | Yes | Yes | | Yes | Yes |
| Physical characteristics of the stretched base material or barrier base material | | | | | | | | | | | | | | | | | | | |
| Oxygen transmission rate | D | A | B | B | E | B | B | B | F | E | C | C | D | A | C | B | E | B | B | B | F | E | C | C |

EP 4 725 694 A1

| | | | | | | | | | | | | | | | | | | | | | | | | |
|---|---|---|---|---|---|---|---|---|---|---|---|---|---|---|---|---|---|---|---|---|---|---|---|---|
| Physical characteristics of the stretched base material or barrier base material | | | | | | | | | | | | | | | | | | | | | | | | |
| Water vapor transmission rate | C | A | B | B | C | B | C | B | C | B | C | C | C | B | C | B | C | B | C | C | D | C | C | C |
| First vapor deposition film/first surface resin layer peel strength (N/15 mm) | | 3.0 or more | 3.0 or more | 3.0 or more | | 3.0 or more | 3.0 or more | 3.0 or more | | | | | | 4.0 or more | 4.0 or more | 4.0 or more | 4.0 or more | 4.0 or more | 4.0 or more | | | | | |
| Second vapor deposition film/second surface resin layer peel strength (N/15 mm) | | 4.0 or more | 4.0 or more | 4.0 or more | | 4.0 or more | 4.0 or more | 4.0 or more | | | | | | 4.0 or more | 4.0 or more | 4.0 or more | 4.0 or more | 4.0 or more | 4.0 or more | | | | | |
| Vapor deposition film/polyolefin layer peel strength (N/15 mm) | | | | | | | | | | 1.5 | 2.0 | 2.5 | | | | | | | | | | 2.5 | 3.0 | 3.0 |

EP 4 725 694 A1

80

[Table 5]

[Table 5]

Table 5

| | Example 11B | | | Example 12B | | | Comparative Example 1 | | | Example 13B | | | Example 14B | | | Comparative Example 2 | | |
|---|---|---|---|---|---|---|---|---|---|---|---|---|---|---|---|---|---|---|
| Structure of the stretched base material or barrier base material | | | | | | | | | | | | | | | | | | |
| Second barrier coating layer | | Yes | Yes | | Yes | Yes | | Yes | Yes | | Yes | Yes | | Yes | Yes | | Yes | Yes |
| Second vapor deposition film | AL | Alumina | Silica | AL | Alumina | Silica | AL | Alumina | Silica | AL | Alumina | Silica | AL | Alumina | Silica | AL | Alumina | Silica |
| Second surface resin layer | MXD6 | | | MXD6 50% PA6 50% | | | Polypropylene layer h -PP 18μm | | | MXD6 | | | MXD6 50% PA6 50% | | | Polyethylene layer LLDPE 18μm | | |
| | 1μm | | | 1μm | | | | | | 1μm | | | 1μm | | | | | |
| Adhesive resin layer | Acid-modified r-PP | | | Acid-modified r-PP | | | | | | Acid-modified LLDPE | | | Acid-modified LLDPE | | | | | |
| | 1.5μm | | | 1.5μm | | | | | | 1.5μm | | | 1.5μm | | | | | |
| Second polyolefin layer | h - PP | | | h - PP | | | | | | LLDPE | | | LLDPE 13μm | | | | | |
| | 13μm | | | 13μm | | | | | | 13μm | | | | | | | | |
| First polyolefin layer | h -PP | | | h -PP | | | | | | LLDPE | | | LLDPE | | | | | |
| | 1.5μm | | | 1.5μm | | | | | | 1.5μm | | | 1.5μm | | | | | |
| First surface resin layer | r -PP 90% MAH- r -PP 10% | | | r -PP 90% MAH- r - PP 10% | | | | | | LLDPE 90% MAH-LLDPE 10% | | | LLDPE 90% MAH-LLDPE 10% | | | | | |
| | 1μm | | | 1μm | | | | | | 1μm | | | 1μm | | | | | |
| First vapor deposi-tion film | AL | Alumina | Silica | AL | Alumina | Silica | AL | Alumina | Silica | AL | Alumina | Silica | AL | Alumina | Silica | AL | Alumina | Silica |
| First barrier coating layer | | Yes | Yes | | Yes | Yes | | Yes | Yes | | Yes | Yes | | Yes | Yes | | Yes | Yes |

EP 4 725 694 A1

(continued)

| Physical characteristics of the stretched base material or barrier base material | | | | | | | | | | | | | | | | | | | | | | | | |
|---|---|---|---|---|---|---|---|---|---|---|---|---|---|---|---|---|---|---|---|---|---|---|---|---|
| Oxygen transmission rate | D | A | B | B | E | B | B | B | G | E | C | C | D | A | B | B | E | B | B | B | G | E | C | C |
| Water vapor transmission rate | D | A | C | C | E | B | C | C | F | C | E | D | D | A | C | C | E | B | C | C | G | D | E | D |
| First vapor deposition film/first surface resin layer peel strength (N/15 mm) | | 3.0 or more | 3.0 or more | 3.0 or more | | 3.0 or more | 3.0 or more | 3.0 or more | | | | | | 4.0 or more | 4.0 or more | 4.0 or more | | 4.0 or more | 4.0 or more | 4.0 or more | | | | |
| Second vapor deposition film/second surface resin layer peel strength (N/15 mm) | | 4.0 or more | 4.0 or more | 4.0 or more | | 4.0 or more | 4.0 or more | 4.0 or more | | | | | | 4.0 or more | 4.0 or more | 4.0 or more | | 4.0 or more | 4.0 or more | 4.0 or more | | | | |
| Vapor deposition film/polyolefin layer peel strength (N/15 mm) | | | | | | | | | | 1.5 | 2.0 | 2.5 | | | | | | | | | | 2.5 | 3.0 | 3.0 |

[Table 6]

[Table 6]

Table 6

| | Example 21B | | | Example 22B | | | Example 23B | | | Example 24B | | | Comparative Example 2A | | |
|---|---|---|---|---|---|---|---|---|---|---|---|---|---|---|---|
| Structure of the stretched base material or barrier base material | | | | | | | | | | | | | | | | |
| Second barrier coating layer | | Yes | Yes | | Yes | Yes | | Yes | Yes | | Yes | Yes | | Yes | Yes |
| Second vapor deposition film | AL | Alumina | Silica | AL | Alumina | Silica | AL | Alumina | Silica | AL | Alumina | Silica | AL | Alumina | Silica |
| Second surface resin layer | EVOH | | | PA6 | | | MXD6 | | | MXD6 50% PA6 50% | | | Polyethylene layer LLDPE 25μm | | |
| | 1μm | | | 1μm | | | 1μm | | | 1μm | | | | | |
| Adhesive resin layer | Acid-modified r-PP | | | ← | | | ← | | | ← | | | | | |
| | 2μm | | | 2μm | | | 2μm | | | 2μm | | | | | |
| Second polyethy-lene layer | HDPE 40% LLDPE 60% | | | ← | | | ← | | | ← | | | | | |
| | 19μm | | | 19μm | | | 19μm | | | 19μm | | | | | |
| First polyethylene layer | HDPE 40% LLDPE 60% | | | ← | | | ← | | | ← | | | | | |
| | 2μm | | | 2μm | | | 2μm | | | 2μm | | | | | |
| First surface resin layer | LLDPE 90% MAH - LLDPE 10% | | | ← | | | ← | | | ← | | | | | |
| | 1μm | | | 1μm | | | 1μm | | | 1μm | | | | | |
| First vapor de-position film | AL | Alumina | Silica | AL | Alumina | Silica | AL | Alumina | Silica | AL | Alumina | Silica | AL | Alumina | Silica |
| First barrier coating layer | | Yes | Yes | | Yes | Yes | | Yes | Yes | | Yes | Yes | | Yes | Yes |

EP 4 725 694 A1

85

| Physical characteristics of the stretched base material or barrier base material | | | | | | | | | | | | | | | | | | | |
|---|---|---|---|---|---|---|---|---|---|---|---|---|---|---|---|---|---|---|---|
| Oxygen transmission rate | D | A | C | B | E | B | B | B | D | A | B | B | E | B | B | B | G | E | C | C |
| Water vapor transmission rate | E | B | D | C | E | B | D | D | D | A | C | C | E | B | C | C | G | D | E | D |
| First vapor deposition film/first surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more | | | | |
| Second vapor deposition film/second surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more | | | | |
| Vapor deposition film/polyethylene layer peel strength (N/15 mm) | | | | | | | | | | | | | | | | | | 2.5 | 3.0 | 3.0 |
| Heat resistance evaluation 1 | A | | | | A | | | | A | | | | A | | | | B | | | |
| Heat resistance evaluation 2 | A | | | | A | | | | A | | | | A | | | | C | | | |

[Table 7]

[Table 7]

EP 4 725 694 A1

Table 7

| | Example 1C | | | | Comparative Example 1 | | | | Example 2C | | | | Comparative Example 2 | | | |
|---|---|---|---|---|---|---|---|---|---|---|---|---|---|---|---|---|
| Structure of the stretched base material or barrier base material | | | | | | | | | | | | | | | | |
| Second barrier coating layer | | | Yes | Yes | | | Yes | Yes | | | Yes | Yes | | | Yes | Yes |
| Second vapor deposition film | | AL | Alumina | Silica | | AL | Alumina | Silica | | AL | Alumina | Silica | | AL | Alumina | Silica |
| Second surface resin layer | r - PP 90% MAH- r -PP 10% | | | | Polypropylene layer h -PP 18μm | | | | LLDPE 90% MAH-LLDPE 10% | | | | Polyethylene layer LLDPE 18μm | | | |
| | 1μm | | | | | | | | 1μm | | | | | | | |
| Third polyolefin layer | h - PP | | | | | | | | LLDPE | | | | | | | |
| | 1.5μm | | | | | | | | 1.5μm | | | | | | | |
| Second polyolefin layer | h -PP | | | | | | | | LLDPE | | | | | | | |
| | 13μm | | | | | | | | 13μm | | | | | | | |
| First polyolefin layer | h - PP | | | | | | | | LLDPE | | | | | | | |
| | 1.5μm | | | | | | | | 1.5μm | | | | | | | |
| First surface resin layer | r -PP 90% MAH- r -PP 10% | | | | | | | | LLDPE 90% MAH-LLDPE 10% | | | | | | | |
| | 1μm | | | | | | | | | | 1μm | | | | | |
| First vapor deposition film | | AL | Alumina | Silica | | AL | Alumina | Silica | | AL | Alumina | Silica | | AL | Alumina | Silica |
| First barrier coating layer | | | Yes | Yes | | | Yes | Yes | | | Yes | Yes | | | Yes | Yes |
| Physical characteristics of the stretched base material or barrier base material | | | | | | | | | | | | | | | | |
| Oxygen transmission rate | E | B | A | A | E | D | B | A | E | B | A | A | E | D | B | B |
| Water vapor transmission rate | B | A | B | B | C | B | B | B | B | A | B | B | D | B | B | B |
| Vapor deposition film/surface resin layer peel strength (N/15 mm) | | 3.0 or more | 3.0 or more | 3.0 or more | | | | | | 4.0 or more | 4.0 or more | 4.0 or more | | | | |
| Vapor deposition film/polyolefin layer peel strength (N/15 mm) | | | | | | 1.5 | 2.0 | 2.5 | | | | | | 2.5 | 3.0 | 3.0 |

[Table 8]

Table 8

| | | | Example 11C | | | | Comparative Example 2A | |
|---|---|---|---|---|---|---|---|---|
| Structure of the stretched base material or barrier base material | | | | | | | | |
| Second barrier coating layer | | | Yes | Yes | | | Yes | Yes |
| Second vapor deposition film | | AL | Alumina | Silica | | AL | Alumina | Silica |
| Second surface resin layer | | LLDPE 90% MAH - LLDPE 10% | | | | | | |
| | | 1μm | | | | | | |
| Third polyethylene layer | | HDPE 40% LLDPE 60% | | | | | | |
| | | 2μm | | | | | | |
| Second polyethylene layer | | HDPE 40% LLDPE 60% | | | Polyethylene layer LLDPE 25μm | | | |
| | | 19μm | | | | | | |
| First polyethylene layer | | HDPE 40% LLDPE 60% | | | | | | |
| | | 2μm | | | | | | |
| First surface resin layer | | LLDPE 90% MAH - LLDPE 10% | | | | | | |
| | | 1μm | | | | | | |
| First vapor deposition film | | AL | Alumina | Silica | | AL | Alumina | Silica |
| First barrier coating layer | | | Yes | Yes | | | Yes | Yes |
| Physical characteristics of the stretched base material or barrier base material | | | | | | | | |
| Oxygen transmission rate | G | D | C | C | G | E | C | C |
| Water vapor transmission rate | D | B | D | D | G | D | E | D |
| Vapor deposition film/surface resin layer peel strength (N/15 mm) | | 4.0 or more | 4.0 or more | 4.0 or more | | | | |
| Vapor deposition film/polyethylene layer peel strength (N/15 mm) | | | | | | 2.5 | 3.0 | 3.0 |
| Heat resistance evaluation 1 | A | | | | B | | | |
| Heat resistance evaluation 2 | A | | | | C | | | |

[Table 9]

Table 9

| | Example 1D | | | Comparative Example 1 | | | Example 2D | | | Comparative Example 2 | | |
|---|---|---|---|---|---|---|---|---|---|---|---|---|
| Structure of the stretched base material or barrier base material | | | | | | | | | | | | |
| Barrier coating layer | | Yes | Yes | | Yes | Yes | | Yes | Yes | | Yes | Yes |
| Vapor deposition film | AL | Alumina | Silica | AL | Alumina | Silica | AL | Alumina | Silica | AL | Alumina | Silica |
| Second surface resin layer | r - PP 90% MAH- r - PP 10% | | | Polypropylene layer h -PP 18μm | | | LLDPE 90% MAH-LLDPE 10% | | | Polyethylene layer LLDPE 18μm | | |
| | 1μm | | | | | | 1μm | | | | | |
| | h -PP | | | | | | LLDPE | | | | | |
| Third polyolefin layer | 1.5μm | | | | | | 1.5μm | | | | | |
| | h -PP | | | | | | LLDPE | | | | | |
| Second polyolefin layer | 13μm | | | | | | 13μm | | | | | |
| | h -PP | | | | | | LLDPE | | | | | |
| First polyolefin layer | 1.5μm | | | | | | 1.5μm | | | | | |
| First surface resin layer | h -PP 80% r - PP 20% | | | | | | LLDPE | | | | | |
| | 1μm | | | | | | 1μm | | | | | |
| Physical characteristics of the stretched base material or barrier base material | | | | | | | | | | | | |
| Oxygen transmission rate | F | C | B | B | F | E | C | C | F | C | B | B | F | E | C | C |
| Water vapor transmission rate | C | B | C | C | D | C | D | C | C | B | C | C | E | C | D | C |
| Vapor deposition film/surface resin layer peel strength (N/15 mm) | 3.0 or more | 3.0 or more | 3.0 or more | | | | 4.0 or more | 4.0 or more | 4.0 or more | | | |
| Vapor deposition film/polyolefin layer peel strength (N/15 mm) | | | | 1.5 | 2.0 | 2.5 | | | | 2.5 | 3.0 | 3.0 |

EP 4 725 694 A1

90

[Table 10]

Table 10

| | Example 3D | | | | Example 4D | | | | Example 5D | | | | Example 6D | | | |
|---|---|---|---|---|---|---|---|---|---|---|---|---|---|---|---|---|
| Structure of the stretched base material or barrier base material | | | | | | | | | | | | | | | | |
| Barrier coating layer | | | Yes | Yes | | | Yes | Yes | | | Yes | Yes | | | Yes | Yes |
| Vapor deposition film | | AL | Alumina | Silica | | AL | Alumina | Silica | | AL | Alumina | Silica | | AL | Alumina | Silica |
| Second surface resin layer | EVOH | | | | PA6 | | | | EVOH | | | | PA6 | | | |
| | 1μm | | | | 1μm | | | | 1μm | | | | 1μm | | | |
| Adhesive resin layer | Acid-modified r-PP | | | | Acid-modified r-PP | | | | Acid-modified LLDPE | | | | Acid-modified LLDPE | | | |
| | 1.5μm | | | | 1.5μm | | | | 1.5μm | | | | 1.5μm | | | |
| Second polyolefin layer | h - PP | | | | h - PP | | | | LLDPE | | | | LLDPE | | | |
| | 13μm | | | | 13μm | | | | 13μm | | | | 13μm | | | |
| First polyolefin layer | h - PP | | | | h - PP | | | | LLDPE | | | | LLDPE | | | |
| | 1.5μm | | | | 1.5μm | | | | 1.5μm | | | | 1.5μm | | | |
| First surface resin layer | h - PP 80% r - PP 20% | | | | h - PP 80% r - PP 20% | | | | LLDPE | | | | LLDPE | | | |
| | 1μm | | | | 1μm | | | | 1μm | | | | 1μm | | | |
| Physical characteristics of the stretched base material or barrier base material | | | | | | | | | | | | | | | | |
| Oxygen transmission rate | D | A | B | B | E | A | B | B | D | A | B | B | E | A | C | C |
| Water vapor transmission rate | C | A | B | B | C | A | C | B | C | A | C | C | C | B | C | C |

(continued)

| Physical characteristics of the stretched base material or barrier base material | | | | | | | | | | | | | | |
|---|---|---|---|---|---|---|---|---|---|---|---|---|---|---|
| Vapor deposition film/surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more |

[Table 11]

Table 11

| | Example 11D | | | Example 12D | | | Comparative Example 1 | | | Example 13D | | | Example 14D | | | Comparative Example 2 | | |
|---|---|---|---|---|---|---|---|---|---|---|---|---|---|---|---|---|---|---|
| Structure of the stretched base material or barrier base material | | | | | | | | | | | | | | | | | | |
| Barrier coating layer | | Yes | Yes | | Yes | Yes | | Yes | Yes | | Yes | Yes | | Yes | Yes | | Yes | Yes |
| Vapor deposition film | AL | Alumina | Silica | AL | Alumina | Silica | AL | Alumina | Silica | AL | Alumina | Silica | AL | Alumina | Silica | AL | Alumina | Silica |
| Second surface resin layer | MXD6 | | | MXD6 50% PA6 50% | | | Polypropylene layer h -PP 18µm | | | MXD6 | | | MXD6 50% PA6 50% | | | Polyethylene layer LLDPE 18µm | | |
| | 1µm | | | 1µm | | | | | | 1µm | | | 1µm | | | | | |
| Adhesive resin layer | Acid-modified r-PP 1.5µm | | | Acid-modified r-PP | | | | | | Acid-modified LLDPE | | | Acid-modified LLDPE 1.5µm | | | | | |
| | | | | 1.5µm | | | | | | 1.5µm | | | | | | | | |
| Second polyolefin layer | h - PP | | | h - PP | | | | | | LLDPE | | | LLDPE | | | | | |
| | 13µm | | | 13µm | | | | | | 13µm | | | 13µm | | | | | |
| First polyolefin layer | h -PP | | | h - PP | | | | | | LLDPE | | | LLDPE | | | | | |
| | 1.5µm | | | 1.5µm | | | | | | 1.5µm | | | 1.5µm | | | | | |
| First surface resin layer | h - PP 80% r - PP 20% | | | h - PP 80% r - PP 20% | | | | | | LLDPE | | | LLDPE | | | | | |
| | 1µm | | | 1µm | | | | | | 1µm | | | 1µm | | | | | |
| Physical characteristics of the stretched base material or barrier base material | | | | | | | | | | | | | | | | | | |
| Oxygen transmission rate | D | A | C | C | E | B | B | B | G | E | C | C | D | A | C | C | E | B | B | B | G | E | C | C |
| Water vapor transmission rate | D | A | D | C | E | B | D | C | F | C | E | D | D | A | D | C | E | B | D | C | G | D | E | D |

EP 4 725 694 A1

95

| | | | | | | | | | | | | | | | | | |
|---|---|---|---|---|---|---|---|---|---|---|---|---|---|---|---|---|---|
| Physical characteristics of the stretched base material or barrier base material | | | | | | | | | | | | | | | | | |
| Vapor deposition film/surface resin layer peel strength (N/15 mm) | 4.0 or more | 4.0 or more | 4.0 or more | | 4.0 or more | 4.0 or more | 4.0 or more | | | | | 4.0 or more | 4.0 or more | 4.0 or more | | | |
| Vapor deposition film/polyolefin layer peel strength (N/15 mm) | | | | | | | | | 1.5 | 2.0 | 2.5 | | | | | | |

[Table 12]

Table 12

| | Example 21D | | | | Example 22D | | | | Comparative Example 2A | | | |
|---|---|---|---|---|---|---|---|---|---|---|---|---|
| Structure of the stretched base material or barrier base material | | | | | | | | | | | | |
| Barrier coating layer | | | Yes | Yes | | | Yes | Yes | | | Yes | Yes |
| Vapor deposition film | | AL | Alumina | Silica | | AL | Alumina | Silica | | AL | Alumina | Silica |
| Second surface resin layer | LLDPE 90% MAH-LLDPE 10% | | | | HDPE 18% LLDPE 72% MAH-LLDPE 10% | | | | Polyethylene layer LLDPE 25μm | | | |
| | 1μm | | | | 1μm | | | | | | | |
| Third polyethylene layer | HDPE 40% LLDPE 60% | | | | HDPE 60% LLDPE 40% | | | | | | | |
| | 2μm | | | | 2μm | | | | | | | |
| Second polyethylene layer | HDPE 40% LLDPE 60% | | | | HDPE 60% LLDPE 40% | | | | | | | |
| | 19μm | | | | 19μm | | | | | | | |
| First polyethylene layer | HDPE 40% LLDPE 60% | | | | HDPE 60% LLDPE 40% | | | | | | | |
| | 2μm | | | | 2μm | | | | | | | |
| First surface resin layer | HDPE 20% LLDPE 80% AB agent | | | | HDPE 40% LLDPE 60% AB agent | | | | | | | |
| | 1μm | | | | 1μm | | | | | | | |
| Physical characteristics of the stretched base material or barrier base material | | | | | | | | | | | | |
| Oxygen transmission rate | G | D | C | C | G | D | C | C | G | F | D | D |
| Water vapor transmission rate | D | C | E | D | D | C | E | D | G | E | F | E |
| Vapor deposition film/surface resin layer peel strength (N/15 mm) | | 4.0 or more | 4.0 or more | 4.0 or more | | 4.0 or more | 4.0 or more | 4.0 or more | | | | |

(continued)

| Physical characteristics of the stretched base material or barrier base material | | | | | 98 | | | | | | | |
|---|---|---|---|---|---|---|---|---|---|---|---|---|
| Vapor deposition film/polyethylene layer peel strength (N/15 mm) | | | | | | | | | | 2.5 | 3.0 | 3.0 |
| Heat resistance evaluation 1 | A | | | | A | | | | B | | | |
| Heat resistance evaluation 2 | A | | | | A | | | | C | | | |

[Table 13]

Table 13

| | Example 31D | | | Example 32D | | | Example 33D | | | Example 34D | | | Comparative Example 2A | | |
|---|---|---|---|---|---|---|---|---|---|---|---|---|---|---|---|
| Structure of the stretched base material or barrier base material | | | | | | | | | | | | | | | |
| Barrier coating layer | | Yes | Yes | | Yes | Yes | | Yes | Yes | | Yes | Yes | | Yes | Yes |
| Vapor deposition film | AL | Alumina | Silica | AL | Alumina | Silica | AL | Alumina | Silica | AL | Alumina | Silica | AL | Alumina | Silica |
| Second surface resin layer | EVOH | | | PA6 | | | MXD6 | | | MXD6 50% PA6 50% | | | Polyethylene layer<br><br>LLDPE<br><br>25μm | | |
| | 1μm | | | 1μm | | | 1μm | | | 1μm | | | | | |
| Adhesive resin layer | Acid-modified r-PP | | | ← | | | ← | | | ← | | | | | |
| | 2μm | | | 2μm | | | 2μm | | | 2μm | | | | | |
| Second polyethy-lene layer | HDPE 40% LLDPE 60% | | | ← | | | ← | | | ← | | | | | |
| | 19μm | | | 19μm | | | 19μm | | | 19μm | | | | | |
| First polyethylene layer | HDPE 40% LLDPE 60% | | | ← | | | ← | | | ← | | | | | |
| | 2μm | | | 2μm | | | 2μm | | | 2μm | | | | | |
| First surface resin layer | HDPE 40% LLDPE 60% AB agent | | | ← | | | ← | | | ← | | | | | |
| | 1μm | | | 1μm | | | 1μm | | | 1μm | | | | | |

(continued)

| Physical characteristics of the stretched base material or barrier base material | Oxygen transmission rate | Water vapor transmission rate | Vapor deposition film/surface resin layer peel strength (N/15 mm) | Vapor deposition film/polyethylene layer peel strength (N/15 mm) | Heat resistance evaluation 1 | Heat resistance evaluation 2 |
|---|---|---|---|---|---|---|
| D | E | | | 3.0 | | |
| D | F | | | 3.0 | B | C |
| F | E | | 2.5 | | | |
| G | G | | | | | |
| B | C | | 4.0 or more | | | |
| B | D | | 4.0 or more | | A | A |
| E | E | | 4.0 or more | | | |
| C | C | | 4.0 or more | | | |
| C | D | | 4.0 or more | | A | A |
| A | A | | 4.0 or more | | | |
| D | D | | | | | |
| C | D | | 4.0 or more | | A | A |
| C | D | | 4.0 or more | | | |
| B | B | | 4.0 or more | | | |
| E | E | | | | | |
| B | D | | 4.0 or more | | A | A |
| C | D | | 4.0 or more | | | |
| A | B | | 4.0 or more | | A | A |
| D | E | | | | | |

[Variations of Examples]

Stretched base materials and barrier base materials were produced in the same manner as in Examples 1A and 3A, except that approximately 23% by mass of the compatibilizer (RETAIN 3000) was blended in the polyolefin intermediate layer. The results of the gas barrier properties test and the T-peel test in these examples were similar to those in the examples with the corresponding layer configurations (Examples 1A and 3A).

Stretched base materials and barrier base materials were produced in the same manner as in Examples 2A and 4A, except that approximately 11.5% by mass of the compatibilizer (RETAIN 3000) was blended in the polyolefin intermediate layer. The results of the gas barrier properties test and the T-peel test in these examples were similar to those in the examples with the corresponding layer configurations (Examples 2A and 4A).

Stretched base materials and barrier base materials were produced in the same manner as in Examples 11A to 14A, except that approximately 11.5% by mass of the compatibilizer (RETAIN 3000) was blended in the polyolefin intermediate layer. The results of the gas barrier properties test and the T-peel test in these examples were similar to the results in the examples with the corresponding layer configurations (Examples 11A to 14A).

A stretched base material and barrier base materials were produced in the same manner as in Example 21A, except that approximately 23% by mass of the compatibilizer (RETAIN 3000) was blended in the polyethylene intermediate layer. The results of the evaluations in this example were similar to the results in Example 21A.

Stretched base materials and barrier base materials were produced in the same manner as in Examples 22A to 24A, except that approximately 11.5% by mass of the compatibilizer (RETAIN 3000) was blended in the polyethylene intermediate layer. The results of the evaluations in these examples were similar to the results in the examples with the corresponding layer configurations (Examples 22A to 24A).

Stretched base materials and barrier base materials were produced in the same manner as in Examples 1B and 3B, except that approximately 12% by mass of the compatibilizer (RETAIN 3000) was blended in the second polyolefin layer. The results of the gas barrier properties test and the T-peel test in these examples were similar to those in the examples with the corresponding layer configurations (Examples 1B and 3B).

Stretched base materials and barrier base materials were produced in the same manner as in Examples 2B and 4B, except that approximately 4% by mass of the compatibilizer (RETAIN 3000) was blended in the second polyolefin layer. The results of the gas barrier properties test and the T-peel test in these examples were similar to those in the examples with the corresponding layer configurations (Examples 2B and 4B).

Stretched base materials and barrier base materials were produced in the same manner as in Examples 11B to 14B, except that approximately 4% by mass of the compatibilizer (RETAIN 3000) was blended in the second polyolefin layer. The results of the gas barrier properties test and the T-peel test in these examples were similar to the results in the examples with the corresponding layer configurations (Examples 11B to 14B).

A stretched base material and barrier base materials were produced in the same manner as in Example 21B, except that approximately 12% by mass of the compatibilizer (RETAIN 3000) was blended in the second polyethylene layer. The results of the evaluations in this example were similar to the results in Example 21B.

Stretched base materials and barrier base materials were produced in the same manner as in Examples 22B to 24B, except that approximately 4% by mass of the compatibilizer (RETAIN 3000) was blended in the second polyethylene layer. The results of the evaluations in these examples were similar to the results in the examples with the corresponding layer configurations (Examples 22B to 24B).

Stretched base materials and barrier base materials were produced in the same manner as in Examples 3D and 5D, except that approximately 12% by mass of the compatibilizer (RETAIN 3000) was blended in the second polyolefin layer. The results of the gas barrier properties test and the T-peel test in these examples were similar to those in the examples with the corresponding layer configurations (Examples 3D and 5D).

Stretched base materials and barrier base materials were produced in the same manner as in Examples 4D and 6D, except that approximately 4% by mass of the compatibilizer (RETAIN 3000) was blended in the second polyolefin layer. The results of the gas barrier properties test and the T-peel test in these examples were similar to those in the examples with the corresponding layer configurations (Examples 4D and 6D).

Stretched base materials and barrier base materials were produced in the same manner as in Examples 11D to 14D, except that approximately 4% by mass of the compatibilizer (RETAIN 3000) was blended in the second polyolefin layer. The results of the gas barrier properties test and the T-peel test in these examples were similar to the results in the examples with the corresponding layer configurations (Examples 11D to 14D).

A stretched base material and barrier base materials were produced in the same manner as in Example 31D, except that approximately 12% by mass of the compatibilizer (RETAIN 3000) was blended in the second polyethylene layer. The results of the evaluations in this example were similar to the results in Example 31D.

Stretched base materials and barrier base materials were produced in the same manner as in Examples 32D to 34D, except that approximately 4% by mass of the compatibilizer (RETAIN 3000) was blended in the second polyethylene layer. The results of the evaluations in these examples were similar to the results in the examples with the corresponding layer configurations (Examples 32D to 34D).

Stretched base materials and barrier base materials were produced in the same manner as in Examples 21B to 24B and Example 11C, except that blended polyethylene (B2) was used instead of blended polyethylene (B1). The results of the evaluations in these examples were similar to the results in the examples with the corresponding layer configurations (Examples 21B to 24B and Example 11C).

[EXAMPLES 1AA to 4AA]

Stretched base materials and barrier base materials of Examples 1AA to 4AA were produced in the same manner as in Examples 1A to 4A, except that the thickness of the first adhesive resin layer was changed to 2 $\mu$m, the thickness of the polyolefin intermediate layer was changed to 19 $\mu$m, and the thickness of the second adhesive resin layer was changed to 2 $\mu$m, whereby the thickness of the stretched base material was changed to 25 $\mu$m. The results of the evaluations in Examples 1AA to 4AA were similar to the results in the examples with the corresponding example numbers (Examples 1A to 4A).

[EXAMPLES 11AA to 14AA]

Stretched base materials and barrier base materials of Examples 11AA to 14AA were produced in the same manner as in Examples 11A to 14A, except that the thickness of the first adhesive resin layer was changed to 2 $\mu$m, the thickness of the polyolefin intermediate layer was changed to 19 $\mu$m, and the thickness of the second adhesive resin layer was changed to 2 $\mu$m, whereby the thickness of the stretched base material was changed to 25 $\mu$m. The results of the evaluations in Examples 11AA to 14AA were similar to the results in the examples with the corresponding example numbers (Examples 11A to 14A).

[EXAMPLES 21AA to 24AA]

Stretched base materials and barrier base materials of Examples 21AA to 24AA were produced in the same manner as in Examples 21A to 24A, except that the thickness of the first adhesive resin layer was changed to 1.5 $\mu$m, the thickness of the polyethylene intermediate layer was changed to 13 $\mu$m, and the thickness of the second adhesive resin layer was changed to 1.5 $\mu$m, whereby the thickness of the stretched base material was changed to 18 $\mu$m. In Examples 21AA to 24AA, biaxial orientation was successfully performed. The results of the evaluations in Examples 21AA to 24AA were similar to the results in the examples with the corresponding example numbers (Examples 21A to 24A).

[EXAMPLES 1BB to 4BB]

Stretched base materials and barrier base materials of Examples 1BB to 4BB were produced in the same manner as in Examples 1B to 4B, except that the thickness of the first polyolefin layer was changed to 2 $\mu$m, the thickness of the second polyolefin layer was changed to 19 $\mu$m, and the thickness of the adhesive resin layer was changed to 2 $\mu$m, whereby the thickness of the stretched base material was changed to 25 $\mu$m. The results of the evaluations in Examples 1BB to 4BB were similar to the results in the examples with the corresponding example numbers (Examples 1B to 4B).

[EXAMPLES 11BB to 14BB]

Stretched base materials and barrier base materials of Examples 11BB to 14BB were produced in the same manner as in Examples 11B to 14B, except that the thickness of the first polyolefin layer was changed to 2 $\mu$m, the thickness of the second polyolefin layer was changed to 19 $\mu$m, and the thickness of the adhesive resin layer was changed to 2 $\mu$m, whereby the thickness of the stretched base material was changed to 25 $\mu$m. The results of the evaluations in Examples 11BB to 14BB were similar to the results in the examples with the corresponding example numbers (Examples 11B to 14B).

[EXAMPLES 21BB to 24BB]

Stretched base materials and barrier base materials of Examples 21BB to 24BB were produced in the same manner as in Examples 21B to 24B, except that the thickness of the first polyethylene layer was changed to 1.5 $\mu$m, the thickness of the second polyethylene layer was changed to 13 $\mu$m, and the thickness of the adhesive resin layer was changed to 1.5 $\mu$m, whereby the thickness of the stretched base material was changed to 18 $\mu$m. In Examples 21BB to 24BB, biaxial orientation was successfully performed. The results of the evaluations in Examples 21BB to 24BB were similar to the results in the examples with the corresponding example numbers (Examples 21B to 24B).

[EXAMPLES 1CC and 2CC]

Stretched base materials and barrier base materials of Examples 1CC and 2CC were produced in the same manner as in Examples 1C and 2C, except that the thickness of the first polyolefin layer was changed to 2 $\mu$m, the thickness of the second polyolefin layer was changed to 19 $\mu$m, and the thickness of the third polyolefin layer was changed to 2 $\mu$m, whereby the thickness of the stretched base material was changed to 25 $\mu$m. The results of the evaluations in Examples 1CC and 2CC were similar to the results in the examples with the corresponding example numbers (Examples 1C and 2C).

[EXAMPLE 11CC]

A stretched base material and barrier base materials of Example 11CC were produced in the same manner as in Example 11C, except that the thickness of the first polyethylene layer was changed to 1.5 $\mu$m, the thickness of the second polyethylene layer was changed to 13 $\mu$m, and the thickness of the third polyethylene layer was changed to 1.5 $\mu$m, whereby the thickness of the stretched base material was changed to 18 $\mu$m. In Example 11CC, biaxial orientation was successfully performed. The results of the evaluations in Example 11CC were similar to the results in Example 11C.

[EXAMPLES 1DD and 2DD]

Stretched base materials and barrier base materials of Examples 100 and 2DD were produced in the same manner as in Examples 1D and 2D, except that the thickness of the first polyolefin layer was changed to 2 $\mu$m, the thickness of the second polyolefin layer was changed to 19 $\mu$m, and the thickness of the third polyolefin layer was changed to 2 $\mu$m, whereby the thickness of the stretched base material was changed to 25 $\mu$m. The results of the evaluations in Examples 1DD and 2DD were similar to the results in the examples with the corresponding example numbers (Examples 1D and 2D).

[EXAMPLES 3DD to 6DD]

Stretched base materials and barrier base materials of Examples 3DD to 6DD were produced in the same manner as in Examples 3D to 6D, except that the thickness of the first polyolefin layer was changed to 2 $\mu$m, the thickness of the second polyolefin layer was changed to 19 $\mu$m, and the thickness of the adhesive resin layer was changed to 2 $\mu$m, whereby the thickness of the stretched base material was changed to 25 $\mu$m. The results of the evaluations in Examples 3DD to 6DD were similar to the results in the examples with the corresponding example numbers (Examples 3D to 6D).

[EXAMPLES 11DD to 14DD]

Stretched base materials and barrier base materials of Examples 11DD to 14DD were produced in the same manner as in Examples 11D to 14D, except that the thickness of the first polyolefin layer was changed to 2 $\mu$m, the thickness of the second polyolefin layer was changed to 19 $\mu$m, and the thickness of the adhesive resin layer was changed to 2 $\mu$m, whereby the thickness of the stretched base material was changed to 25 $\mu$m. The results of the evaluations in Examples 11DD to 14DD were similar to the results in the examples with the corresponding example numbers (Examples 11D to 14D).

[EXAMPLES 21DD and 22DD]

Stretched base materials and barrier base materials of Examples 21DD and 22DD were produced in the same manner as in Examples 21D and 22D, except that the thickness of the first polyethylene layer was changed to 1.5 $\mu$m, the thickness of the second polyethylene layer was changed to 13 $\mu$m, and the thickness of the third polyethylene layer was changed to 1.5 $\mu$m, whereby the thickness of the stretched base material was changed to 18 $\mu$m. In Examples 21DD and 22DD, biaxial orientation was successfully performed. The results of the evaluations in Examples 21DD and 22DD were similar to the results in the examples with the corresponding example numbers (Examples 21D and 22D).

[EXAMPLES 31DD to 34DD]

Stretched base materials and barrier base materials of Examples 31DD to 34DD were produced in the same manner as in Examples 31D to 34D, except that the thickness of the first polyethylene layer was changed to 1.5 $\mu$m, the thickness of the second polyethylene layer was changed to 13 $\mu$m, and the thickness of the adhesive resin layer was changed to 1.5 $\mu$m, whereby the thickness of the stretched base material was changed to 18 $\mu$m. In Examples 31DD to 34DD, biaxial orientation was successfully performed. The results of the evaluations in Examples 31DD to 34DD were similar to the results in the examples with the corresponding example numbers (Examples 31D to 34D).

[COMPARATIVE EXAMPLES 1A and 2A]

Stretched base materials and barrier base materials of Comparative Examples 1A and 2A were produced in the same manner as in Comparative Examples 1 and 2, except that the thickness of the stretched base material was changed to 25 $\mu$m. The results of the evaluations in Comparative Examples 1A and 2A were similar to the results in the comparative examples with the corresponding comparative example numbers (Comparative Examples 1 and 2).

[[Fifth and Sixth Aspects]]

The stretched base materials (biaxially oriented polyethylene films) according to the fifth and sixth aspects of the present disclosure will now be more specifically described using examples. The biaxially oriented polyethylene film according to the present disclosure, however, is not limited to the following examples. In the descriptions below, "parts by mass" will be referred to simply as "parts."

[Materials for Biaxially Oriented Polyethylene Films]

In the production of biaxially oriented polyethylene films, the following materials were used.

- High-density polyethylene (HDPE)
  Metallocene HDPE, an ethylene-1-octene copolymer; density, 0.955 g/cm$^3$; melting point, 130°C; MFR, 1.5 g/10 minutes

- Linear low-density polyethylene (LLDPE)

  INNATE TF80, manufactured by The Dow Chemical Company,

  metallocene LLDPE, an ethylene-1-octane copolymer;

  density, 0.926 g/cm$^3$; MFR, 1.7 g/10 minutes

- Anti-blocking agent (AB agent)
  Silica particles; average particle diameter, 3.5 $\mu$m

[EXAMPLE 1E]

Blended polyethylene (Ae) was prepared by mixing 20 parts of HDPE, 80 parts of LLDPE, and 0.2 parts of (2,000 ppm) of the AB agent. Blended polyethylene (Be) was prepared by mixing 20 parts of HDPE and 80 parts of LLDPE.

Blended polyethylene (Ae),

blended polyethylene (Be),

blended polyethylene (Be),

blended polyethylene (Be), and

blended polyethylene (Ae)

were coextruded to form five layers of films by T-die casting, yielding a five-layered film. This film was subjected to a sequential biaxial orientation treatment consisting of stretching 5 times in the machine direction (MD direction) and subsequent stretching 8.5 times in the transverse direction (TD direction), through which a 25-$\mu$m thick biaxially oriented polyethylene film was prepared. In Example 1E, biaxial orientation was successfully performed.

A biaxially oriented polyethylene film obtained in such a manner includes a 1-$\mu$m thick second surface resin layer (a blended polyethylene (Ae) layer), a 2-$\mu$m thick third polyethylene layer (a blended polyethylene (Be) layer), a 19-$\mu$m thick second polyethylene layer (a blended polyethylene (Be) layer), a 2-$\mu$m thick first polyethylene layer (a blended polyethylene (Be) layer), and a 1-$\mu$m thick first surface resin layer (a blended polyethylene (Ae) layer) in this order.

[EXAMPLES 2E to 4E]

A 25-µm thick biaxially oriented polyethylene film was produced in the same manner as in Example 1E, except that the blend proportions of polyethylene in each layer were changed as specified in Table 14. In Examples 2E to 4E, biaxial orientation was successfully performed. In Table 14, the amount of the AB agent in the surface resin layers is 2,000 ppm in all examples.

[EXAMPLE 5E]

A mixture of 40 parts of HDPE and 60 parts of LLDPE was extruded to form a single layer of film by T-die casting, yielding a monolayer film. This film was subjected to a sequential biaxial orientation treatment consisting of stretching 5 times in the machine direction (MD direction) and subsequent stretching 8.5 times in the transverse direction (TD direction), through which a 25-µm thick biaxially oriented polyethylene film was prepared. In Example 5E, biaxial orientation was successfully performed.

[COMPARATIVE EXAMPLE 1E]

LLDPE was extruded to form a single layer of film by T-die casting, yielding a monolayer film. This film was subjected to a sequential biaxial orientation treatment consisting of stretching 5 times in the machine direction (MD direction) and subsequent stretching 8.5 times in the transverse direction (TD direction), through which a 25-µm thick biaxially oriented polyethylene film was prepared.

[Heat Resistance Evaluation 1: Printing Resistance Evaluation]

The surface of the biaxially oriented polyethylene films produced as described above was subjected to corona discharge treatment. On the corona-treated surface of the films, an image was formed by gravure printing using an oil-based gravure ink (manufactured by DIC Graphics Corporation; trade name, FINART). Heat resistance was evaluated according to the following criteria.

A: No significant shrinkage of the film occurred during drying of the printed image.

B: Significant shrinkage of the film occurred during drying of the printed image.

[Heat Resistance Evaluation 2: 170°C Heat-Sealing Resistance Evaluation]

The surface of the biaxially oriented polyethylene films produced as described above was subjected to corona discharge treatment. On the corona-treated surface of the films, an image was formed by gravure printing using an oil-based gravure ink (manufactured by DIC Graphics Corporation; trade name, FINART), yielding printing films. Each printing film was joined with a 40-µm thick LLDPE film, which was a monolayer film formed from Evolue SP2020 (manufactured by Mitsui Chemicals, Inc.), using a urethane-based dry lamination adhesive.

With portions of the surface of the LLDPE film in the joined laminate film opposed, heat sealing (1 second at a pressure of 1 kgf/cm$^2$) was performed using an aluminum bar sealer, with one of its bars set to 170°C, in such a manner that the laminate film was sandwiched between the bars, and the condition of thermal shrinkage of the laminate film in the heat-sealed area was checked. Heat resistance was evaluated according to the criteria below.

A: No shrinkage of the film occurred during heat sealing at 170°C.
B: Little shrinkage of the film occurred during heat sealing at 170°C.
C: Significant shrinkage of the film occurred during heat sealing at 170°C.

[Table 14]

Table 14

| | Example 1E | Example 2E | Example 3E | Example 4E | Example 5E | Comparative Example 1E |
|---|---|---|---|---|---|---|
| Structure of the biaxially oriented polyethylene film | | | | | | |
| Second surface resin layer | HDPE 20% LLDPE 80% AB agent | HDPE 20% LLDPE 80% AB agent | HDPE 40% LLDPE 60% AB agent | HDPE 60% LLDPE 40% AB agent | | |
| | 1μm | 1μm | 1μm | 1μm | | |
| Third polyethylene layer | HDPE 20% LLDPE 80% | HDPE 40% LLDPE 60% | HDPE 60% LLDPE 40% | HDPE 40% LLDPE 60% | Polyethylene layer | Polyethylene layer |
| | 2μm | 2μm | 2μm | 2μm | | |
| Second polyethylene layer | HDPE 20% LLDPE 80% | HDPE 40% LLDPE 60% | HDPE 60% LLDPE 40% | HDPE 40% LLDPE 60% | HDPE 40% LLDPE 60% | LLDPE |
| | 19μm | 19μm | 19μm | 19μm | | |
| First polyethylene layer | HDPE 20% LLDPE 80% | HDPE 40% LLDPE 60% | HDPE 60% LLDPE 40% | HDPE 40% LLDPE 60% | | |
| | 2μm | 2μm | 2μm | 2μm | 25μm | 25μm |
| First surface resin layer | HDPE 20% LLDPE 80% AB agent | HDPE 20% LLDPE 80% AB agent | HDPE 40% LLDPE 60% AB agent | HDPE 60% LLDPE 40% AB agent | | |
| | 1μm | 1μm | 1μm | 1μm | | |
| Physical characteristics of the biaxially oriented polyethylene film | | | | | | |
| Heat resistance evaluation 1 | A | A | A | A | A | B |
| Heat resistance evaluation 2 | B | A | A | A | A | C |

[EXAMPLES 1EE to 4EE]

Biaxially oriented polyethylene films of Examples 1EE to 4EE were produced in the same manner as in Examples 1E to 4E, except that the thickness of the first polyethylene layer was changed to 1.5 μm, the thickness of the second polyethylene layer was changed to 13 μm, and the thickness of the third polyethylene layer was changed to 1.5 μm, whereby the thickness of the biaxially oriented polyethylene film was changed to 18 μm. In Examples 1EE to 4EE, biaxial orientation was successfully performed. The results of the evaluations in Examples 1EE to 4EE were similar to the results in the examples with the corresponding example numbers (Examples 1E to 4E).

[EXAMPLE 5EE and COMPARATIVE EXAMPLE 1EE]

A biaxially oriented polyethylene film of Example 5EE was produced in the same manner as in Example 5E, except that the thickness of the biaxially oriented polyethylene film was changed to 18 μm. The results of the evaluations in Example 5EE was similar to the results in Example 5E.

A biaxially oriented polyethylene film of Comparative Example 1EE was produced in the same manner as in Comparative Example 1E, except that the thickness of the biaxially oriented polyethylene film was changed to 18 μm. The results of the evaluations in Comparative Example 1EE was similar to the results in Comparative Example 1E.

Reference Signs List

1 barrier base material
1A biaxially oriented polyethylene film
2 laminate
10 polyolefin intermediate layer
11 first polyolefin layer
12 second polyolefin layer
13 third polyolefin layer
20 first surface resin layer
22 second surface resin layer
30 adhesive resin layer, first adhesive resin layer
32 second adhesive resin layer
40 vapor deposition film, first vapor deposition film
42 second vapor deposition film
60 bonding layer, first bonding layer
62 second bonding layer
70 polyolefin stretched base material
80 heat-sealing layer, first heat-sealing layer
82 second heat-sealing layer
120 tube container
121 tube container body
122 head
123 trunk
124 shoulder
125 outlet
126 cap
127 thread
128 fused portion
129 bottom seal portion

As those skilled in the art would understand, the stretched base material and other subject matters according to the present disclosure are not limited by the descriptions in the above examples. The above examples and description are merely for illustrating the principles of the present disclosure; various modifications or improvements can be made without departing from the gist and scope of the present disclosure, and such modifications or improvements are all included within the scope of the present disclosure claimed for protection. The scope that the present disclosure claims for protection, furthermore, includes not only the descriptions in the claims but also equivalents thereof.

**Claims**

1. A stretched base material comprising at least:

    a first surface resin layer containing at least one gas barrier resin as a main component thereof;
    at least one polyolefin intermediate layer containing a polyolefin as a main component thereof; and
    a second surface resin layer containing at least one gas barrier resin as a main component thereof

in this order.

**2.** The stretched base material according to claim 1, wherein:

the stretched base material includes, as the polyolefin intermediate layer, one or two or more polyethylene intermediate layers each containing at least one type of polyethylene as a main component thereof; and the polyethylene in at least one of the polyethylene intermediate layers includes at least one type of polyethylene selected from high-density polyethylene and medium-density polyethylene or has a density of more than 0.930 $g/cm^3$ and 0.960 $g/cm^3$ or less.

**3.** A stretched base material comprising at least:

a first surface resin layer containing at least one polyolefin and at least one adhesive resin; at least one polyolefin intermediate layer containing at least one polyolefin as a main component thereof; and a second surface resin layer containing at least one gas barrier resin as a main component thereof

in this order.

**4.** The stretched base material according to claim 3, wherein a percentage of the polyolefin in the first surface resin layer is 60% by mass or more and 95% by mass or less, and a percentage of the adhesive resin in the first surface resin layer is 5% by mass or more and 40% by mass or less.

**5.** The stretched base material according to claim 3 or 4, wherein:

the first surface resin layer contains at least one type of polyethylene and at least one adhesive resin; the stretched base material includes, as the polyolefin intermediate layer, one or two or more polyethylene intermediate layers each containing at least one type of polyethylene as a main component thereof; and the polyethylene in at least one layer selected from the first surface resin layer and the polyethylene intermediate layers includes at least one type of polyethylene selected from high-density polyethylene and medium-density polyethylene or has a density of more than 0.930 $g/cm^3$ and 0.960 $g/cm^3$ or less.

**6.** A stretched base material comprising at least:

a first surface resin layer containing at least one polyolefin and at least one adhesive resin; at least one polyolefin intermediate layer containing at least one polyolefin as a main component thereof; and a second surface resin layer containing at least one polyolefin and at least one adhesive resin in this order.

**7.** The stretched base material according to claim 6, wherein, in the first surface resin layer and the second surface resin layer, a percentage of the polyolefin is 60% by mass or more and 95% by mass or less, and a percentage of the adhesive resin is 5% by mass or more and 40% by mass or less, independently for each layer.

**8.** The stretched base material according to claim 6 or 7, wherein:

the first surface resin layer contains at least one type of polyethylene and at least one adhesive resin; the second surface resin layer contains at least one type of polyethylene and at least one adhesive resin; the stretched base material includes, as the polyolefin intermediate layer, one or two or more polyethylene intermediate layers each containing at least one type of polyethylene as a main component thereof; and the polyethylene in at least one layer selected from the first surface resin layer, the polyethylene intermediate layers, and the second surface resin layer includes at least one type of polyethylene selected from high-density polyethylene and medium-density polyethylene or has a density of more than 0.930 $g/cm^3$ and 0.960 $g/cm^3$ or less.

**9.** A stretched base material comprising at least:

a first surface resin layer containing at least one polyolefin as a main component thereof; at least one polyolefin intermediate layer containing at least one polyolefin as a main component thereof; and a second surface resin layer containing at least one gas barrier resin as a main component thereof or containing at least one polyolefin and at least one adhesive resin in this order.

**10.** The stretched base material according to claim 9, wherein, in the second surface resin layer, a percentage of the polyolefin is 60% by mass or more and 95% by mass or less, and a percentage of the adhesive resin is 5% by mass or more and 40% by mass or less.

**11.** The stretched base material according to claim 9 or 10, wherein:

the second surface resin layer contains at least one type of polyethylene and at least one adhesive resin; the stretched base material includes, as the polyolefin intermediate layer, one or two or more polyethylene intermediate layers each containing at least one type of polyethylene as a main component thereof; and the polyethylene in at least one layer selected from the first surface resin layer, the polyethylene intermediate layers, and the second surface resin layer includes at least one type of polyethylene selected from high-density polyethylene and medium-density polyethylene or has a density of more than 0.930 g/cm$^3$ and 0.960 g/cm$^3$ or less.

**12.** The stretched base material according to any one of claims 1 to 5 and 9, wherein the gas barrier resins each independently include, or the gas barrier resin includes, at least one selected from an ethylene-vinyl alcohol copolymer and a polyamide.

**13.** The stretched base material according to claim 12, wherein the gas barrier resins include, or the gas barrier resin includes, an aromatic polyamide.

**14.** The stretched base material according to any one of claims 3 to 11, wherein:

the polyolefin includes polypropylene, and the adhesive resin includes acid-modified polypropylene; or the polyolefin includes polyethylene, and the adhesive resin includes acid-modified polyethylene.

**15.** The stretched base material according to any one of claims 1 to 14, wherein a percentage of the polyolefins in the stretched base material is 60% by mass or more.

**16.** An stretched base material that is:

a biaxially oriented polyethylene film including at least one polyethylene layer containing at least one type of polyethylene selected from high-density polyethylene and medium-density polyethylene; or a biaxially oriented polyethylene film including at least one polyethylene layer containing polyethylene as a main component thereof, wherein the polyethylene contained in the polyethylene layer has a density of more than 0.930 g/cm$^3$ and 0.960 g/cm$^3$ or less

**17.** The stretched base material according to claim 16, wherein the polyethylene layer contains at least one type of polyethylene selected from high-density polyethylene and medium-density polyethylene and also contains linear low-density polyethylene.

**18.** The stretched base material according to claim 17, wherein a sum of percentages of the high-density polyethylene and the medium-density polyethylene in the polyethylene layer is 20% by mass or more and 60% by mass or less, and a percentage of linear low-density polyethylene in the polyethylene layer is 40% by mass or more and 80% by mass or less.

**19.** The stretched base material according to any one of claims 16 to 18, wherein:

the biaxially oriented polyethylene film includes

a first surface resin layer,
a polyethylene intermediate layer, and
a second surface resin layer; and

each of the first surface resin layer, the polyethylene intermediate layer, and the second surface resin layer is independently one of the polyethylene layers.

**20.** The stretched base material according to any one of claims 1 to 19, wherein the stretched base material is a stretched coextruded resin film.

21. The stretched base material according to any one of claims 1 to 20, wherein the stretched base material is a biaxially oriented base material.

22. A printing base material comprising at least:

the stretched base material according to any one of claims 1 to 21; and
at least one printed layer provided on at least one surface of the stretched base material.

23. A barrier base material comprising:

at least the stretched base material according to any one of claims 1 to 8 and at least one vapor deposition film provided on a surface of at least one selected from the first surface resin layer and the second surface resin layer in the stretched base material;
at least the stretched base material according to any one of claims 9 to 11 and a vapor deposition film provided on a surface of the second surface resin layer in the stretched base material; or
at least the stretched base material according to any one of claims 16 to 19 and at least one vapor deposition film provided on at least one surface of the stretched base material.

24. A barrier base material comprising at least:

a first vapor deposition film;
the stretched base material according to any one of claims 1 to 15 and 19; and
a second vapor deposition film

in this order, wherein:
the first vapor deposition film is provided on a surface of the first surface resin layer, and the second vapor deposition film is provided on a surface of the second surface resin layer.

25. The barrier base material according to claim 24, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.

26. A laminate comprising at least:

the stretched base material according to any one of claims 1 to 21, the printing base material according to claim 22, or the barrier base material according to any one of claims 23 to 25; and
at least one heat-sealing layer.

27. The laminate according to claim 26, wherein the heat-sealing layer contains a polyolefin as a main component thereof, and a percentage of the polyolefins in the entire laminate is 80% by mass or more.

28. The laminate according to claim 26 or 27, wherein:
the laminate includes at least:

a first heat-sealing layer;
the stretched base material, the printing base material, or the barrier base material; and
a second heat-sealing layer

in this order.

29. A packaging container comprising the laminate according to any one of claims 26 to 28.

30. The packaging container according to claim 29, wherein the packaging container is a packaging bag.

**31.** A tube container body comprising a head and a trunk, wherein:
the head includes a shoulder connected to one end of the trunk and an outlet connected to the shoulder, and the trunk is composed of the laminate according to claim 28.

**32.** A tube container comprising:

the tube container body according to claim 31; and
a cap.

Fig. 1A

Fig. 1B

Fig. 2A

Fig. 2B

Fig. 2c

Fig. 2D

Fig. 2E

Fig. 3A

Fig. 3B

Fig. 3C

Fig. 3D

Fig. 3E

Fig. 4A

...

Fig. 4B

Fig. 5A

Fig. 5B

Fig. 6A

Fig. 6B

Fig. 7

Fig. 8

Fig. 9

Fig. 10

Fig. 11

## INTERNATIONAL SEARCH REPORT

| International application No. |
|---|
| **PCT/JP2023/035760** |

| | |
|---|---|
| **A. CLASSIFICATION OF SUBJECT MATTER** | |

***B32B 27/32***(2006.01)i; ***B32B 27/00***(2006.01)i; ***B65D 35/10***(2006.01)i; ***B65D 65/40***(2006.01)i; ***C08J 5/18***(2006.01)i
FI:   B32B27/32 D; B32B27/00 H; B32B27/32 E; B32B27/32 Z; B32B27/32 101; B65D35/10 A; B65D65/40 D; C08J5/18 CES

According to International Patent Classification (IPC) or to both national classification and IPC

| **B. FIELDS SEARCHED** |
|---|

Minimum documentation searched (classification system followed by classification symbols)

B32B27/32; B32B27/00; B65D35/10; B65D65/40; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C. DOCUMENTS CONSIDERED TO BE RELEVANT** | | |
|---|---|---|

| Category* | Citation of document, with indication, where appropriate, of the relevant passages | Relevant to claim No. |
|---|---|---|
| X | JP 2022-59380 A (KAO CORP.) 13 April 2022 (2022-04-13) paragraphs [0025]-[0028], [0050], [0052], [0072], fig. 3, 6 | 1-2, 9, 12, 15-17, 20-25 |
| Y | | 13 |
| A | | 3-8, 10-11, 14, 18-19, 26-32 |
| X | WO 2021/200816 A1 (DAI NIPPON PRINTING CO., LTD.) 07 October 2021 (2021-10-07) paragraphs [0053], [0110]-[0111], [0115], [0122]-[0124], [0129], [0132], [0192], [0212]-[0215], fig. 4, 7 | 9-23, 26-32 |
| Y | | 13 |
| A | | 1-8, 24-25 |
| Y | JP 2020-11415 A (DAI NIPPON PRINTING CO., LTD.) 23 January 2020 (2020-01-23) claims, paragraphs [0013], [0019], [0024] | 6-8, 13-14, 20-22 |
| A | | 1-5, 9-12, 15-19, 23-32 |

☑ Further documents are listed in the continuation of Box C.        ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **17 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 725 694 A1**

## INTERNATIONAL SEARCH REPORT

International application No.

**PCT/JP2023/035760**

### C. DOCUMENTS CONSIDERED TO BE RELEVANT

| Category* | Citation of document, with indication, where appropriate, of the relevant passages | Relevant to claim No. |
|---|---|---|
| Y | JP 2020-19212 A (DAI NIPPON PRINTING CO., LTD.) 06 February 2020 (2020-02-06) paragraph [0070] | 6-8, 14, 20-22 |
| Y | JP 2003-128082 A (DAI NIPPON PRINTING CO., LTD.) 08 May 2003 (2003-05-08) paragraph [0018] | 6-8, 14, 20-22 |
| Y | JP 2011-122093 A (KAO CORPORATION) 23 June 2011 (2011-06-23) paragraph [0054] | 6-8, 14, 20-22 |
| X | JP 8-505781 A (NATURIN GMBH & CO.) 25 June 1996 (1996-06-25) claims, example 1 | 1-2, 12-13, 16-17, 20-21 |

Form PCT/ISA/210 (second sheet) (January 2015)

122

# EP 4 725 694 A1

## INTERNATIONAL SEARCH REPORT

International application No.

**PCT/JP2023/035760**

**Box No. III       Observations where unity of invention is lacking (Continuation of item 3 of first sheet)**

This International Searching Authority found multiple inventions in this international application, as follows:

(Invention 1) Claims 1-2, 12-13, 15, and 20-32

Document 1 describes a highly recyclable container sheet in which a first coating-type gas barrier layer 13 is coated on both sides of a first substrate layer 11, and claim 1 lack novelty in light of document 1, and thus do not have a special technical feature. However, claim 2 dependent on claim 1 has a special technical feature of an "oriented base material comprises, as a polyolefin intermediate layer, one or two or more of polyethylene intermediate layers containing polyethylene as a main component, wherein the polyethylene in at least one layer of the polyethylene intermediate layers comprises at least one kind of polyethylene selected from high-density polyethylene and medium-density polyethylene, or has a density of more than 0.930 g/cm3 and 0.960 g/cm3 or less," and "an oriented base material comprising at least a first surface resin layer containing a gas barrier resin as a main component, a polyolefin intermediate layer containing a polyolefin as a main component, and a second surface resin layer containing a gas barrier resin as a main component, in this order." Thus, claims 1-2 are classified as invention 1.

Also, claims 12-13, 15, and 20-32 are dependent on claim 1 and are inventively associated with claim 1, and are thus classified as invention 1.

(Invention 2) Claims 3-5 and 14

It cannot be said that claims 3-5 and 14 have a special technical feature identical or corresponding to that of claim 2 classified as invention 1. In addition, claims 3-5 and 14 are not dependent on claim 1. Furthermore, claims 3-5 and 14 are not substantially identical to or similarly closely related to any of the claims classified as invention 1.

Thus, claims 3-5 and 14 cannot be classified as invention 1.

In addition, claims 3-5 and 14 have a special technical feature of "comprising at least a first surface resin layer containing polyolefin and adhesive resin, a polyolefin intermediate layer containing polyolefin as a main component, and a second surface resin layer containing gas barrier resin as a main component, in this order," and thus are classified as invention 2.

(Invention 3) Claims 6-8 and 14

It cannot be said that claims 6-8 and 14 have a special technical feature identical or corresponding to that of claim 2 classified as invention 1. In addition, claims 6-8 and 14 are not dependent on claim 1. Furthermore, claims 6-8 and 14 are not substantially identical to or similarly closely related to any of the claims classified as invention 1.

Thus, claims 6-8 and 14 cannot be classified as invention 1.

In addition, claims 6-8 and 14 have a special technical feature of "comprising at least a first surface resin layer containing polyolefin and adhesive resin, a polyolefin intermediate layer containing polyolefin as a main component, and a second surface resin layer containing polyolefin and adhesive resin, in this order," and thus are classified as invention 3.

(Invention 4) Claims 9-11 and 14

It cannot be said that claims 9-11 and 14 have a special technical feature identical or corresponding to that of claim 2 classified as invention 1. In addition, claims 9-11 and 14 are not dependent on claim 1. Furthermore, claims 9-11 and 14 are not substantially identical to or similarly closely related to any of the claims classified as invention 1.

Thus, claims 9-11 and 14 cannot be classified as invention 1.

In addition, claims 9-11 and 14 have a special technical feature of "comprising at least a first surface resin layer containing polyolefin as a main component, a polyolefin intermediate layer containing polyolefin as a main component, and a second surface resin layer containing a gas barrier resin as a main component, or containing polyolefin and an adhesive resin, in this order," and thus are classified as invention 4.

(Invention 5) Claims 16-19

It cannot be said that claims 16-19 have a special technical feature identical or corresponding to that of claim 2 classified as invention 1. In addition, claims 11-12 are not dependent on claim 1. Furthermore, claims 16-19 are not substantially identical to or similarly closely related to any of the claims classified as invention 1.

Thus, claims 16-19 cannot be classified as invention 1.

In addition, claims 16-19 have a special technical feature of "a biaxially oriented polyethylene film having a polyethylene layer containing at least one type of polyethylene selected from high-density polyethylene and medium-density polyethylene, or a biaxially oriented polyethylene film having a polyethylene layer containing polyethylene

Form PCT/ISA/210 (continuation of first sheet) (January 2015)

123

## INTERNATIONAL SEARCH REPORT

| International application No. |
| --- |
| **PCT/JP2023/035760** |

**Box No. III      Observations where unity of invention is lacking (Continuation of item 3 of first sheet)**

as a main component, wherein the polyethylene included in the polyethylene layer has a density of more than 0.930 g/cm3 and 0.960 g/cm3 or less," and thus are classified as invention 5.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☐ No protest accompanied the payment of additional search fees.

Form PCT/ISA/210 (continuation of first sheet) (January 2015)

EP 4 725 694 A1

| INTERNATIONAL SEARCH REPORT | International application No. |
| Information on patent family members | |
| | PCT/JP2023/035760 |

| Patent document cited in search report | | | Publication date (day/month/year) | Patent family member(s) | Publication date (day/month/year) |
|---|---|---|---|---|---|
| JP | 2022-59380 | A | 13 April 2022 | (Family: none) | |
| WO | 2021/200816 | A1 | 07 October 2021 | US 2023/0166894 A1 paragraphs [0143]-[0145], [0149], [0156]-[0159], [0261]-[0215], fig. 4, 7 | |
| JP | 2020-11415 | A | 23 January 2020 | (Family: none) | |
| JP | 2020-19212 | A | 06 February 2020 | (Family: none) | |
| JP | 2003-128082 | A | 08 May 2003 | (Family: none) | |
| JP | 2011-122093 | A | 23 June 2011 | (Family: none) | |
| JP | 8-505781 | A | 25 June 1996 | US 5612104 A claims, example 1 | |

Form PCT/ISA/210 (patent family annex) (January 2015)

**REFERENCES CITED IN THE DESCRIPTION**

**Patent documents cited in the description**

- US 2023094316 A
- US 2023094328 A
- US 2023094321 A
- US 2023094339 A
- US 2023125863 A
- US 2023125853 A

- US 2023125858 A
- US 2023141778 A
- US 2023141788 A
- US 2023141803 A
- US 2023141812 A
- JP 2020055156 A